# EUROPEAN PATENT APPLICATION

(11) **EP 4 596 212 A1**
(43) Date of publication of application: **06.08.2025**
(21) Application number: 23872631.9
(22) Date of filing: 29.09.2023
(51) Int. Cl.: B29C 45/16, B32B 9/00, B32B 9/04, B32B 27/00, B32B 27/28, B32B 27/32, C08L 23/04, C08L 23/26, B32B 15/08, B65D 35/10, B32B 7/027, B32B 7/12, B65D 65/40

(54) **STRETCHED BASE MATERIAL, PRINTED BASE MATERIAL, BARRIER BASE MATERIAL, LAMINATE, AND PACKAGING CONTAINER**

(30) Priority: 30.09.2022 JP 2022158821; 30.09.2022 JP 2022158823; 30.09.2022 JP 2022158832; 02.05.2023 JP 2023076221; 02.05.2023 JP 2023076226; 02.05.2023 JP 2023076239; 02.05.2023 JP 2023076266; 01.08.2023 JP 2023125688; 01.08.2023 JP 2023125707; 01.08.2023 JP 2023125738; 01.08.2023 JP 2023125834
(71) Applicant: Dai Nippon Printing Co., Ltd., Tokyo 162-8001 (JP)
(72) Inventor: YAMADA, Kenichi, Tokyo 162-8001 (JP); UEKI, Takayuki, Tokyo 162-8001 (JP)
(74) Representative: Müller-Boré & Partner Patentanwälte PartG mbB
(86) International application number: PCT/JP2023/035758
(87) International publication number: WO 2024/071412

(57) **Abstract**

A stretched substrate includes at least a polyethylene layer and a barrier resin layer. The polyethylene layer contains polyethylene as its main component, and the barrier resin layer contains a gas barrier resin as its main component.

## Description

### Cross-Reference to Related Applications

The present application claims priority based on Japanese Patent Application 2022-158821, Japanese Patent Application 2022-158823, and Japanese Patent Application 2022-158832, each filed September 30, 2022, Japanese Patent Application 2023-076221, Japanese Patent Application 2023-076226, Japanese Patent Application 2023-076239, and Japanese Patent Application 2023-076266, each filed May 2, 2023, and Japanese Patent Application 2023-125688, Japanese Patent Application 2023-125707, Japanese Patent Application 2023-125738, and Japanese Patent Application 2023-125834, each filed August 1, 2023 (all are Japanese patent applications), the disclosure of which is hereby incorporated as part of the present description by reference in their entirety.

### Technical Field

The present disclosure relates to a stretched substrate, a printed substrate, a barrier substrate, a laminate, and a packaging container.

### Background Art

To keep liquids, powders, and other contents contained, packaging containers are used. Packaging containers are produced using laminates that include a substrate and a heat-sealing layer (see, for example, PTL 1). For example, polyolefin films are widely used as heat-sealing layers because they have flexibility and transparency as well as being superior in heat sealability. Biaxially stretched polyester films, furthermore, are widely used as substrates because they are superior in strength and heat resistance.

In recent years, there is a need to recycle packaging containers from the perspective of reducing environmental impacts. When considered from the viewpoint of recyclability, it is preferred that the substrate and the heat-sealing layer be composed of the same kind of resin material (monomaterialization). For example, PTL 1 proposes forming each of the substrate and the heat-sealing layer from polyethylene.

### Citation List

### Patent Literature

PTL 1: Japanese Unexamined Patent Application Publication No. 2020-55156

### Summary of Invention

### Technical Problem

The inventors investigated the production of a packaging container using, as a packaging material, a laminate that includes a stretched polyethylene film as a substrate. Such packaging containers, however, tended to exhibit insufficient gas barrier properties.

A problem to be addressed by the present disclosure is to provide a stretched substrate useful as a substrate in packaging materials for producing packaging containers superior in recyclability and gas barrier properties.

### Solution to Problem

A barrier substrate according to the present disclosure includes, at least, at least one polyethylene layer and at least one barrier resin layer, wherein the polyethylene layer contains polyethylene as a main component thereof, and the barrier resin layer contains at least one gas barrier resin as a main component thereof.

### Advantageous Effects of Invention

According to the present disclosure, there can be provided a stretched substrate useful as a substrate in packaging materials for producing packaging containers superior in recyclability and gas barrier properties.

### Brief Description of Drawings

[Fig. 1A] Fig. 1A is a schematic cross-sectional view illustrating an embodiment of a barrier substrate.
[Fig. 1B] Fig. 1B is a schematic cross-sectional view illustrating an embodiment of a barrier substrate.
[Fig. 1C] Fig. 1C is a schematic cross-sectional view illustrating an embodiment of a barrier substrate.
[Fig. 2A] Fig. 2A is a schematic cross-sectional view illustrating an embodiment of a barrier substrate.
[Fig. 2B] Fig. 2B is a schematic cross-sectional view illustrating an embodiment of a barrier substrate.
[Fig. 2C] Fig. 2C is a schematic cross-sectional view illustrating an embodiment of a barrier substrate.
[Fig. 2D] Fig. 2D is a schematic cross-sectional view illustrating an embodiment of a barrier substrate.
[Fig. 2E] Fig. 2E is a schematic cross-sectional view illustrating an embodiment of a barrier substrate.
[Fig. 2F] Fig. 2F is a schematic cross-sectional view illustrating an embodiment of a barrier substrate.
[Fig. 3A] Fig. 3A is a schematic cross-sectional view illustrating an embodiment of a barrier substrate.
[Fig. 3B] Fig. 3B is a schematic cross-sectional view illustrating an embodiment of a barrier substrate.
[Fig. 3C] Fig. 3C is a schematic cross-sectional view illustrating an embodiment of a barrier substrate.
[Fig. 3D] Fig. 3D is a schematic cross-sectional view illustrating an embodiment of a barrier substrate.
[Fig. 3E] Fig. 3E is a schematic cross-sectional view illustrating an embodiment of a barrier substrate.
[Fig. 3F] Fig. 3F is a schematic cross-sectional view illustrating an embodiment of a barrier substrate.
[Fig. 3G] Fig. 3G is a schematic cross-sectional view illustrating an embodiment of a barrier substrate.
[Fig. 3H] Fig. 3H is a schematic cross-sectional view illustrating an embodiment of a barrier substrate.
[Fig. 3I] Fig. 3I is a schematic cross-sectional view illustrating an embodiment of a barrier substrate.
[Fig. 3J] Fig. 3J is a schematic cross-sectional view illustrating an embodiment of a barrier substrate.
[Fig. 4A] Fig. 4A is a schematic cross-sectional view illustrating an embodiment of a laminate.
[Fig. 4B] Fig. 4B is a schematic cross-sectional view illustrating an embodiment of a laminate.
[Fig. 4C] Fig. 4C is a schematic cross-sectional view illustrating an embodiment of a laminate.
[Fig. 4D] Fig. 4D is a schematic cross-sectional view illustrating an embodiment of a laminate.
[Fig. 5A] Fig. 5A is a schematic cross-sectional view illustrating an embodiment of a laminate.
[Fig. 5B] Fig. 5B is a schematic cross-sectional view illustrating an embodiment of a laminate.
[Fig. 5C] Fig. 5C is a schematic cross-sectional view illustrating an embodiment of a laminate.
[Fig. 6A] Fig. 6A is a schematic cross-sectional view illustrating an embodiment of a laminate.
[Fig. 6B] Fig. 6B is a schematic cross-sectional view illustrating an embodiment of a laminate.
[Fig. 6C] Fig. 6C is a schematic cross-sectional view illustrating an embodiment of a laminate.
[Fig. 7] Fig. 7 is a perspective view illustrating an embodiment of a tube container that includes a tube container body and a cap, the tube container body including a laminate.
[Fig. 8] Fig. 8 is an A-A cross-sectional view of Fig. 7.
[Fig. 9A] Fig. 9A is a schematic cross-sectional view illustrating an embodiment of a stretched substrate.
[Fig. 9B] Fig. 9B is a schematic cross-sectional view illustrating an embodiment of a stretched substrate.
[Fig. 9C] Fig. 9C is a schematic cross-sectional view illustrating an embodiment of a stretched substrate.
[Fig. 9D] Fig. 9D is a schematic cross-sectional view illustrating an embodiment of a stretched substrate.

### Description of Embodiments

Embodiments of the present disclosure will now be described in detail. The present disclosure can be implemented in numerous different forms and is not to be construed as limited to the descriptions in the embodiments illustrated below. The drawings may be presented schematically, for example in terms of the width, thickness, and shape of layers, compared to the embodiments to make the descriptions clearer, but they are merely examples and do not limit the interpretation of the present disclosure. Herein and in each drawing, elements similar to those already described in relation to a previously mentioned drawing may be assigned the same reference sign, and their detailed descriptions may be omitted as appropriate.

When multiple candidate upper limits and multiple candidate lower limits are listed for a certain parameter herein, the numerical range of that parameter may be constituted by pairing any one candidate upper limit with any one candidate lower limit. Examples of such parameters include physical characteristics, the percentages of components, and the thickness of layers. As an example, the following statement is described: "Parameter B is preferably A1 or more, more preferably A2 or more, even more preferably A3 or more. Parameter B is preferably A4 or less, more preferably A5 or less, even more preferably A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

In each category of components that appear in the following description herein (e.g., polyethylene, polypropylene, and other polyolefins, α-olefins, gas barrier resins and other resin materials, adhesive resins, and additives), one component in that category may be used, or two or more may be used.

As used herein, the "main component" in a given layer refers to the component whose percentage in that layer is more than 50% by mass, preferably 60% by mass or more, more preferably 70% by mass or more, even more preferably 80% by mass or more.

### [Stretched Base Materials]

The present disclosure relates to stretched substrates in various forms. When a matter common to the stretched substrates in the individual forms is described or when the stretched substrates in the individual forms are not specifically distinguished, the term "stretched substrate" may simply be used.

A stretched substrate according to a first aspect of the present disclosure includes at least a polyethylene layer and a barrier resin layer. The polyethylene layer contains polyethylene as its main component. The barrier resin layer contains a gas barrier resin as its main component.

The stretched substrate according to the first aspect includes, in an embodiment, a first barrier resin layer, the polyethylene layer, and a second barrier resin layer in this order. The stretched substrate according to the first aspect may include two or more polyethylene layers. The polyethylene layer contains polyethylene as its main component. The first barrier resin layer and the second barrier resin layer each independently contain a gas barrier resin as their main component. In the following description, the first barrier resin layer and the second barrier resin layer are also referred to simply as "the barrier resin layers" when a matter common to both is described.

The stretched substrate according to the first aspect may further include an adhesive resin layer between the polyethylene layer and the barrier resin layer. The stretched substrate according to the first aspect may include two or more barrier resin layers. The stretched substrate according to the first aspect may include two or more adhesive resin layers.

The stretched substrate according to the first aspect may further include a first adhesive resin layer between the first barrier resin layer and the polyethylene layer. The stretched substrate according to the first aspect may further include a second adhesive resin layer between the polyethylene layer and the second barrier resin layer. In the following description, the first adhesive resin layer and the second adhesive resin layer are also referred to simply as "the adhesive resin layers" when a matter common to both is described.

The stretched substrate according to the first aspect may include a first barrier resin layer, a first adhesive resin layer, the polyethylene layer, a second adhesive resin layer, and a second barrier resin layer in this order.

The stretched substrate according to the first aspect may include a first barrier resin layer, a first adhesive resin layer, a third-a polyethylene layer, a second-a polyethylene layer, a first-a polyethylene layer, a first-b polyethylene layer, a second-b polyethylene layer, a third-b polyethylene layer, a second adhesive resin layer, and a second barrier resin layer in this order.

The composition of the first-a, second-a, and third-a polyethylene layers may be identical to each other or may be different. The thickness of the first-a, second-a, and third-a polyethylene layers may be equal to each other or may be different. The composition of the first-b, second-b, and third-b polyethylene layers may be identical to each other or may be different. The thickness of the first-b, second-b, and third-b polyethylene layers may be equal to each other or may be different.

The composition of the first-a and first-b polyethylene layers may be identical to each other or may be different, but preferably is identical. The thickness of the first-a and first-b polyethylene layers may be equal to each other or may be different, but preferably is equal. The composition of the second-a and second-b polyethylene layers may be identical to each other or may be different, but preferably is identical. The thickness of the second-a and second-b polyethylene layers may be equal to each other or may be different, but preferably is equal. The composition of the third-a and third-b polyethylene layers may be identical to each other or may be different, but preferably is identical. The thickness of the third-a and third-b polyethylene layers may be equal to each other or may be different, but preferably is equal.

The stretched substrate according to the first aspect may include a first polyethylene layer, a second polyethylene layer, a third polyethylene layer, an adhesive resin layer, and the barrier resin layer in this order. The composition of the first to third polyethylene layers may be identical to each other or may be different. The thickness of the first to third polyethylene layers may be equal to each other or may be different.

The stretched substrate according to the first aspect may include a fourth polyethylene layer, a first adhesive resin layer, the barrier resin layer, a second adhesive resin layer, and a fifth polyethylene layer in this order. The composition of the fourth and fifth polyethylene layers may be identical to each other or may be different. The thickness of the fourth and fifth polyethylene layers may be equal to each other or may be different.

The composition of the first and second barrier resin layers may be identical to each other or may be different, but preferably is identical. The thickness of the first and second barrier resin layers may be equal to each other or may be different, but preferably is identical. The composition of the first and second adhesive resin layers may be identical to each other or may be different, but preferably is identical. The thickness of the first and second adhesive resin layers may be equal to each other or may be different, but preferably is equal.

A stretched substrate according to a second aspect of the present disclosure includes at least:
a first surface resin layer containing a gas barrier resin, such as a polyamide, as its main component;
a polyethylene layer containing polyethylene as its main component; and
a second surface resin layer containing a gas barrier resin, such as a polyamide, as its main component
in this order in the thickness direction.

Hereinafter, "include (layers) in this order in the thickness direction" will be simply written as "include (layers) in this order."

The stretched substrate according to the second aspect may further include a first adhesive resin layer between the first surface resin layer and the polyethylene layer. The stretched substrate according to the second aspect may further include a second adhesive resin layer between the polyethylene layer and the second surface resin layer. The stretched substrate according to the second aspect may include two or more polyethylene layers.

For the stretched substrate according to the second aspect, the first surface resin layer and the second surface resin layer are also referred to simply as "the surface resin layers" when a matter common to both is described or when the first surface resin layer and the second surface resin layer are not specifically distinguished. When a matter common to the first adhesive resin layer and the second adhesive resin layer is described or when the first adhesive resin layer and the second adhesive resin layer are not specifically distinguished, furthermore, the layers are also referred to simply as "the adhesive resin layers."

The stretched substrate according to the second aspect may include the first surface resin layer, a first adhesive resin layer, a third-a polyethylene layer, a second-a polyethylene layer, a first-a polyethylene layer, a first-b polyethylene layer, a second-b polyethylene layer, a third-b polyethylene layer, a second adhesive resin layer, and the second surface resin layer in this order.

The composition of the first-a, second-a, and third-a polyethylene layers may be identical to each other or may be different. The thickness of the first-a, second-a, and third-a polyethylene layers may be equal to each other or may be different. The composition of the first-b, second-b, and third-b polyethylene layers may be identical to each other or may be different. The thickness of the first-b, second-b, and third-b polyethylene layers may be equal to each other or may be different.

The composition of the first-a and first-b polyethylene layers may be identical to each other or may be different, but preferably is identical. The thickness of the first-a and first-b polyethylene layers may be equal to each other or may be different, but preferably is equal. The composition of the second-a and second-b polyethylene layers may be identical to each other or may be different, but preferably is identical. The thickness of the second-a and second-b polyethylene layers may be equal to each other or may be different, but preferably is equal. The composition of the third-a and third-b polyethylene layers may be identical to each other or may be different, but preferably is identical. The thickness of the third-a and third-b polyethylene layers may be equal to each other or may be different, but preferably is equal.

In the stretched substrate according to the second aspect, the composition of the first and second surface resin layers may be identical to each other or may be different, but preferably is identical. The thickness of the first and second surface resin layers may be equal to each other or may be different, but preferably is equal. The composition of the first and second adhesive resin layers may be identical to each other or may be different, but preferably is identical. The thickness of the first and second adhesive resin layers may be equal to each other or may be different, but preferably is equal.

A stretched substrate according to a third aspect of the present disclosure includes at least:
a first surface resin layer containing polyethylene and an adhesive resin;
a polyethylene layer containing polyethylene as its main component; and
a second surface resin layer containing a gas barrier resin as its main component
in this order in the thickness direction.

The stretched substrate according to the third aspect may further include an adhesive resin layer between the polyethylene layer and the second surface resin layer. The stretched substrate according to the third aspect may include the first surface resin layer, the polyethylene layer, an adhesive resin layer, and the second surface resin layer in this order.

The stretched substrate according to the third aspect may include two or more polyethylene layers.

The stretched substrate according to the third aspect may include the first surface resin layer, a first polyethylene layer, a second polyethylene layer, an adhesive resin layer, and the second surface resin layer in this order. The composition of the first and second polyethylene layers may be identical to each other or may be different. The thickness of the first and second polyethylene layers may be equal to each other or may be different.

A stretched substrate according to a fourth aspect of the present disclosure includes at least:
a first surface resin layer containing polyethylene and an adhesive resin;
a polyethylene layer containing polyethylene as its main component; and
a second surface resin layer containing polyethylene and an adhesive resin
in this order in the thickness direction.

The stretched substrate according to the fourth aspect may include two or more polyethylene layers.

The stretched substrate according to the fourth aspect may include the first surface resin layer, a first polyethylene layer, a second polyethylene layer, a third polyethylene layer, and the second surface resin layer in this order. The composition of the first to third polyethylene layers may be identical to each other or may be different. The thickness of the first to third polyethylene layers may be equal to each other or may be different.

The stretched substrate according to the fourth aspect may include the first surface resin layer, a fourth-a polyethylene layer, a third-a polyethylene layer, a second-a polyethylene layer, a first-a polyethylene layer, a first-b polyethylene layer, a second-b polyethylene layer, a third-b polyethylene layer, a fourth-b polyethylene layer, and the second surface resin layer in this order.

The composition of the first-a, second-a, third-a, and fourth-a polyethylene layers may be identical to each other or may be different. The thickness of the first-a, second-a, third-a, and fourth-a polyethylene layers may be equal to each other or may be different. The composition of the first-b, second-b, third-b, and fourth-b polyethylene layers may be identical to each other or may be different. The thickness of the first-b, second-b, third-b, and fourth-b polyethylene layers may be equal to each other or may be different.

The composition of the first-a and first-b polyethylene layers may be identical to each other or may be different, but preferably is identical. The thickness of the first-a and first-b polyethylene layers may be equal to each other or may be different, but preferably is equal. The composition of the second-a and second-b polyethylene layers may be identical to each other or may be different, but preferably is identical. The thickness of the second-a and second-b polyethylene layers may be equal to each other or may be different, but preferably is equal. The composition of the third-a and third-b polyethylene layers may be identical to each other or may be different, but preferably is identical. The thickness of the third-a and third-b polyethylene layers may be equal to each other or may be different, but preferably is equal. The composition of the fourth-a and fourth-b polyethylene layers may be identical to each other or may be different, but preferably is identical. The thickness of the fourth-a and fourth-b polyethylene layers may be equal to each other or may be different, but preferably is equal

In the fourth aspect, the composition of the first and second surface resin layers may be identical to each other or may be different, but preferably is identical. The thickness of the first and second surface resin layers may be equal to each other or may be different, but preferably is equal.

A stretched substrate according to a fifth aspect of the present disclosure includes at least:
a first surface resin layer containing polyethylene as its main component;
a polyethylene layer containing polyethylene as its main component; and
a second surface resin layer containing a gas barrier resin, such as a polyamide, as its main component or containing polyethylene and an adhesive resin
in this order in the thickness direction.

The stretched substrate according to the fifth aspect whose second surface resin layer contains a gas barrier resin, such as a polyamide, as its main component is also referred to as "the stretched substrate according to the fifth-A aspect." The stretched substrate according to the fifth aspect whose second surface resin layer contains polyethylene and an adhesive resin is also referred to as "the stretched substrate according to the fifth-B aspect."

The stretched substrate according to the fifth aspect may include two or more polyethylene layers.

The stretched substrate according to the fifth-A aspect may further include an adhesive resin layer between the polyethylene layer and the second surface resin layer. The stretched substrate according to the fifth-A aspect may include the first surface resin layer, the polyethylene layer, an adhesive resin layer, and the second surface resin layer in this order. The stretched substrate according to the fifth-A aspect may include the first surface resin layer, a first polyethylene layer, a second polyethylene layer, an adhesive resin layer, and the second surface resin layer in this order. The composition of the first and second polyethylene layers may be identical to each other or may be different. The thickness of the first and second polyethylene layers may be equal to each other or may be different.

The stretched substrate according to the fifth-B aspect may include the first surface resin layer, a first polyethylene layer, a second polyethylene layer, a third polyethylene layer, and the second surface resin layer in this order. The composition of the first to third polyethylene layers may be identical to each other or may be different. The thickness of the first to third polyethylene layers may be equal to each other or may be different.

In the stretched substrates according to the first to fifth aspects, the ratio of the thickness of the second barrier resin layer or second surface resin layer to the thickness of the first barrier resin layer or first surface resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched substrate and reduced occurrence of curling.

The stretched substrate has a multilayer structure, a structure including 2 or more layers. The number of layers in the stretched substrate is 2 or more, preferably 3 or more, preferably 14 or less, more preferably 12 or less, 9 or less, or 7 or less. For example, the number of layers is 2 or more and 14 or less, 3 or more and 14 or less, or 3 or more and 9 or less. Specifically, the number of layers in the stretched substrate may be 4, 6, 8, 10, 12, or 14 or may be 3, 5, 7, or 9. A stretched substrate having a multilayer structure is superior in, for example, the balance between gas barrier properties, strength, rigidity, heat resistance, transparency, and printing suitability.

The percentage of polyethylene in the stretched substrate is preferably more than 50% by mass, more preferably 55% by mass or more, even more preferably 60% by mass or more, still more preferably 70% by mass or more, especially preferably 80% by mass or more, particularly preferably 85% by mass or more or 90% by mass or more. A laminate (or packaging container) that includes such a stretched substrate is superior in, for example, recyclability.

A stretched substrate is a substrate that has undergone stretching treatment. Through this, the strength, rigidity, heat resistance, transparency, and printing suitability of the substrate, for example, can be improved. The stretching treatment may be uniaxial orientation or may be biaxial orientation. The stretch ratio when stretching is performed in the longitudinal direction (the flow direction of the substrate, or the MD direction) is preferably 2 or greater, more preferably 3 or greater, preferably 10 or less, more preferably 7 or less. For example, this stretch ratio is 2 or greater and 10 or less. The stretch ratio when stretching is performed in the transverse direction (the direction perpendicular to the MD direction, or the TD direction) is preferably 2 or greater, more preferably 3 or greater, preferably 10 or less, more preferably 7 or less. For example, this stretch ratio is 2 or greater and 10 or less. The stretched substrate is, for example, a uniaxially oriented substrate, specifically a substrate uniaxially oriented in the MD direction (an MDO substrate).

The thickness of the stretched substrate is preferably 5 µm or more, more preferably 10 µm or more, even more preferably 15 µm or more, and preferably is 200 µm or less, more preferably 100 µm or less, even more preferably 50 µm or less, particularly preferably 40 µm or less. For example, the thickness is 5 µm or more and 200 µm or less. A stretched substrate whose thickness is equal to or greater than the lower limits is superior in, for example, strength, rigidity, and heat resistance. A stretched substrate whose thickness is equal to or smaller than the upper limits is superior in, for example, workability. Herein, the thickness of the substrate and each layer is the average of thickness measurements at 10 locations based on an SEM image, which is obtained through a scanning electron microscopic (SEM) observation, of a vertical cross-section with respect to the surface of the substrate.

The stretched substrate can be produced by, for example, preparing a laminate film by shaping the materials constituting the individual layers into films and then stretching this laminate film. Examples of methods for film formation include inflation molding and T-die molding, with inflation molding being preferred. With inflation molding, stretching can be performed continuously after film formation.

The stretched substrate is, in an embodiment, a stretched coextruded resin film.

The stretched substrate is, in an embodiment, a resin film obtained by coextruding the materials constituting the polyethylene layer, the materials constituting the adhesive resin layer if the stretched substrate includes an adhesive resin layer, and the materials constituting the barrier resin layer or surface resin layers to form films, for example by coextrusion inflation molding, and then subjecting the resulting laminate film to stretching treatment.

The stretched substrate is, in an embodiment, a resin film obtained by coextruding the materials constituting the first barrier resin layer or first surface resin layer, the materials constituting the adhesive resin layer if the stretched substrate includes an adhesive resin layer, the materials constituting the polyethylene layer, and the materials constituting the second barrier resin layer or second surface resin layer to form films in this order in the thickness direction, for example by coextrusion inflation molding, and then subjecting the resulting laminate film to stretching treatment.

The stretched substrate is, in an embodiment, a resin film obtained by coextruding the materials constituting the barrier resin layer or surface resin layers, the materials constituting the adhesive resin layer if the stretched substrate includes an adhesive resin layer, and the materials constituting the polyethylene layer to form tubular films, for example by coextrusion inflation molding, such that the polyethylene layer will become the innermost layer, and subsequently heat- and pressure-bonding the opposite surfaces of the polyethylene layer, for example using rubber rollers. In the heat and pressure bonding, the temperature condition is, for example, 45°C or above and 100°C or below, preferably 50°C or above and 85°C or below, more preferably 55°C or above and 70°C or below, and the pressure condition is, for example, 0.1 MPa or more and 1.0 MPa or less. The temperature and pressure conditions, however, are not particularly limited. By manufacturing the stretched substrate using such a method, the defect rate can be dramatically reduced, and production efficiency can be improved.

The stretched substrate and the barrier substrate may have undergone surface treatment. Such a stretched substrate and a barrier substrate are superior in, for example, adhesion to other layers. Examples of methods for surface treatment include physical treatments and chemical treatments. Examples of physical treatments include corona treatment, ozonation, low-temperature plasma treatment using, for example, an oxygen gas and/or a nitrogen gas, and glow discharge treatment. Examples of chemical treatments include oxidation treatment using chemicals.

### <Polyethylene Layer>

The polyethylene layer contains polyethylene as its main component.

As used herein, polyethylene refers to a polymer in which the percentage of ethylene-derived constituent units in all repeating constituent units is more than 50 mol%. In this polymer, the percentage of ethylene-derived constituent units is preferably 70 mol% or more, more preferably 80 mol% or more, even more preferably 90 mol% or more, particularly preferably 95 mol% or more. This percentage is measured by NMR.

Herein, polyethylene may be a homopolymer of ethylene or may be a copolymer of ethylene and an ethylenically unsaturated monomer other than ethylene. Examples of ethylenically unsaturated monomers other than ethylene include α-olefins containing 3 or more and 20 or fewer carbons, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene, vinyl monomers, such as vinyl acetate and vinyl propionate, and (meth)acrylates, such as methyl (meth)acrylate and ethyl (meth)acrylate.

Herein, examples of types of polyethylene include high-density polyethylene, medium-density polyethylene, low-density polyethylene, linear low-density polyethylene, and ultra-low-density polyethylene, as well as ethylene-vinyl acetate copolymers and ethylene-(meth)acrylate copolymers. From the viewpoints of strength and heat resistance of the stretched substrate, high-density polyethylene and medium-density polyethylene are preferred. From the viewpoints of film formation and workability of the stretched substrate, linear low-density polyethylene and medium-density polyethylene are preferred.

Herein, the density values of types of polyethylene are as follows.

The density of high-density polyethylene preferably exceeds 0.945 g/cm³. The upper limit to the density of high-density polyethylene is, for example, 0.965 g/cm³. The density of medium-density polyethylene is preferably more than 0.930 g/cm³ and 0.945 g/cm³ or less. The density of low-density polyethylene is preferably more than 0.900 g/cm³ and 0.930 g/cm³ or less. The density of linear low-density polyethylene is preferably more than 0.900 g/cm³ and 0.930 g/cm³ or less. The density of ultra-low-density polyethylene is preferably 0.900 g/cm³ or less. The lower limit to the density of ultra-low-density polyethylene is, for example, 0.860 g/cm³. Herein, the density of polyethylene is measured according to method D (density gradient column method, 23°C) in JIS K7112: 1999.

Low-density polyethylene is a type of polyethylene obtained by, for example, polymerizing ethylene by high-pressure polymerization (high-pressure low-density polyethylene). Linear low-density polyethylene is a type of polyethylene obtained by polymerizing ethylene and a small amount of α-olefin by a polymerization process using a multi-site catalyst, such as a Ziegler-Natta catalyst, or a single-site catalyst, such as a metallocene catalyst.

Types of polyethylene with varying density or branching can be obtained by selecting the polymerization method as appropriate. For example, it is preferred to perform the polymerization through a single-step process or a multistep process, including two or more steps, by any of the gas-phase polymerization, slurry polymerization, solution polymerization, and high-pressure ion polymerization methods using a multi-site catalyst, such as a Ziegler-Natta catalyst, or a single-site catalyst, such as a metallocene catalyst.

Herein, polyethylene may be biomass-derived polyethylene (hereinafter also referred to as "biomass polyethylene"). That is, materials including biomass-derived ethylene may be used as raw materials for obtaining polyethylene instead of materials including ethylene derived from a fossil fuel. Biomass polyethylene is a carbon-neutral material; with biomass polyethylene, therefore, the environmental impacts of the laminate or packaging container can be reduced. Biomass polyethylene can be manufactured using, for example, the methods described in Japanese Unexamined Patent Application Publication No. 2013-177531. Commercially available biomass polyethylene may also be used.

Polyethylene may be mechanically recycled or chemically recycled polyethylene (hereinafter also referred to as "recycled polyethylene"). Through this, the environmental impacts of a laminate or packaging container can be reduced. Mechanical recycling is, in general, a method in which collected polyethylene films, for example, are crushed, the resulting fragments are washed with alkalis for the removal of stains and foreign matters on the surface of the films, and then the fragments are dried for a certain period of time at high temperatures under reduced pressure for decontamination through the diffusion of contaminants residing inside the films, through which stains on the films are removed, and the films are returned to polyethylene. Chemical recycling is, in general, a method in which collected polyethylene films, for example, are decomposed to the monomer level, and the monomers are polymerized again to give polyethylene.

The foregoing description of polyethylene can also be applied to other portions of the present description.

The melt flow rate (MFR) of the polyethylene contained in the polyethylene layer is preferably 0.1 g/10 minutes or more, more preferably 0.2 g/10 minutes or more, even more preferably 0.3 g/10 minutes or more, particularly preferably 0.5 g/10 minutes or more, and preferably is 30 g/10 minutes or less, more preferably 20 g/10 minutes or less, even more preferably 10 g/10 minutes or less, particularly preferably 5 g/10 minutes or less, for film formation and workability reasons. For example, the melt flow rate is 0.1 g/10 minutes or more and 30 g/10 minutes or less. Herein, the MFR of polyethylene is measured using method A under the conditions of a temperature of 190°C and a load of 2.16 kg according to JIS K7210-1: 2014.

The melting point (Tm) of the polyethylene contained in the polyethylene layer is preferably 100°C or above, more preferably 105°C or above, even more preferably 110°C or above, particularly preferably 120°C or above for heat resistance reasons, and preferably is 140°C or below. For example, the melting point is 100°C or above and 140°C or below. Herein, the Tms of materials are melt peak temperatures obtained by differential scanning calorimetry (DSC) according to JIS K7121: 2012 (using a test specimen after conditioning as per 3. (2) (with the cooling rate being 10°C/minute)).

The percentage of polyethylene in the polyethylene layer is preferably more than 50% by mass, 60% by mass or more, or 70% by mass or more, more preferably 80% by mass or more, even more preferably 85% by mass or more, still more preferably 90% by mass or more, particularly preferably 95% by mass or more.

The polyethylene layer may contain resin materials other than polyethylene. Examples of such resin materials include polyolefins other than polyethylene, such as polypropylene, polyesters, polyamides, (meth)acrylic resins, vinyl resins, cellulose resins, and ionomer resins.

The polyethylene layer may contain additives. Examples of additives include crosslinking agents, antioxidants, ultraviolet absorbers, photostabilizers, anti-blocking agents, slipping agents, filler agents, reinforcing agents, antistatic agents, compatibilizers, pigments, and reforming resins.

The polyethylene layer may further contain a compatibilizer, which will be described later. With the inclusion of a compatibilizer in the polyethylene layer, the mixing of the gas barrier resin and the polyethylene can be improved when the stretched substrate and the barrier substrate are recycled by heating and melting them. Through this, the deterioration of the physical characteristics of the polyethylene after recycling can be effectively reduced, and, furthermore, the decrease in transparency of the polyethylene can be effectively reduced. In the case when the polyethylene layer contains a compatibilizer, the percentage of the compatibilizer in the polyethylene layer is preferably 1% by mass or more, more preferably 3% by mass or more, even more preferably 5% by mass or more, and preferably is 25% by mass or less, more preferably 20% by mass or less, even more preferably 15% by mass or less. For example, the percentage is 1% by mass or more and 25% by mass or less. When the stretched substrate includes two or more polyethylene layers, at least one polyethylene layer may contain a compatibilizer. When the stretched substrate includes two or more polyethylene layers, the basis for the above percentage of a compatibilizer is the total mass of all polyethylene layers.

In the case when the polyethylene layer contains a compatibilizer, the amount of the compatibilizer in the polyethylene layer is preferably 10 parts by mass or more and 200 parts by mass or less, more preferably 25 parts by mass or more and 100 parts by mass or less, per 100 parts by mass as the amount of the gas barrier resin, such as a polyamide, in the stretched substrate.

In the stretched substrates according to the third aspect and the fifth-A aspect, the polyethylene layer may further contain a compatibilizer. In the case when the polyethylene layer in the stretched substrates according to the third aspect and the fifth-A aspect contains a compatibilizer, the amount of the compatibilizer in the polyethylene layer is preferably 25 parts by mass or more and 200 parts by mass or less per 100 parts by mass as the amount of the gas barrier resin in the stretched substrate. For example, when the gas barrier resin is an ethylene-vinyl alcohol copolymer, the amount of the compatibilizer in the polyethylene layer is preferably 100 parts by mass or more and 200 parts by mass or less per 100 parts by mass as the amount of the ethylene-vinyl alcohol copolymer in the stretched substrate. For example, when the gas barrier resin is a polyamide, the amount of the compatibilizer in the polyethylene layer is preferably 25 parts by mass or more and 100 parts by mass or less per 100 parts by mass as the amount of the polyamide in the stretched substrate.

The thickness of the polyethylene layer is preferably 3 µm or more, more preferably 8 µm or more, even more preferably 13 µm or more, and preferably is 180 µm or less, more preferably 80 µm or less, even more preferably 40 µm or less, particularly preferably 30 µm or less. For example, the thickness is 3 µm or more and 180 µm or less. A stretched substrate including a polyethylene layer whose thickness is equal to or greater than the lower limits is superior in, for example, strength, rigidity, heat resistance, and recyclability. A stretched substrate including a polyethylene layer whose thickness is equal to or smaller than the upper limits is superior in, for example, workability. When the stretched substrate includes two or more polyethylene layers, the above "thickness" refers to the sum of the thickness of each polyethylene layer.

In the stretched substrate according to the second aspect, the thickness of the polyethylene layer is preferably 45% or more, more preferably 50% or more, even more preferably 55% or more, and preferably is 80% or less, more preferably 75% or less, even more preferably 70% or less, in relation to the thickness of the stretched substrate. For example, the thickness is 45% or more and 80% or less. When the stretched substrate includes two or more polyethylene layers, the above "thickness" refers to the sum of the thickness of each polyethylene layer.

In the stretched substrate according to the third aspect, the thickness of the polyethylene layer is preferably 40% or more, more preferably 50% or more, even more preferably 60% or more, and preferably is 95% or less, more preferably 90% or less, even more preferably 85% or less, in relation to the thickness of the stretched substrate. For example, the thickness is 40% or more and 95% or less. When the stretched substrate includes two or more polyethylene layers, the above "thickness" refers to the sum of the thickness of each polyethylene layer.

In the stretched substrates according to the fourth aspect and the fifth aspect, the thickness of the polyethylene layer is preferably 40% or more, more preferably 50% or more, even more preferably 60% or more, and preferably is 98% or less, more preferably 94% or less, even more preferably 90% or less, in relation to the thickness of the stretched substrate. For example, the thickness is 40% or more and 98% or less. When the stretched substrate includes two or more polyethylene layers, the above "thickness" refers to the sum of the thickness of each polyethylene layer.

The stretched substrate may include one polyethylene layer or may include two or more.

In a stretched substrate including two or more polyethylene layers, the density of each polyethylene layer may be equal or may be different. For example, the stretched substrate may have a gradient in the density of each polyethylene layer (density gradient). A stretched substrate having a density gradient between each polyethylene layer is superior in strength, rigidity, heat resistance, and the stretchability of the substrate that has yet to be stretched.

In a stretched substrate having a density gradient between each polyethylene layer, the absolute difference in density between given adjacent polyethylene layers is preferably small. The absolute difference in density is, for example, 0.050 g/cm³ or less, preferably 0.040 g/cm³ or less, more preferably 0.030 g/cm³ or less, even more preferably 0.020 g/cm³ or less. With such a stretched substrate, the occurrence of delamination at the interfaces between each polyethylene layer, for example, can be effectively reduced. The density of the polyethylene layers is measured according to method D (density gradient column method, 23°C) in JIS K7112: 1999.

The stretched substrate according to the first aspect includes, in an embodiment, a first barrier resin layer, the polyethylene layer, and a second barrier resin layer in this order, and may include a first barrier resin layer, a first adhesive resin layer, the polyethylene layer, a second adhesive resin layer, and a second barrier resin layer in this order. Such a stretched substrate is superior in, for example, heat resistance, and, with such a stretched substrate, the occurrence of curling can be reduced. The barrier resin layers contain, for example, an ethylene-vinyl alcohol copolymer as their main component.

The stretched substrate according to the first aspect may include:
a first barrier resin layer;
a first adhesive resin layer;
a first-a polyethylene layer;
a first-b polyethylene layer;
a second adhesive resin layer; and
a second barrier resin layer
in this order. With such a stretched substrate, the occurrence of curling, for example, can be reduced. The barrier resin layers contain, for example, an ethylene-vinyl alcohol copolymer as their main component.

The stretched substrate according to the first aspect may include:
a first barrier resin layer;
a first adhesive resin layer;
a third-a polyethylene layer;
a second-a polyethylene layer;
a first-a polyethylene layer;
a first-b polyethylene layer;
a second-b polyethylene layer;
a third-b polyethylene layer;
a second adhesive resin layer; and
a second barrier resin layer
in this order. With such a stretched substrate, the occurrence of curling, for example, can be reduced. The barrier resin layers contain, for example, an ethylene-vinyl alcohol copolymer as their main component.

The stretched substrate according to the second aspect may include a first surface resin layer, a first adhesive resin layer, the polyethylene layer, a second adhesive resin layer, and a second surface resin layer in this order. Such a stretched substrate is superior in, for example, heat resistance, and, with such a stretched substrate, the occurrence of curling can be reduced.

The stretched substrate according to the second aspect may include:
the first surface resin layer;
a first adhesive resin layer;
a first-a polyethylene layer;
a first-b polyethylene layer;
a second adhesive resin layer; and
the second surface resin layer
in this order. With such a stretched substrate, the occurrence of curling, for example, can be reduced.

The stretched substrate according to the second aspect may include:
the first surface resin layer;
a first adhesive resin layer;
a third-a polyethylene layer;
a second-a polyethylene layer;
a first-a polyethylene layer;
a first-b polyethylene layer;
a second-b polyethylene layer;
a third-b polyethylene layer;
a second adhesive resin layer; and
the second surface resin layer
in this order. With such a stretched substrate, the occurrence of curling, for example, can be reduced.

The stretched substrate according to the fourth aspect may include:
the first surface resin layer;
a first-a polyethylene layer;
a first-b polyethylene layer;
the second surface resin layer;
in this order. With such a stretched substrate, the occurrence of curling, for example, can be reduced.

The stretched substrate according to the fourth aspect may include:
the first surface resin layer;
a fourth-a polyethylene layer;
a third-a polyethylene layer;
a second-a polyethylene layer;
a first-a polyethylene layer;
a first-b polyethylene layer;
a second-b polyethylene layer;
a third-b polyethylene layer;
a fourth-b polyethylene layer; and
the second surface resin layer
in this order. With such a stretched substrate, the occurrence of curling, for example, can be reduced.

The first-a and first-b polyethylene layers each independently contain polyethylene, such as a polyethylene plastomer, as their main component. The second-a and second-b polyethylene layers each independently contain polyethylene, such as linear low-density polyethylene, as their main component. The third-a and third-b polyethylene layers each independently contain polyethylene, such as linear low-density polyethylene, as their main component. The fourth-a and fourth-b polyethylene layers each independently contain polyethylene, such as linear low-density polyethylene, as their main component. Such a stretched substrate is superior in, for example, interlayer strength between each polyethylene layer, with which the occurrence of interlayer delamination can be effectively reduced, and is superior in workability. The first and second barrier resin layers each independently contain, for example, an ethylene-vinyl alcohol copolymer as their main component.

Each of the first-a and first-b polyethylene layers is independently a layer that contains, for example, a polyethylene plastomer as its main component. Plastomer is a term relative to elastomer (a polymer having the property of deforming in response to an external force when the external force is applied, and returning to its original shape in a short time when the external force is removed); a plastomer is a polymer that does not exhibit elastic deformation like that of an elastomer and readily undergoes plastic deformation.

A polyethylene plastomer is a type of polyethylene obtained by, for example, copolymerizing ethylene and an α-olefin using a single-site catalyst, such as a metallocene catalyst. For use as the α-olefin, α-olefins containing four or more and eight or fewer carbons, such as 1-butene, 1-hexene, 1-octene, and 4-methyl-1-pentene, for example, are preferred. Specific examples of polyethylene plastomers include an ethylene-1-butene copolymer, an ethylene-1-hexene copolymer, and an ethylene-1-octene copolymer.

The density of the polyethylene plastomer is preferably 0.920 g/cm³ or less, more preferably 0.915 g/cm³ or less, even more preferably 0.910 g/cm³ or less, for the ease of fusion between the innermost layers during the production of the stretched substrate. The density of the polyethylene plastomer may be 0.850 g/cm³ or more, may be 0.855 g/cm³ or more, or may be 0.860 g/cm³ or more. The density of the polyethylene plastomer is, for example, 0.850 g/cm³ or more and 0.920 g/cm³ or less.

The melting point (Tm) of the polyethylene plastomer is preferably 115°C or below, more preferably 110°C or below, even more preferably 105°C or below, particularly preferably 100°C or below, for the ease of fusion between the innermost layers during the production of the stretched substrate, and may be 90°C or below, may be 80°C or below, or may be 70°C or below. The Tm of the polyethylene plastomer may be 40°C or above, may be 45°C or above, or may be 50°C or above. The Tm of the polyethylene plastomer is, for example, 40°C or above and 115°C or below.

The MFR of the polyethylene plastomer is preferably 0.1 g/10 minutes or more, more preferably 0.2 g/10 minutes or more, even more preferably 0.3 g/10 minutes or more, particularly preferably 0.5 g/10 minutes or more, and preferably is 30 g/10 minutes or less, more preferably 20 g/10 minutes or less, even more preferably 10 g/10 minutes or less, particularly preferably 5 g/10 minutes or less, for film formation and workability reasons. For example, the MFR is 0.1 g/10 minutes or more and 30 g/10 minutes or less. The MFR of the polyethylene plastomer is measured using method A under the conditions of a temperature of 190°C and a load of 2.16 kg according to JIS K7210-1: 2014.

The percentages of the polyethylene plastomer in the first-a and first-b polyethylene layers are preferably more than 50% by mass, more preferably 60% by mass or more, even more preferably 70% by mass or more, still more preferably 80% by mass or more, particularly preferably 90% by mass or more, each independently.

Each of the second-a and second-b polyethylene layer is independently a layer that contains, for example, linear low-density polyethylene as its main component. The second-a and second-b polyethylene layers may each independently further contain a compatibilizer. With the inclusion of a compatibilizer in the second-a and second-b polyethylene layers, the mixing of the gas barrier resin contained in the barrier resin layer or surface resin layers and the polyethylene contained in the other layers can be improved when the stretched substrate or barrier substrate is recycled by heating and melting it. Through this, the deterioration of the physical characteristics of the polyethylene after recycling can be effectively reduced, and, furthermore, the decrease in transparency of the polyethylene can be effectively reduced.

Examples of compatibilizers include modified polyolefins, such as acid-modified polyolefins, with modified polyethylene, such as acid-modified polyethylene, being preferred from the viewpoint of recyclability. Examples of modified polyolefins include polyolefins modified with unsaturated carboxylic acids, such as maleic acid and fumaric acid, or their acid anhydrides, esters, or metal salts, polyolefins grafted with such compounds in particular. For use as the compatibilizer, specifically, polyethylene modified with an unsaturated carboxylic acid is preferred, and maleic anhydride-modified polyethylene is more preferred.

The percentages of linear low-density polyethylene in the second-a and second-b polyethylene layers are preferably more than 50% by mass, more preferably 60% by mass or more, even more preferably 65% by mass or more, still more preferably 70% by mass or more, particularly preferably 75% by mass or more, and are 100% by mass or less, or may be 99% by mass or less, may be 97% by mass or less, may be 95% by mass or less, may be 90% by mass or less, or may be 85% by mass or less, each independently.

In the case when the second-a and second-b polyethylene layers contain a compatibilizer, the percentages of the compatibilizer in the second-a and second-b polyethylene layers are preferably 1% by mass or more, more preferably 3% by mass or more, even more preferably 5% by mass or more, still more preferably 10% by mass or more, particularly preferably 15% by mass or more, and preferably are 40% by mass or less, more preferably 35% by mass or less, even more preferably 30% by mass or less, particularly preferably 25% by mass or less, each independently. For example, the percentages are 1% by mass or more and 40% by mass or less.

Each of the third-a, third-b, fourth-a, and fourth-b polyethylene layers is independently a layer that contains, for example, linear low-density polyethylene. Preferably, they are layers containing linear low-density polyethylene and medium-density polyethylene for rigidity and other reasons, or they are layers containing linear low-density polyethylene as their main component for stretchability and other reasons.

The percentages of linear low-density polyethylene in the third-a, third-b, fourth-a, and fourth-b polyethylene layers are, in an embodiment, preferably 35% by mass or more, more preferably 40% by mass or more, even more preferably 45% by mass or more, still more preferably 50% by mass or more, particularly preferably 55% by mass or more, and preferably are 85% by mass or less, more preferably 80% by mass or less, even more preferably 75% by mass or less, still more preferably 70% by mass or less, particularly preferably 65% by mass or less, each independently. For example, the percentages are 35% by mass or more and 85% by mass or less.

The percentages of medium-density polyethylene in the third-a, third-b, fourth-a and fourth-b polyethylene layers are, in an embodiment, preferably 15% by mass or more, more preferably 20% by mass or more, even more preferably 25% by mass or more, still more preferably 30% by mass or more, particularly preferably 35% by mass or more, and preferably are 65% by mass or less, more preferably 60% by mass or less, even more preferably 55% by mass or less, still more preferably 50% by mass or less, particularly preferably 45% by mass or less, each independently. For example, the percentages are 15% by mass or more and 65% by mass or less.

Examples of types of the aforementioned linear low-density polyethylene include ethylene-1-butene copolymers (C4-LLDPE), in which at least 1-butene serves as a co-monomer, ethylene-1-hexene copolymers (C6-LLDPE), in which at least 1-hexene serves as a co-monomer, and ethylene-1-octene copolymers (C8-LLDPE), in which at least 1-octene serves as a co-monomer. In these copolymers, the specified co-monomers are not the only ones; additional co-monomers may also be used. For example, linear low-density polyethylene produced using a metallocene catalyst is preferred.

In an embodiment of the stretched substrates according to the first and second aspects,
the total thickness of the first-a and first-b polyethylene layers is preferably 5% or more, more preferably 10% or more, even more preferably 15% or more, preferably is 35% or less, more preferably 30% or less, even more preferably 25% or less, and for example is 5% or more and 35% or less, in relation to the total thickness of the polyethylene layers;
the total thickness of the second-a and second-b polyethylene layers is preferably 5% or more, more preferably 10% or more, even more preferably 15% or more, preferably is 35% or less, more preferably 30% or less, even more preferably 25% or less, and for example is 5% or more and 35% or less, in relation to the total thickness of the polyethylene layers; and
the total thickness of the third-a and third-b polyethylene layers is preferably 45% or more, more preferably 50% or more, even more preferably 55% or more, preferably is 75% or less, more preferably 70% or less, even more preferably 65% or less, and for example is 45% or more and 75% or less, in relation to the total thickness of the polyethylene layers.

In an embodiment of the stretched substrate according to the fourth aspect,
the total thickness of the first-a and first-b polyethylene layers is preferably 5% or more, more preferably 10% or more, preferably is 25% or less, more preferably 20% or less, and for example is 5% or more and 25% or less, in relation to the total thickness of the polyethylene layers;
the total thickness of the second-a and second-b polyethylene layers is preferably 5% or more, more preferably 10% or more, preferably is 25% or less, more preferably 20% or less, and for example is 5% or more and 25% or less, in relation to the total thickness of the polyethylene layers;
the total thickness of the third-a and third-b polyethylene layers is preferably 35% or more, more preferably 40% or more, preferably is 65% or less, more preferably 60% or less, and for example is 35% or more and 65% or less, in relation to the total thickness of the polyethylene layers; and
the total thickness of the fourth-a and fourth-b polyethylene layers is preferably 13% or more, more preferably 18% or more, preferably is 35% or less, more preferably 30% or less, and for example is 13% or more and 35% or less, in relation to the total thickness of the polyethylene layers.

The numerical relationship between the density of each polyethylene layer in the stretched substrates including polyethylene layers described above is not particularly limited, unless the stretchability of the substrate and the heat resistance, strength, rigidity, and interlayer adhesion of the stretched substrate are impaired.

The stretched substrate is, in an embodiment, such that the density of the second-a polyethylene layer is higher than the density of the first-a polyethylene layer, the density of the third-a polyethylene layer is higher than or similar to the density of the second-a polyethylene layer, and (if a fourth-a polyethylene layer is present) the density of the fourth-a polyethylene layer is higher than or similar to the density of the third-a polyethylene layer.

The stretched substrate is, in an embodiment, such that the density of the second-b polyethylene layer is higher than the density of the first-b polyethylene layer, the density of the third-b polyethylene layer is higher than or similar to the density of the second-b polyethylene layer, and (if a fourth-b polyethylene layer is present) the density of the fourth-b polyethylene layer is higher than or similar to the density of the third-b polyethylene layer.

The stretched substrate is, in an embodiment, such that the density of the second-a polyethylene layer is higher than the density of the first-a polyethylene layer, the density of the third-a polyethylene layer is lower than the density of the second-a polyethylene layer, and (if a fourth-a polyethylene layer is present) the density of the fourth-a polyethylene layer is lower than or similar to the density of the third-a polyethylene layer.

The stretched substrate is, in an embodiment, such that the density of the second-b polyethylene layer is higher than the density of the first-a polyethylene layer, the density of the third-b polyethylene layer is lower than the density of the second-b polyethylene layer, and (if a fourth-b polyethylene layer is present) the density of the fourth-b polyethylene layer is lower than or similar to the density of the third-b polyethylene layer.

The stretched substrate is, in an embodiment, such that the density of the second-a polyethylene layer is lower than the density of the first-a polyethylene layer, the density of the third-a polyethylene layer is higher than the density of the second-a polyethylene layer, and (if a fourth-a polyethylene layer is present) the density of the fourth-a polyethylene layer is higher than or similar to the density of the third-a polyethylene layer.

The stretched substrate is, in an embodiment, such that the density of the second-b polyethylene layer is lower than the density of the first-b polyethylene layer, the density of the third-b polyethylene layer is higher than the density of the second-b polyethylene layer, and (if a fourth-b polyethylene layer is present) the density of the fourth-b polyethylene layer is higher than or similar to the density of the third-b polyethylene layer.

The stretched substrates according to the fourth aspect and the fifth-B aspect may include the first surface resin layer, a first polyethylene layer, a second polyethylene layer, a third polyethylene layer, and the second surface resin layer in this order. Hereinafter, a stretched substrate in this embodiment will also be referred to as a "stretched substrate α." With such a stretched substrate α, the occurrence of curling, for example, can be reduced.

In a stretched substrate α, each of the first and third polyethylene layers is independently a layer that contains, for example, linear low-density polyethylene. Preferably, they are layers containing linear low-density polyethylene and medium-density polyethylene for rigidity and other reasons, or they are layers containing linear low-density polyethylene as their main component for stretchability and other reasons.

In a stretched substrate α, the percentages of linear low-density polyethylene in the first and third polyethylene layers are, in an embodiment, preferably 35% by mass or more, more preferably 40% by mass or more, even more preferably 45% by mass or more, still more preferably 50% by mass or more, particularly preferably 55% by mass or more, and preferably are 85% by mass or less, more preferably 80% by mass or less, even more preferably 75% by mass or less, still more preferably 70% by mass or less, particularly preferably 65% by mass or less, each independently. For example, the percentages are 35% by mass or more and 85% by mass or less.

In a stretched substrate α, the percentages of medium-density polyethylene in the first and third polyethylene layers are, in an embodiment, preferably 15% by mass or more, more preferably 20% by mass or more, even more preferably 25% by mass or more, still more preferably 30% by mass or more, particularly preferably 35% by mass or more, and preferably are 65% by mass or less, more preferably 60% by mass or less, even more preferably 55% by mass or less, still more preferably 50% by mass or less, particularly preferably 45% by mass or less, each independently. For example, the percentages are 15% by mass or more and 65% by mass or less.

In a stretched substrate α, the second polyethylene layer is a layer that contains, for example, linear low-density polyethylene as its main component.

In a stretched substrate α, the thickness of the second polyethylene layer is preferably 30% or more, more preferably 40% or more, even more preferably 50% or more, and preferably is 90% or less, more preferably 80% or less, even more preferably 70% or less, in relation to the total thickness of the polyethylene layers. For example, the thickness is 30% or more and 90% or less.

In a stretched substrate α, the thickness of the first and third polyethylene layers is preferably 5% or more, more preferably 10% or more, even more preferably 15% or more, and preferably is 35% or less, more preferably 30% or less, even more preferably 25% or less, in relation to the total thickness of the polyethylene layers, each independently. For example, the thickness is 5% or more and 35% or less.

In a stretched substrate α, which includes a first surface resin layer, a first polyethylene layer, a second polyethylene layer, a third polyethylene layer, and a second surface resin layer in this order, the ratio of the thickness of the first polyethylene layer to the thickness of the third polyethylene layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched substrate and reduced occurrence of curling.

The stretched substrates according to the third aspect and the fifth-A aspect may include the first surface resin layer, a first polyethylene layer, a second polyethylene layer, an adhesive resin layer, and the second surface resin layer in this order. Hereinafter, a stretched substrate in this embodiment will also be referred to as a "stretched substrate β."

The stretched substrate according to the fifth-A aspect may include a first surface resin layer that contains medium-density polyethylene as its main component, a first polyethylene layer that contains linear low-density polyethylene, a second polyethylene layer that contains linear low-density polyethylene as its main component, an adhesive resin layer, and the second surface resin layer in this order. Such a stretched substrate is superior in workability and, furthermore, is superior in interlayer strength between each polyethylene layer, with which the occurrence of interlayer delamination can be effectively reduced. A stretched substrate in which the density of the first surface resin layer is high is superior in, for example, heat resistance, and, with such a stretched substrate, the occurrence of curling caused by the difference in density between the first surface resin layer and the second surface resin layer can be reduced.

The stretched substrate according to the fifth-A aspect may include a first surface resin layer that contains medium-density polyethylene and linear low-density polyethylene, a first polyethylene layer that contains linear low-density polyethylene, a second polyethylene layer that contains linear low-density polyethylene as its main component, an adhesive resin layer, and the second surface resin layer in this order. Such a stretched substrate is better in terms of, for example, workability.

The stretched substrate according to the fifth-A aspect may include a first surface resin layer that contains medium-density polyethylene and high-density polyethylene, a first polyethylene layer that contains linear low-density polyethylene, a second polyethylene layer that contains linear low-density polyethylene as its main component, an adhesive resin layer, and the second surface resin layer in this order. Such a stretched substrate is better in terms of, for example, heat resistance, and, with such a stretched substrate, curling can be sufficiently reduced.

In a stretched substrate β, the first polyethylene layer is a layer that contains, for example, linear low-density polyethylene. Preferably, it is a layer containing linear low-density polyethylene and medium-density polyethylene for rigidity and other reasons, or it is a layer containing linear low-density polyethylene as its main component for stretchability and other reasons.

In a stretched substrate β, the percentage of linear low-density polyethylene in the first polyethylene layer is, in an embodiment, preferably 35% by mass or more, more preferably 40% by mass or more, even more preferably 45% by mass or more, still more preferably 50% by mass or more, particularly preferably 55% by mass or more, and preferably is 85% by mass or less, more preferably 80% by mass or less, even more preferably 75% by mass or less, still more preferably 70% by mass or less, particularly preferably 65% by mass or less. For example, the percentage is 35% by mass or more and 85% by mass or less.

In a stretched substrate β, the percentage of medium-density polyethylene in the first polyethylene layer is, in an embodiment, preferably 15% by mass or more, more preferably 20% by mass or more, even more preferably 25% by mass or more, still more preferably 30% by mass or more, particularly preferably 35% by mass or more, and preferably is 65% by mass or less, more preferably 60% by mass or less, even more preferably 55% by mass or less, still more preferably 50% by mass or less, particularly preferably 45% by mass or less. For example, the percentage is 15% by mass or more and 65% by mass or less.

In a stretched substrate β, the second polyethylene layer is a layer that contains, for example, linear low-density polyethylene as its main component. In a stretched substrate β, the second polyethylene layer may further contain a compatibilizer as mentioned above.

In a stretched substrate β, the percentage of linear low-density polyethylene in the second polyethylene layer is preferably more than 50% by mass, more preferably 60% by mass or more, even more preferably 65% by mass or more, still more preferably 70% by mass or more, particularly preferably 75% by mass or more. In the second polyethylene layer, the percentage of linear low-density polyethylene is 100% by mass or less or may be 99% by mass or less, may be 97% by mass or less, may be 95% by mass or less, may be 90% by mass or less, or may be 85% by mass or less.

In the case when the second polyethylene layer contains a compatibilizer in a stretched substrate β, the percentage of the compatibilizer in the second polyethylene layer is preferably 1% by mass or more, more preferably 3% by mass or more, even more preferably 5% by mass or more, still more preferably 10% by mass or more, particularly preferably 15% by mass or more, and preferably is 40% by mass or less, more preferably 35% by mass or less, even more preferably 30% by mass or less, particularly preferably 25% by mass or less or 20% by mass or less. For example, the percentage is 1% by mass or more and 40% by mass or less. In a stretched substrate β, the percentage of polyethylene in the second polyethylene layer is preferably more than 50% by mass, more preferably 60% by mass or more, even more preferably 65% by mass or more, still more preferably 70% by mass or more, particularly preferably 75% by mass or more or 80% by mass or more, and is 100% by mass or less, or may be 99% by mass or less, may be 97% by mass or less, may be 95% by mass or less, may be 90% by mass or less, or may be 85% by mass or less.

Examples of types of the aforementioned linear low-density polyethylene include ethylene-1-butene copolymers (C4-LLDPE), in which at least 1-butene serves as a co-monomer, ethylene-1-hexene copolymers (C6-LLDPE), in which at least 1-hexene serves as a co-monomer, and ethylene-1-octene copolymers (C8-LLDPE), in which at least 1-octene serves as a co-monomer. In these copolymers, the specified co-monomers are not the only ones; additional co-monomers may also be used. For example, linear low-density polyethylene produced using a metallocene catalyst is preferred.

In a stretched substrate β, the thickness of the second polyethylene layer is preferably 30% or more, more preferably 35% or more, even more preferably 40% or more, and preferably is 80% or less, more preferably 70% or less, even more preferably 60% or less, in relation to the thickness of the stretched substrate. For example, the thickness is 30% or more and 80% or less. The thickness of the second polyethylene layer is preferably 60% or more, more preferably 65% or more, even more preferably 70% or more, and preferably is 90% or less, more preferably 85% or less, even more preferably 80% or less, in relation to the total thickness of the polyethylene layers. For example, the thickness is 60% or more and 90% or less.

In a stretched substrate β, the thickness of the first polyethylene layer is preferably 5% or more, more preferably 10% or more, even more preferably 15% or more, and preferably is 35% or less, more preferably 30% or less, even more preferably 25% or less, in relation to the thickness of the stretched substrate. For example, the thickness is 5% or more and 35% or less. The thickness of the first polyethylene layer is preferably 10% or more, more preferably 15% or more, even more preferably 20% or more, and preferably is 40% or less, more preferably 35% or less, even more preferably 30% or less, in relation to the total thickness of the polyethylene layers. For example, the thickness is 10% or more and 40% or less.

In a stretched substrate β, the thickness of the adhesive resin layer is preferably 2% or more, more preferably 3% or more, even more preferably 5% or more, and preferably is 20% or less, more preferably 18% or less, even more preferably 15% or less, in relation to the thickness of the stretched substrate. For example, the thickness is 2% or more and 20% or less.

The numerical relationship between the density of each layer in a stretched substrate including a first surface resin layer, a first polyethylene layer, and a second polyethylene layer is not particularly limited, unless the stretchability of the substrate and the heat resistance, strength, rigidity, and interlayer adhesion of the stretched substrate are impaired.

A stretched substrate that includes a first surface resin layer, a first polyethylene layer, and a second polyethylene layer is, in an embodiment, such that the density of the first polyethylene layer is higher than the density of the second polyethylene layer, and the density of the first surface resin layer is higher than the density of the first polyethylene layer. Such a stretched substrate tends to be better in terms of heat resistance, strength, rigidity, and the reduction of curling.

A stretched substrate that includes a first surface resin layer, a first polyethylene layer, and a second polyethylene layer is, in an embodiment, such that the density of the first polyethylene layer is higher than the density of the second polyethylene layer, and the density of the first surface resin layer is lower than the density of the first polyethylene layer.

A stretched substrate that includes a first surface resin layer, a first polyethylene layer, and a second polyethylene layer is, in an embodiment, such that the density of the first polyethylene layer is lower than the density of the second polyethylene layer, and the density of the first surface resin layer is higher than the density of the first polyethylene layer.

The stretched substrate according to the first aspect preferably includes, in an embodiment, two or more polyethylene layers, an adhesive resin layer as desired, and the barrier resin layer in this order, with the density of the polyethylene layer positioned farthest from the barrier resin layer being higher than the density of the polyethylene layer positioned closest to the barrier resin layer. With such a stretched substrate, the occurrence of curling, for example, can be reduced.

The polyethylene layer positioned farthest from the barrier resin layer may have, for example, a composition and/or a thickness similar to those of a first polyethylene layer, which will be described later, and its description is omitted here. The polyethylene layer positioned closest to the barrier resin layer may have, for example, a composition and/or a thickness similar to those of a third polyethylene layer, which will be described later, and its description is omitted here.

The stretched substrate may include a first polyethylene layer, a second polyethylene layer, a third polyethylene layer, an adhesive resin layer, and a barrier resin layer in this order. Hereinafter, a stretched substrate in this embodiment will also be referred to as a "stretched substrate γ." The barrier resin layer contains, for example, an ethylene-vinyl alcohol copolymer as its main component.

A stretched substrate γ may include a first polyethylene layer that contains medium-density polyethylene as its main component, a second polyethylene layer that contains linear low-density polyethylene and medium-density polyethylene, a third polyethylene layer that contains linear low-density polyethylene as its main component, the adhesive resin layer, and the barrier resin layer in this order. Such a stretched substrate is superior in workability and, furthermore, is superior in interlayer strength between each polyethylene layer, with which the occurrence of interlayer delamination can be effectively reduced. A stretched substrate in which the density of the first polyethylene layer is high is superior in, for example, heat resistance, and, with such a stretched substrate, the occurrence of curling caused by the difference in density between the first polyethylene layer and the barrier resin layer can be reduced. The barrier resin layer contains, for example, an ethylene-vinyl alcohol copolymer as its main component.

A stretched substrate γ may include a first polyethylene layer that contains medium-density polyethylene and linear low-density polyethylene, a second polyethylene layer that contains linear low-density polyethylene and medium-density polyethylene, a third polyethylene layer that contains linear low-density polyethylene as its main component, the adhesive resin layer, and the barrier resin layer in this order. Such a stretched substrate is better in terms of, for example, workability. The barrier resin layer contains, for example, an ethylene-vinyl alcohol copolymer as its main component.

A stretched substrate γ may include a first polyethylene layer that contains medium-density polyethylene and high-density polyethylene, a second polyethylene layer that contains linear low-density polyethylene and medium-density polyethylene, a third polyethylene layer that contains linear low-density polyethylene as its main component, the adhesive resin layer, and the barrier resin layer in this order. Such a stretched substrate is better in terms of, for example, heat resistance, and, with such a stretched substrate, curling can be sufficiently reduced. The barrier resin layer contains, for example, an ethylene-vinyl alcohol copolymer as its main component.

In a stretched substrate γ, the first polyethylene layer is a layer that contains, for example, medium-density polyethylene as its main component. Preferably, it is a layer containing medium-density polyethylene and at least one selected from linear low-density polyethylene and high-density polyethylene.

In a stretched substrate γ, the percentage of medium-density polyethylene in the first polyethylene layer is preferably 45% by mass or more, more preferably 50% by mass or more, even more preferably 55% by mass or more, still more preferably 60% by mass or more, particularly preferably 65% by mass or more, and preferably is 95% by mass or less, more preferably 90% by mass or less, even more preferably 85% by mass or less, still more preferably 80% by mass or less, particularly preferably 75% by mass or less. For example, the percentage is 45% by mass or more and 95% by mass or less.

In a stretched substrate γ, the total percentage of linear low-density polyethylene and high-density polyethylene in the first polyethylene layer is preferably 5% by mass or more, more preferably 10% by mass or more, even more preferably 15% by mass or more, still more preferably 20% by mass or more, particularly preferably 25% by mass or more, and preferably is 55% by mass or less, more preferably 50% by mass or less, even more preferably 45% by mass or less, still more preferably 40% by mass or less, particularly preferably 35% by mass or less. For example, the total percentage is 5% by mass or more and 55% by mass or less.

In a stretched substrate γ, the second polyethylene layer is a layer that contains, for example, linear low-density polyethylene. Preferably, it is a layer containing linear low-density polyethylene and medium-density polyethylene.

In a stretched substrate γ, the percentage of linear low-density polyethylene in the second polyethylene layer is preferably 35% by mass or more, more preferably 40% by mass or more, even more preferably 45% by mass or more, still more preferably 50% by mass or more, particularly preferably 55% by mass or more, and preferably is 85% by mass or less, more preferably 80% by mass or less, even more preferably 75% by mass or less, still more preferably 70% by mass or less, particularly preferably 65% by mass or less. For example, the percentage is 35% by mass or more and 85% by mass or less.

In a stretched substrate γ, the percentage of medium-density polyethylene in the second polyethylene layer is preferably 15% by mass or more, more preferably 20% by mass or more, even more preferably 25% by mass or more, still more preferably 30% by mass or more, particularly preferably 35% by mass or more, and preferably is 65% by mass or less, more preferably 60% by mass or less, even more preferably 55% by mass or less, still more preferably 50% by mass or less, particularly preferably 45% by mass or less. For example, the percentage is 15% by mass or more and 65% by mass or less.

In a stretched substrate γ, the third polyethylene layer is a layer that contains, for example, linear low-density polyethylene as its main component. The third polyethylene layer may further contain a compatibilizer.

In a stretched substrate γ, the percentage of linear low-density polyethylene in the third polyethylene layer is preferably more than 50% by mass, more preferably 60% by mass or more, even more preferably 65% by mass or more, still more preferably 70% by mass or more, particularly preferably 75% by mass or more. In the third polyethylene layer, the percentage of linear low-density polyethylene is 100% by mass or less or may be 99% by mass or less, may be 97% by mass or less, may be 95% by mass or less, may be 90% by mass or less, or may be 85% by mass or less.

In the case when the third polyethylene layer contains a compatibilizer in a stretched substrate γ, the percentage of the compatibilizer in the third polyethylene layer is preferably 1% by mass or more, more preferably 3% by mass or more, even more preferably 5% by mass or more, still more preferably 10% by mass or more, particularly preferably 15% by mass or more, and preferably is 40% by mass or less, more preferably 35% by mass or less, even more preferably 30% by mass or less, particularly preferably 25% by mass or less.

In a stretched substrate γ,
the thickness of the first polyethylene layer is preferably 5% or more, more preferably 10% or more, even more preferably 15% or more, and preferably is 35% or less, more preferably 30% or less, even more preferably 25% or less, in relation to the total thickness of the polyethylene layers;
the thickness of the second polyethylene layer is preferably 5% or more, more preferably 10% or more, even more preferably 15% or more, and preferably is 35% or less, more preferably 30% or less, even more preferably 25% or less, in relation to the total thickness of the polyethylene layers; and
the thickness of the third polyethylene layer is preferably 45% or more, more preferably 50% or more, even more preferably 55% or more, and preferably is 75% or less, more preferably 70% or less, even more preferably 65% or less, in relation to the total thickness of the polyethylene layers;

The numerical relationship between the density of each polyethylene layer in a stretched substrate including first, second, and third polyethylene layers is not particularly limited, unless the stretchability of the substrate and the heat resistance, strength, rigidity, and interlayer adhesion of the stretched substrate are impaired.

A stretched substrate that includes first, second, and third polyethylene layers is, in an embodiment, such that the density of the second polyethylene layer is higher than the density of the third polyethylene layer, and the density of the first polyethylene layer is higher than the density of the second polyethylene layer. Such a stretched substrate tends to be better in terms of heat resistance, strength, rigidity, and the reduction of curling.

A stretched substrate that includes first, second, and third polyethylene layers is, in an embodiment, such that the density of the second polyethylene layer is higher than the density of the third polyethylene layer, and the density of the first polyethylene layer is lower than the density of the second polyethylene layer.

A stretched substrate that includes first, second, and third polyethylene layers is, in an embodiment, such that the density of the second polyethylene layer is lower than the density of the third polyethylene layer, and the density of the first polyethylene layer is higher than the density of the second polyethylene layer.

### <Barrier Resin Layer>

The stretched substrate according to the first aspect includes at least one barrier resin layer that contains a gas barrier resin as its main component. The stretched substrate according to the first aspect includes, in an embodiment, a first barrier resin layer that contains a gas barrier resin as its main component and a second barrier resin layer that contains a gas barrier resin as its main component. The stretched substrate according to the first aspect, therefore, is superior in gas barrier properties (oxygen barrier properties in particular) and aroma retention compared to known polyethylene stretched substrates. A laminate that includes at least the stretched substrate according to the first aspect and a heat-sealing layer containing polyethylene as its main component is superior in recyclability.

The stretched substrate according to the first aspect is superior in, for example, heat resistance and rigidity compared to known polyethylene stretched substrates by virtue of including the barrier resin layer. A stand-up pouch that includes the stretched substrate according to the first aspect, therefore, is superior in self-standability.

A gas barrier resin is a resin having the function of limiting the penetration of gases. Examples of gas barrier resins include ethylene-vinyl alcohol copolymers, polyvinyl alcohol, polyamides, polyvinylidene chloride, polyesters, polyether polyols, polyester polyols, polyurethanes, polyacrylonitrile, and (meth)acrylic resins. Of these, ethylene-vinyl alcohol copolymers, polyvinyl alcohol, and polyamides are particularly preferred from viewpoints such as gas barrier properties (oxygen barrier properties in particular), aroma retention, heat resistance, and rigidity. Ethylene-vinyl alcohol copolymers and polyamides are more preferred, and, from the viewpoints of gas barrier properties and aroma retention, ethylene-vinyl alcohol copolymers are even more preferred.

An ethylene-vinyl alcohol copolymer (EVOH) is obtained by, for example, copolymerizing ethylene and a vinyl ester monomer and then saponifying the resulting copolymer. The copolymerization of ethylene and a vinyl ester monomer can be performed by any known polymerization process, such as solution polymerization, suspension polymerization, or emulsion polymerization. The EVOH may have been modified, for example through urethanization, acetalation, cyanoethylation, or oxyalkylenation, by known methods.

The vinyl ester monomer is generally vinyl acetate, but other vinyl ester monomers may also be used. Examples of such vinyl ester monomers include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters, such as vinyl benzoate.

In the EVOH, the percentage of ethylene-derived constituent units (ethylene content) is preferably 20 mol% or more in all repeating constituent units, more preferably 25 mol% or more, for the workability of the stretched substrate. The ethylene content of the EVOH is preferably 60 mol% or less, more preferably 50 mol% or less, for the heat resistance, oxygen barrier properties, and water vapor barrier properties of the barrier substrate and the aroma retention of the packaging container. The ethylene content is, for example, 20 mol% or more and 60 mol% or less. The ethylene content is measured by NMR.

The average degree of saponification of the EVOH is preferably 90 mol% or more, more preferably 95 mol% or more, even more preferably 99 mol% or more. The average degree of saponification is measured according to JIS K6726: 1994 (using a solution in which the EVOH is uniformly dissolved in a water/methanol solvent).

The melting point (Tm) of the EVOH is preferably 140°C or above, more preferably 145°C or above, even more preferably 150°C or above, for heat resistance reasons. The Tm of the EVOH is preferably 200°C or below, more preferably 195°C or below, even more preferably 190°C or below. The Tm of the EVOH is, for example, 140°C or above and 200°C or below.

The MFR of the EVOH is preferably 0.1 g/10 minutes or more, more preferably 0.3 g/10 minutes or more, even more preferably 0.5 g/10 minutes or more, for film formation and workability reasons. The MFR of the EVOH is preferably 30 g/10 minutes or less, more preferably 20 g/10 minutes or less, even more preferably 10 g/10 minutes or less, particularly preferably 5 g/10 minutes or less, for film formation and workability reasons. The MFR of the EVOH is, for example, 0.1 g/10 minutes or more and 30 g/10 minutes or less. The MFR of the EVOH is measured using method A under the conditions of a temperature of 190°C and a load of 2.16 kg according to JIS K7210-1: 2014. The measuring temperature may be 210°C, depending on the melting point of the EVOH.

The average degree of saponification of polyvinyl alcohol (PVA) is preferably 70 mol% or more, more preferably 75 mol% or more, even more preferably 80 mol% or more, particularly preferably 85 mol% or more. The average degree of saponification is measured according to JIS K6726: 1994.

Examples of polyamides include aliphatic polyamides and aromatic polyamides. For polyamides, aliphatic polyamides are preferred, and crystalline aliphatic polyamides are more preferred. The barrier resin layer may include one polyamide or may contain two or more polyamides. The barrier resin layer may contain one or two or more aliphatic polyamides. The barrier resin layer may contain one or two or more aromatic polyamides. The barrier resin layer may contain one or two or more aliphatic polyamides and one or two or more aromatic polyamides.

Examples of aliphatic polyamides include aliphatic homopolyamides and aliphatic copolyamides. In the following list of examples, a polyamide will also be referred to as "PA."

Specific examples of aliphatic homopolyamides include polycaprolactam or poly(6-aminocaproic acid) (PA6), polyenantholactam or poly(7-aminoenanthic acid) (PA7), polyundecanelactam or poly(11-aminoundecanoic acid) (PA11), polylauryl lactam or poly(12-aminolauric acid) (PA12), polyhexamethylene adipamide (PA66), polytetramethylene dodecamide (PA412), polypentamethylene azelamide (PA59), polypentamethylene sebacamide (PA510), polypentamethylene dodecamide (PA512), polyhexamethylene azelamide (PA69), polyhexamethylene sebacamide (PA610), polyhexamethylene dodecamide (PA612), polynonamethylene adipamide (PA96), polynonamethylene azelamide (PA99), polynonamethylene sebacamide (PA910), polynonamethylene dodecamide (PA912), polydecamethylene adipamide (PA106), polydecamethylene azelamide (PA109), polydecamethylene decamide (PA1010), polydecamethylene dodecamide (PA1012), polydodecamethylene adipamide (PA126), polydodecamethylene azelamide (PA129), polydodecamethylene sebacamide (PA1210), and polydodecamethylene dodecamide (PA1212).

Specific examples of aliphatic copolyamides include caprolactam/hexamethylenediaminoadipic acid copolymers (PA6/66), caprolactam/hexamethylenediaminoazelaic acid copolymers (PA6/69), caprolactam/hexamethylenediaminosebacic acid copolymers (PA6/610), caprolactam/hexamethylenediaminoundecanoic acid copolymers (PA6/611), caprolactam/hexamethylenediaminododecanoic acid copolymers (PA6/612), caprolactam/aminoundecanoic acid copolymers (PA6/11), caprolactam/lauryl lactam copolymers (PA6/12), caprolactam/hexamethylenediaminoadipic acid/lauryl lactam copolymers (PA6/66/12), caprolactam/hexamethylenediaminoadipic acid/hexamethylenediaminosebacic acid copolymers (PA6/66/610), and caprolactam/hexamethylenediaminoadipic acid/hexamethylenediaminododecanedicarboxylic acid copolymers (PA6/66/612).

For aliphatic polyamides, crystalline aliphatic polyamides are preferred. Examples of crystalline aliphatic polyamides include PA6, PA11, PA12, PA66, PA610, PA612, PA6/66, and PA6/66/12. The melting point (Tm) of a crystalline aliphatic polyamide is preferably 170°C or above, more preferably 180°C or above, even more preferably 190°C or above, still more preferably 200°C or above, and preferably is 300°C or below, more preferably 270°C or below, even more preferably 250°C or below, still more preferably 240°C or below, particularly preferably 230°C or below. For example, the melting point is 170°C or above and 300°C or below.

Examples of aromatic polyamides include semi-aromatic polyamides and fully aromatic polyamides, with semi-aromatic polyamides being preferred. A semi-aromatic polyamide is a polyamide having constituent units derived from an aromatic diamine and constituent units derived from an aliphatic dicarboxylic acid or a polyamide having constituent units derived from an aliphatic diamine and constituent units derived from an aromatic dicarboxylic acid. Examples include polyamides composed of an aromatic diamine and an aliphatic dicarboxylic acid and polyamides composed of an aliphatic diamine and an aromatic dicarboxylic acid.

Examples of semi-aromatic polyamides include polyhexamethylene terephthalamide (PA6T), polyhexamethylene isophthalamide (PA6I), polynonamethylene terephthalamide (PA9T), polyhexamethylene adipamide/polyhexamethylene terephthalamide copolymers (PA66/6T), polyhexamethylene adipamide/polyhexamethylene isophthalamide copolymers (PA66/6I), polyhexamethylene terephthalamide/polycaproamide copolymers (PA6T/6), polyhexamethylene isophthalamide/polycaproamide copolymers (PA6I/6), polyhexamethylene terephthalamide/polydodecamide copolymers (PA6T/12), polyhexamethylene isophthalamide/polyhexamethylene terephthalamide copolymers (PA6I/6T), polyhexamethylene terephthalamide/poly(2-methylpentamethylene terephthalamide) copolymers (PA6T/M5T), polyhexamethylene adipamide/polyhexamethylene terephthalamide/polyhexamethylene isophthalamide copolymers (PA66/6T/6I), polyhexamethylene adipamide/polycaproamide/polyhexamethylene isophthalamide copolymers (PA66/6/6I), and polymeta-xylylene adipamide (PAMXD6). Of these, polymeta-xylylene adipamide (PAMXD6) is particularly preferred.

For semi-aromatic polyamides, crystalline semi-aromatic polyamides are preferred. The melting point (Tm) of a crystalline semi-aromatic polyamide is preferably 190°C or above, more preferably 200°C or above, even more preferably 210°C or above, and preferably is 310°C or below, more preferably 280°C or below, even more preferably 250°C or below. For example, the melting point is 190°C or above and 310°C or below.

The melt volume rate (MVR) of a semi-aromatic polyamide is preferably 5 cm³/10 minutes or more, more preferably 10 cm³/10 minutes or more, and preferably is 200 cm³/10 minutes or less, more preferably 100 cm³/10 minutes or less. For example, the melt volume rate is 5 cm³/10 minutes or more and 200 cm³/10 minutes or less. The MVR is measured at a temperature of 275°C and a load of 5.00 kg according to JIS K7210-1: 2014.

The relative viscosity of a polyamide, such as an aliphatic polyamide, is preferably 1.5 or greater, more preferably 2.0 or greater, even more preferably 2.5 or greater, and preferably is 5.0 or less, more preferably 4.5 or less, even more preferably 4.0 or less. For example, the relative viscosity is 1.5 or greater and 5.0 or less. The relative viscosity of a polyamide is determined by dissolving 1 g of the polyamide in 100 mL of 96% concentrated sulfuric acid and measuring the relative viscosity at 25°C according to JIS K6920-2: 2009.

The MFR of a polyamide is preferably 0.1 g/10 minutes or more, more preferably 0.3 g/10 minutes or more, even more preferably 0.5 g/10 minutes or more, and preferably is 30 g/10 minutes or less, more preferably 20 g/10 minutes or less, even more preferably 10 g/10 minutes or less, particularly preferably 5 g/10 minutes or less, for film formation and workability reasons. For example, the MFR is 0.1 g/10 minutes or more and 30 g/10 minutes or less. The MFR of a polyamide is measured using method A under the conditions of a temperature of 235°C and a load of 2.16 kg according to JIS K7210-1: 2014. An appropriate measurement temperature can be employed according to the melting point of the polyamide.

The barrier resin layer may contain a polyamide as its main component.

The barrier resin layer may contain an aliphatic polyamide as its main component. Such a stretched substrate is superior in, for example, workability and manufacturing cost. For example, the percentage of the aliphatic polyamide in the barrier resin layer may be 80% by mass or more, may be 85% by mass or more, may be 90% by mass or more, or may be 95% by mass or more.

The barrier resin layer may contain an aromatic polyamide as its main component. Such a stretched substrate is superior in, for example, rigidity and gas barrier properties. For example, the percentage of the aromatic polyamide in the barrier resin layer may be 80% by mass or more, may be 85% by mass or more, may be 90% by mass or more, or may be 95% by mass or more.

The barrier resin layer may contain an aliphatic polyamide and an aromatic polyamide. Aliphatic polyamides tend to be better in terms of workability. Aromatic polyamides tend to be better in terms of gas barrier properties and rigidity. For example, in the barrier resin layer, the percentage of the aliphatic polyamide may be 10% by mass or more and 90% by mass or less, may be 20% by mass or more and 80% by mass or less, may be 30% by mass or more and 70% by mass or less, or may be 40% by mass or more and 60% by mass or less, and the percentage of the aromatic polyamide may be 10% by mass or more and 90% by mass or less, may be 20% by mass or more and 80% by mass or less, may be 30% by mass or more and 70% by mass or less, or may be 40% by mass or more and 60% by mass or less, for the balance between the rigidity, gas barrier properties, workability, and manufacturing cost of the stretched substrate.

A barrier resin layer that contains a polyamide as its main component may contain resin materials as mentioned above other than polyamides. Such a barrier resin layer may further contain gas barrier resins other than polyamides. Examples of gas barrier resins include ethylene-vinyl alcohol copolymers, polyvinyl alcohol, polyvinylidene chloride, polyesters, polyether polyols, polyester polyols, polyurethanes, polyacrylonitrile, and (meth)acrylic resins.

The percentage of the gas barrier resin in the barrier resin layer is preferably more than 50% by mass, more preferably 60% by mass or more, even more preferably 70% by mass or more, still more preferably 80% by mass or more, particularly preferably 90% by mass or more or 95% by mass or more, for the physical characteristics mentioned above, such as gas barrier properties and aroma retention.

The barrier resin layer may contain additives as mentioned above.

The thickness of each barrier resin layer is preferably 0.5 µm or more, more preferably 1 µm or more, even more preferably 1.5 µm or more, for the physical characteristics mentioned above, such as gas barrier properties and aroma retention, and preferably is 10 µm or less, more preferably 8 µm or less, even more preferably 6 µm or less, for recyclability reasons. For example, the thickness is 0.5 µm or more and 10 µm or less.

The thickness of each barrier resin layer is preferably 1% or more, more preferably 3% or more, even more preferably 5% or more, and preferably is 30% or less, more preferably 25% or less, even more preferably 20% or less, in relation to the thickness of the stretched substrate. For example, the thickness is 1% or more and 30% or less.

### <Surface Resin Layer Containing a Gas Barrier Resin as Its Main Component (G)>

A surface resin layer that contains a gas barrier resin as its main component (G) will now be described. A surface resin layer (G) is, for example, a barrier resin layer as described above. The details of the barrier resin layer are as described above, and their descriptions are omitted here. The gas barrier resin is preferably a polyamide.

The first surface resin layer and the second surface resin layer in the stretched substrate according to the second aspect each independently contain a gas barrier resin, such as a polyamide, as their main component. The second surface resin layer in the stretched substrate according to the third aspect contains a gas barrier resin as its main component. The second surface resin layer in the stretched substrate according to the fifth-A aspect contains a gas barrier resin, such as a polyamide, as its main component. A stretched substrate that includes a surface resin layer containing a gas barrier resin as its main component (G) is superior in gas barrier properties (oxygen barrier properties in particular), heat resistance, and rigidity compared to known polyethylene stretched substrates. A laminate that includes at least a stretched substrate or barrier substrate, which will be described later, according to the present disclosure and a heat-sealing layer containing polyethylene as its main component is superior in recyclability.

A surface resin layer (G) tends to be superior in surface smoothness, and a vapor deposition film provided on the surface of a surface resin layer (G) tends to be superior in adhesion to the surface resin layer (G) and capable of exhibiting good gas barrier properties.

### <Surface Resin Layer Containing Polyethylene and an Adhesive Resin (AH)>

A surface resin layer that contains polyethylene and an adhesive resin (AH) will now be described.

The first surface resin layer in the stretched substrate according to the third aspect contains polyethylene and an adhesive resin. The first surface resin layer and the second surface resin layer in the stretched substrate according to the fourth aspect each independently contain polyethylene and an adhesive resin. The second surface resin layer in the stretched substrate according to the fifth-B aspect contains polyethylene and an adhesive resin. A vapor deposition film provided on the surface of such a surface resin layer (AH) tends to be superior in adhesion to the surface resin layer (AH) and capable of exhibiting good gas barrier properties.

Examples of preferred types of polyethylene include high-density polyethylene, medium-density polyethylene, low-density polyethylene, linear low-density polyethylene, and ultra-low-density polyethylene, with linear low-density polyethylene being more preferred from the viewpoint of the surface smoothness of the stretched substrate or adhesion between the surface resin layer (AH) and a vapor deposition film. Examples of types of linear low-density polyethylene include C4-LLDPE, C6-LLDPE, and C8-LLDPE. For example, linear low-density polyethylene produced using a metallocene catalyst is preferred.

The melting point (Tm) of the polyethylene in a surface resin layer (AH) is preferably 100°C or above, more preferably 105°C or above, even more preferably 110°C or above, particularly preferably 115°C or above, and preferably is 140°C or below, for reasons such as the strength and heat resistance of the stretched substrate and adhesion between the surface resin layer (AH) and a vapor deposition film. For example, the melting point is 100°C or above and 140°C or below.

Examples of adhesive resins include acid-modified resins, silicone resins, epoxy resins, and phenolic resins, with acid-modified resins being preferred. Examples of acid-modified resins include acid-modified polyolefins and acid-modified vinyl resins. Of these, acid-modified polyolefins are particularly preferred from the viewpoints of recyclability and adhesion. Acid-modified polypropylene and acid-modified polyethylene are more preferred, acid-modified polyethylene is even more preferred, and acid-modified linear low-density polyethylene is still more preferred. A surface resin layer (AH) containing acid-modified linear low-density polyethylene tends to be better in terms of adhesion to a vapor deposition film.

Examples of acid-modified polyolefins include polyolefins (e.g., polypropylene and polyethylene) modified with acid modification agents, polyolefins grafted with acid modification agents in particular. Examples of acid modification agents include unsaturated carboxylic acids, such as maleic acid, fumaric acid, acrylic acid, methacrylic acid, itaconic acid, citraconic acid, tetrahydrophthalic acid, or their acid anhydrides, esters, or metal salts. For acid-modified polyolefins, maleic acid-modified polyolefins and maleic anhydride-modified polyolefins are preferred, and maleic acid-modified polypropylene, maleic anhydride-modified polypropylene, maleic acid-modified polyethylene, and maleic anhydride-modified polyethylene are more preferred.

The percentage of constituent units derived from the acid modification agent in an acid-modified polyolefin is preferably 0.01% by mass or more, more preferably 0.05% by mass or more, even more preferably 0.1% by mass or more, for adhesion between the surface resin layer (AH) and a vapor deposition film. The percentage of constituent units derived from the acid modification agent in an acid-modified polyolefin is preferably 10% by mass or less, more preferably 5% by mass or less, even more preferably 3% by mass or less, for bonding between the surface resin layer (AH) and the polyethylene layer. The percentage is, for example, 0.01% by mass or more and 10% by mass or less. The percentage of constituent units derived from the acid modification agent is measured by infrared spectrometry.

The MFR of an acid-modified polyolefin is preferably 0.1 g/10 minutes or more, more preferably 1 g/10 minutes or more, even more preferably 1.5 g/10 minutes or more, and preferably is 50 g/10 minutes or less, more preferably 30 g/10 minutes or less, even more preferably 10 g/10 minutes or less, for film formation and workability reasons. For example, the MFR is 0.1 g/10 minutes or more and 50 g/10 minutes or less. The MFR of an acid-modified polyolefin is measured using method A under the condition of a load of 2.16 kg according to JIS K7210-1: 2014. The temperature for the measurement of the MFR is selected according to, for example, the melting point of the acid-modified polyolefin. In the case of acid-modified polypropylene, the measurement temperature is 230°C, and in the case of acid-modified polyethylene, the measurement temperature is 190°C.

Examples of density ranges for acid-modified polyethylene are the same as those presented above for polyethylene.

The melting point (Tm) of acid-modified polyethylene is preferably 100°C or above, more preferably 105°C or above, even more preferably 110°C or above, particularly preferably 115°C or above, and preferably is 140°C or below, for reasons such as the strength and heat resistance of the stretched substrate and adhesion between the surface resin layer (AH) and a vapor deposition film. For example, the melting point is 100°C or above and 140°C or below.

For a surface resin layer (AH), it is preferred that the percentage of polyethylene be 60% by mass or more and 95% by mass or less with the percentage of the adhesive resin being 5% by mass or more and 40% by mass or less, it is more preferred that the percentage of polyethylene be 70% by mass or more and 95% by mass or less with the percentage of the adhesive resin being 5% by mass or more and 30% by mass or less, it is even more preferred that the percentage of polyethylene be 80% by mass or more and 95% by mass or less with the percentage of the adhesive resin being 5% by mass or more and 20% by mass or less, and it is particularly preferred that the percentage of polyethylene be 85% by mass or more and 95% by mass or less with the percentage of the adhesive resin being 5% by mass or more and 15% by mass or less. A surface resin layer (AH) in such a configuration tends to be better in terms of surface smoothness, adhesion to a vapor deposition film, and bonding with the polyethylene layer. When the percentage of the adhesive resin is equal to or smaller than the upper limits, overadhesion of the film to a roller or other elements during the production of the stretched substrate, for example, can be reduced.

A surface resin layer (AH) may contain resin materials as mentioned above other than the components described above.

A surface resin layer (AH) may contain additives as mentioned above.

The thickness of each surface resin layer (AH) is preferably 0.5 µm or more, more preferably 1 µm or more, even more preferably 1.5 µm or more, because this makes the advantages described above more pronounced, and preferably is 10 µm or less, more preferably 8 µm or less, even more preferably 6 µm or less, for recyclability reasons. The thickness of each surface resin layer (AH) is, for example, 0.5 µm or more and 10 µm or less.

The thickness of each surface resin layer (AH) is preferably 1% or more, more preferably 3% or more, even more preferably 5% or more, and preferably is 30% or less, more preferably 25% or less, even more preferably 20% or less, in relation to the thickness of the stretched substrate. For example, the thickness is 1% or more and 30% or less.

### <Surface Resin Layer Containing Polyethylene as Its Main Component (PO)>

A surface resin layer that contains polyethylene as its main component (PO) will now be described.

The first surface resin layer in the stretched substrate according to the fifth aspect contains polyethylene as its main component. The percentage of polyethylene in a surface resin layer (PO) is preferably 80% by mass or more, more preferably 85% by mass or more, even more preferably 90% by mass or more, particularly preferably 95% by mass or more.

An example of a surface resin layer (PO) can be a polyethylene layer as described in <Polyethylene Layer> above.

A surface resin layer (PO) is, in an embodiment, a layer that contains medium-density polyethylene. Preferably, it is a layer containing medium-density polyethylene and at least one selected from linear low-density polyethylene and high-density polyethylene.

The percentage of medium-density polyethylene in a surface resin layer (PO) is preferably 45% by mass or more, more preferably 50% by mass or more, even more preferably 55% by mass or more, still more preferably 60% by mass or more, particularly preferably 65% by mass or more, and preferably is 95% by mass or less, more preferably 90% by mass or less, even more preferably 85% by mass or less, still more preferably 80% by mass or less, particularly preferably 75% by mass or less. For example, the percentage is 45% by mass or more and 95% by mass or less.

The total percentage of linear low-density polyethylene and high-density polyethylene in a surface resin layer (PO) is preferably 5% by mass or more, more preferably 10% by mass or more, even more preferably 15% by mass or more, still more preferably 20% by mass or more, particularly preferably 25% by mass or more, and preferably is 55% by mass or less, more preferably 50% by mass or less, even more preferably 45% by mass or less, still more preferably 40% by mass or less, particularly preferably 35% by mass or less. For example, the percentage is 5% by mass or more and 55% by mass or less.

A surface resin layer (PO) may contain resin materials as mentioned above other than polyethylene.

A surface resin layer (PO) may contain additives as mentioned above.

The thickness of a surface resin layer (PO) is, in an embodiment, preferably 0.5 µm or more, more preferably 1 µm or more, even more preferably 1.5 µm or more, and preferably is 10 µm or less, more preferably 8 µm or less, even more preferably 6 µm or less, because this makes the advantages described above more pronounced. The thickness of a surface resin layer (PO) is, for example, 0.5 µm or more and 10 µm or less.

The thickness of a surface resin layer (PO) is, in an embodiment, preferably 1 µm or more, more preferably 2 µm or more, even more preferably 3 µm or more, and preferably is 20 µm or less, more preferably 15 µm or less, even more preferably 10 µm or less, because this makes the advantages described above more pronounced. The thickness of a surface resin layer (PO) is, for example, 1 µm or more and 20 µm or less.

The thickness of a surface resin layer (PO) is, in an embodiment, preferably 1% or more, more preferably 3% or more, even more preferably 5% or more, and preferably is 30% or less, more preferably 25% or less, even more preferably 20% or less, in relation to the thickness of the stretched substrate. For example, the thickness is 1% or more and 30% or less.

The thickness of a surface resin layer (PO) is, in an embodiment, preferably 3% or more, more preferably 5% or more, even more preferably 8% or more, and preferably is 35% or less, more preferably 30% or less, even more preferably 25% or less, in relation to the thickness of the stretched substrate. For example, the thickness is 3% or more and 35% or less.

### <Adhesive Resin Layer>

The stretched substrate according to the first aspect may further include an adhesive resin layer between the polyethylene layer and the barrier resin layer. The stretched substrate according to the first aspect may further include a first adhesive resin layer between a first barrier resin layer and the polyethylene layer. The stretched substrate according to the first aspect may further include a second adhesive resin layer between the polyethylene layer and a second barrier resin layer. Such a stretched substrate is superior in, for example, adhesion between the polyethylene layer and the barrier resin layer(s).

The stretched substrate according to the second aspect may further include a first adhesive resin layer between the first surface resin layer and the polyethylene layer. The stretched substrate according to the second aspect may further include a second adhesive resin layer between the polyethylene layer and the second surface resin layer. The stretched substrate according to the third aspect may further include an adhesive resin layer between the polyethylene layer and the second surface resin layer. Such stretched substrates are superior in, for example, adhesion between the polyethylene layer and the surface resin layers. The stretched substrate according to the fifth-A aspect may further include a second adhesive resin layer between the polyethylene layer and the second surface resin layer.

An adhesive resin layer contains a resin material. Examples of resin materials include polyolefins, modified polyolefins, vinyl resins, silicone resins, epoxy resins, and phenolic resins. Of these, polyolefins and modified polyolefins are particularly preferred from the viewpoints of recyclability and adhesion. Modified polyolefins, such as acid-modified polyolefins, are more preferred, and modified polyethylene, such as acid-modified polyethylene, is even more preferred.

Examples of modified polyolefins include polyolefins modified with unsaturated carboxylic acids, such as maleic acid and fumaric acid, or their acid anhydrides, esters, or metal salts, polyolefins grafted with such compounds in particular. For modified polyolefins, specifically, polyethylene modified with an unsaturated carboxylic acid is preferred, and maleic anhydride-modified polyethylene is more preferred.

The MFR of a modified polyolefin is preferably 0.1 g/10 minutes or more, more preferably 0.3 g/10 minutes or more, even more preferably 0.5 g/10 minutes or more, for film formation and workability reasons. The MFR of a modified polyolefin is preferably 30 g/10 minutes or less, more preferably 20 g/10 minutes or less, even more preferably 10 g/10 minutes or less, particularly preferably 5 g/10 minutes or less, for film formation and workability reasons. The MFR of a modified polyolefin is, for example, 0.1 g/10 minutes or more and 30 g/10 minutes or less. The MFR of a modified polyolefin is measured using method A under the condition of a load of 2.16 kg according to JIS K7210-1: 2014. The temperature for the measurement of the MFR is selected according to, for example, the melting point of the modified polyolefin. In the case of modified polyethylene, the measurement temperature is 190°C.

The percentage of the resin material in an adhesive resin layer is preferably 80% by mass or more, more preferably 85% by mass or more, even more preferably 90% by mass or more, particularly preferably 95% by mass or more.

An adhesive resin layer may contain additives as mentioned above.

The thickness of each adhesive resin layer is preferably 0.5 µm or more, more preferably 1 µm or more, for the aforementioned adhesion. The thickness of each adhesive resin layer is preferably 15 µm or less, more preferably 10 µm or less, even more preferably 5 µm or less, for the recyclability of the stretched substrate and the barrier substrate. The thickness of each adhesive resin layer is, for example, 0.5 µm or more and 15 µm or less.

The thickness of each adhesive resin layer is preferably 2% or more, more preferably 4% or more, even more preferably 6% or more, and preferably is 25% or less, more preferably 20% or less, even more preferably 15% or less, in relation to the thickness of the stretched substrate. For example, the thickness is 2% or more and 25% or less.

The stretched substrate according to the first aspect may include a first barrier resin layer, a first adhesive resin layer, the polyethylene layer, a second adhesive resin layer, and a second barrier resin layer in this order. The stretched substrate according to the second aspect may include the first surface resin layer, a first adhesive resin layer, the polyethylene layer, a second adhesive resin layer, and the second surface resin layer in this order. In such stretched substrates, the ratio of the thickness of the first adhesive resin layer to the thickness of the second adhesive resin layer is preferably 0.6 or greater and 1.4 or less, more preferably 0.7 or greater and 1.3 or less, even more preferably 0.8 or greater and 1.2 or less, particularly preferably 0.9 or greater and 1.1 or less, for the symmetry of the stretched substrates and reduced occurrence of curling.

### <Layer Configuration of the Stretched Base Material>

In the following, several examples will be presented for the layer configuration of the stretched substrate according to the present disclosure.

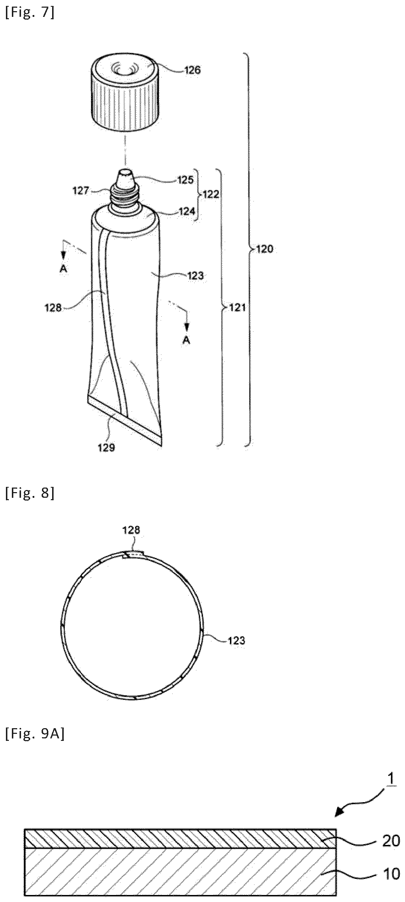

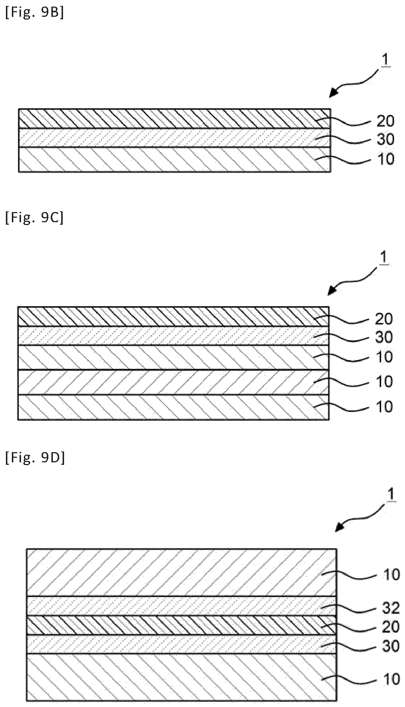

The stretched substrate 1 illustrated in Fig. 9A includes a polyethylene layer 10 and a barrier resin layer 20. The stretched substrate 1 illustrated in Fig. 9B includes a polyethylene layer 10, an adhesive resin layer 30, and a barrier resin layer 20. The stretched substrate 1 illustrated in Fig. 9C includes a first polyethylene layer 10, a second polyethylene layer 10, a third polyethylene layer 10, an adhesive resin layer 30, and a barrier resin layer 20 in this order. The stretched substrate 1 illustrated in Fig. 9D includes a fourth polyethylene layer 10, a first adhesive resin layer 30, a barrier resin layer 20, a second adhesive resin layer 32, and a fifth polyethylene layer 10 in this order.

### <Gas Barrier Properties of the Stretched Base Material>

The oxygen transmission rate (unit: cc/(m²·day·atm)) of the stretched substrate according to the present disclosure may be, for example, less than 100, may be less than 50, may be less than 30, may be less than 25, may be less than 18, may be less than 10, or may be less than 5.0. The lower limit to the oxygen transmission rate may be, for example, 0.1, may be 0.5, or may be 1. The oxygen transmission rate is measured in an environment at a temperature of 23°C and a humidity of 50% RH according to JIS K7126-2: 2006.

The water vapor transmission rate (unit: g/(m²·day)) of the stretched substrate according to the present disclosure may be, for example, less than 30, may be less than 20, may be less than 15, may be less than 10, may be less than 8.0, or may be less than 5.0. The lower limit to the water vapor transmission rate may be, for example, 0.1, may be 0.5, or may be 1. The water vapor transmission rate is measured in an environment at a temperature of 40°C and a humidity of 90% RH according to JIS K7129-2: 2019.

### [Printed Base Material]

A printed substrate according to the present disclosure includes a stretched substrate according to the present disclosure as described above and at least one printed layer provided on one surface or both surfaces of the stretched substrate. In an embodiment, the stretched substrate includes the barrier resin layer as one surface layer, and the printed substrate includes the printed layer on the surface of the barrier resin layer of the stretched substrate. That is, the printed substrate according to the present disclosure may include a polyethylene layer, a barrier resin layer, and a printed layer in this order, may include a polyethylene layer, an adhesive resin layer, a barrier resin layer, and a printed layer in this order, or may include a first polyethylene layer, a second polyethylene layer, a third polyethylene layer, an adhesive resin layer, a barrier resin layer, and a printed layer in this order.

### [Barrier Base Material]

A barrier substrate according to the present disclosure includes at least a stretched substrate according to the present disclosure and a vapor deposition film. The details of the stretched substrate are as described above, and their descriptions are omitted here. The barrier substrate according to the present disclosure includes a stretched substrate according to the present disclosure and at least one vapor deposition film provided on one surface or both surfaces of the stretched substrate.

A barrier substrate according to a first aspect of the present disclosure includes:
a stretched substrate according to the first aspect described above that includes a first barrier resin layer and a second barrier resin layer; and
at least one vapor deposition film provided on the surface of at least one selected from the first barrier resin layer and the second barrier resin layer in the stretched substrate.

Barrier substrates according to second to fourth aspects of the present disclosure include:
a stretched substrate according to any of the second to fourth aspects described above; and
at least one vapor deposition film provided on the surface of at least one selected from the first surface resin layer and the second surface resin layer in the stretched substrate.

A barrier substrate according to a fifth aspect of the present disclosure includes:
the stretched substrate according to the fifth aspect described above; and
a vapor deposition film provided on the surface of the second surface resin layer in the stretched substrate.

When a matter common to barrier substrates according to the first to fifth or other aspects is described or when the barrier substrates according to the first to fifth or other aspects are not specifically distinguished, the term "barrier substrate" may simply be used.

In the barrier substrate according to the first aspect, the vapor deposition film may be provided solely on the surface of the first barrier resin layer in the stretched substrate, may be provided solely on the surface of the second barrier resin layer, or may be provided on the surface of the first barrier resin layer and the surface of the second barrier resin layer. In the barrier substrates according to the second to fourth aspects, the vapor deposition film may be provided solely on the surface of the first surface resin layer in the stretched substrate, may be provided solely on the surface of the second surface resin layer, or may be provided on the surface of the first surface resin layer and the surface of the second surface resin layer. In the barrier substrate according to the fifth aspect, the vapor deposition film may also be provided on the surface of the first surface resin layer in the stretched substrate.

The barrier substrate according to the present disclosure includes, in an embodiment, at least:
a first vapor deposition film;
a stretched substrate as described above; and
a second vapor deposition film
in this order in the thickness direction.

The stretched substrate has a first surface and a second surface opposite the first surface. In an embodiment, the first barrier resin layer or first surface resin layer constitutes the first surface, and the second barrier resin layer or second surface resin layer constitutes the second surface. The first vapor deposition film is provided on the first surface of the stretched substrate. The first vapor deposition film is provided on, for example, the surface of the first barrier resin layer or first surface resin layer of the stretched substrate. The second vapor deposition film is provided on the second surface of the stretched substrate. The second vapor deposition film is provided on, for example, the surface of the second barrier resin layer or second surface resin layer of the stretched substrate.

The barrier substrate may further include a printed layer, which will be described later.

### <Vapor Deposition Film>

The barrier substrate according to the present disclosure includes at least one vapor deposition film and is superior in gas barrier properties. A packaging container produced using such a barrier substrate is superior in gas barrier properties, with which a decrease in the mass of the contents packed within the packaging container, for example, can be reduced. The barrier substrate according to the present disclosure includes, in an embodiment, at least a first vapor deposition film, the stretched substrate, and a second vapor deposition film in this order and is better in terms of gas barrier properties. With such a barrier substrate, the deterioration of gas barrier properties caused by pinholes can be reduced because the barrier substrate includes vapor deposition films on both surfaces of the stretched substrate.

In an embodiment, the stretched substrate includes the barrier resin layer as one surface layer, and the barrier substrate includes the vapor deposition film on the surface of the barrier resin layer of the stretched substrate. Such a stretched substrate is superior in, for example, the formation, smoothness, and adhesion of the vapor deposition film, and the resulting barrier substrate is superior in, for example, gas barrier properties, specifically oxygen barrier properties and water vapor barrier properties. When the vapor deposition film is a metal deposition film, furthermore, the barrier substrate is superior in brightness.

The vapor deposition film is, in an embodiment, provided on the second surface of the stretched substrate, and is not provided on the first surface of the stretched substrate. The vapor deposition film is, in an embodiment, provided on the surface of the second barrier resin layer of the stretched substrate, and is not provided on the surface of the first barrier resin layer of the stretched substrate.

The vapor deposition film is composed of, for example, a metal and/or an inorganic oxide. The vapor deposition film may be a metal deposition film, composed of one or two or more metals, or may be an inorganic oxide deposition film, composed of one or two or more inorganic oxides. An inorganic oxide deposition film may be a transparent deposition film. Examples of metals include aluminum, chromium, tin, nickel, copper, silver, gold, and platinum. Examples of inorganic oxides include aluminum oxide, silicon oxide, magnesium oxide, calcium oxide, zirconium oxide, titanium oxide, boron oxide, hafnium oxide, barium oxide, and silicon oxycarbide (carbon-containing silicon oxide). Of vapor deposition films, an aluminum deposition film, an aluminum oxide (alumina) deposition film, a silicon oxide (silica) deposition film, and a silicon oxycarbide deposition film are particularly preferred, and it is preferred that each of the first vapor deposition film and the second vapor deposition film be independently an aluminum deposition film, an aluminum oxide (alumina) deposition film, a silicon oxide (silica) deposition film, or a silicon oxycarbide deposition film.

The barrier substrate according to the present disclosure includes, in an embodiment, at least a first vapor deposition film as a vapor deposition film as mentioned above, the stretched substrate, and a second vapor deposition film as a vapor deposition film as mentioned above in this order. The barrier substrate according to the present disclosure includes, in an embodiment, at least a first vapor deposition film, the stretched substrate, and a second vapor deposition film in this order. Such barrier substrates are particularly superior in gas barrier properties.

The first vapor deposition film is provided on the first surface of the stretched substrate. The second vapor deposition film is provided on the second surface of the stretched substrate. In an embodiment, the stretched substrate includes a first barrier resin layer (a first surface resin layer) constituting the first surface and a second barrier resin layer (a second surface resin layer) constituting the second surface, with the first vapor deposition film being provided on the surface of the first barrier resin layer, and the second vapor deposition film being provided on the surface of the second barrier resin layer. Such a stretched substrate is superior in, for example, the formation, smoothness, and adhesion of the vapor deposition films, and the resulting barrier substrate is superior in, for example, gas barrier properties, specifically oxygen barrier properties and water vapor barrier properties. When the vapor deposition films are metal deposition films, furthermore, the barrier substrate is superior in brightness.

The combination of the first vapor deposition film and the second vapor deposition film is not particularly limited.

The first vapor deposition film may be a metal deposition film with the second vapor deposition film being a metal deposition film, and in that case the two films may be identical or may be different. One of the first vapor deposition film or the second vapor deposition film may be a metal deposition film with the other being an inorganic oxide deposition film or transparent deposition film. The first vapor deposition film may be an inorganic oxide deposition film or transparent deposition film, the second vapor deposition film may be an inorganic oxide deposition film or transparent deposition film, and in that case the two films may be identical or may be different.

The first vapor deposition film may be an aluminum deposition film with the second vapor deposition film being an aluminum deposition film, and in that case the two films may be identical aluminum deposition films or may be different aluminum deposition films. One of the first vapor deposition film or the second vapor deposition film may be an aluminum deposition film with the other being an alumina deposition film, a silica deposition film, or a silicon oxycarbide deposition film. The first vapor deposition film may be an alumina deposition film, a silica deposition film, or a silicon oxycarbide deposition film with the second vapor deposition film being an alumina deposition film, a silica deposition film, or a silicon oxycarbide deposition film, and in that case the two films may be identical or may be different.

The barrier substrate according to the present disclosure includes, in an embodiment, metal deposition films on both surfaces of the stretched substrate. Such a barrier substrate is particularly superior in gas barrier properties.

For example, when a packaging container (e.g., a packaging bag or a tube container body) is produced using a laminate that includes a barrier substrate including metal deposition films, such as aluminum deposition films, on both surfaces of a stretched substrate, the metal deposition films are oxidized and turn into metal oxides, depending on the type of contents packed within the packaging container. As a result, problems such as discoloration or corrosion of the films or lifting and detachment of layers due to reduced lamination strength caused by volume expansion can occur.

In an embodiment, at least one of the first vapor deposition film or the second vapor deposition film is an inorganic oxide deposition film. By using a laminate including such a barrier substrate, a packaging container superior in resistance to contents can be produced. For example, a laminate that includes a barrier substrate and a heat-sealing layer is prepared. The laminate includes a barrier substrate positioned such that the inorganic oxide deposition film faces the heat-sealing layer side (the inside of the packaging container) with the other vapor deposition film facing the outside (the outside of the packaging container). When both of the first vapor deposition film and the second vapor deposition film are inorganic oxide deposition films, the orientation of the barrier substrate is not particularly limited. By producing a packaging container using this laminate, the discoloration, corrosion, or degradation of the vapor deposition films and the lifting and detachment of layers can be reduced, even when corrosive contents are packed within the packaging container. This is because the inorganic oxide deposition film(s) has already been oxidized, with which the occurrence of volume expansion through oxidation as seen with metal deposition films can be reduced.

The barrier substrate according to the present disclosure includes, in an embodiment, a vapor deposition film solely on one surface of the stretched substrate. The barrier substrate according to the present disclosure includes, in an embodiment, a vapor deposition film solely on the surface of the second surface resin layer of the stretched substrate and does not include a vapor deposition film on the surface of the first surface resin layer. By using a laminate including such a barrier substrate, a packaging container (e.g., a packaging bag or a tube container) superior in resistance to contents can be produced. For example, a laminate that includes a barrier substrate and a heat-sealing layer is prepared. The laminate includes a barrier substrate positioned such that the stretched substrate faces the heat-sealing layer side (the inside of the packaging container) with the vapor deposition film facing the outside (the outside of the packaging container). By producing a packaging container using this laminate, the vapor deposition film can be placed outside, and thus the discoloration, corrosion, or degradation of the vapor deposition film and the lifting and detachment of layers can be reduced, even when corrosive contents are packed within the packaging container. For example, a laminate that includes a first heat-sealing layer, a barrier substrate, and a second heat-sealing layer is prepared. The laminate includes a barrier substrate positioned such that the stretched substrate faces the first heat-sealing layer side (the inside of the tube container) with the vapor deposition film facing the second heat-sealing layer side (the outside of the tube container). By producing a tube container body using this laminate, the vapor deposition film can be placed outside, and thus the discoloration, corrosion, or degradation of the vapor deposition film and the lifting and detachment of layers can be reduced, even when corrosive contents are packed within the tube container.

The barrier substrate according to the present disclosure includes, in an embodiment, an inorganic oxide deposition film provided on the surface of the first barrier resin layer of the stretched substrate as the first vapor deposition film. By using a laminate including such a barrier substrate, a packaging container (e.g., a packaging bag or a tube container) superior in resistance to contents can be produced. For example, a laminate that includes a barrier substrate and a heat-sealing layer is prepared. The laminate includes a barrier substrate positioned such that the first vapor deposition film faces the heat-sealing layer side (the inside of the packaging container) with the second vapor deposition film facing the outside (the outside of the packaging container). By producing a packaging container using this laminate, the discoloration, corrosion, or degradation of the first vapor deposition film and the lifting and detachment of layers can be reduced, even when corrosive contents are packed within the packaging container. This is because the inorganic oxide deposition film that is the first vapor deposition film has already been oxidized, with which the occurrence of volume expansion through oxidation as seen with metal deposition films can be reduced. For example, a laminate that includes a first heat-sealing layer, a barrier substrate, and a second heat-sealing layer is prepared. The laminate includes a barrier substrate positioned such that the first vapor deposition film faces the first heat-sealing layer side (the inside of the tube container) with the second vapor deposition film facing the second heat-sealing layer side (the outside of the tube container). By producing a tube container body using this laminate, the discoloration, corrosion, or degradation of the first vapor deposition film and the lifting and detachment of layers can be reduced, even when corrosive contents are packed within the tube container.

In an embodiment, each of the first vapor deposition film and the second vapor deposition film is independently a metal deposition film for barrier properties reasons. Both of the first vapor deposition film and the second vapor deposition film may be aluminum deposition films.

In an embodiment, the first vapor deposition film is an inorganic oxide deposition film, and the second vapor deposition film is a metal deposition film or an inorganic oxide deposition film. In an embodiment, the first vapor deposition film is an inorganic oxide deposition film provided on the surface of the first barrier resin layer of the stretched substrate, and the second vapor deposition film is a metal deposition film or inorganic oxide deposition film provided on the surface of the second barrier resin layer of the stretched substrate. The first vapor deposition film may be an alumina deposition film, a silica deposition film, or a silicon oxycarbide deposition film with the second vapor deposition film being an aluminum deposition film. The first vapor deposition film may be an alumina deposition film, a silica deposition film, or a silicon oxycarbide deposition film with the second vapor deposition film being an alumina deposition film, a silica deposition film, or a silicon oxycarbide deposition film, and in that case the two films may be identical or may be different.

The first vapor deposition film may be an inorganic oxide deposition film with the second vapor deposition film being a metal deposition film. The inorganic oxide deposition film may be a transparent deposition film. With such a barrier substrate, the problem of oxidative degradation when the first vapor deposition film is a metal deposition film, for example, can be avoided.

The first vapor deposition film may be an inorganic oxide deposition film with the second vapor deposition film being an inorganic oxide deposition film, and in that case the two films may be identical or may be different. The inorganic oxide deposition film may be a transparent deposition film. With such a barrier substrate, the problem of oxidative degradation when the vapor deposition films are metal deposition films, for example, can be avoided, and the corrosion of the vapor deposition films from the end faces of the barrier substrate can also be reduced. Such a barrier substrate, furthermore, is superior in transparency, and thus a packaging container superior in visibility of contents can be produced using it. For example, a packaging container that can be used in a microwave oven can be produced, and a packaging container that can pass through a metal detector can also be produced. Moreover, with a packaging container that includes such a barrier substrate, the absence of an aluminum deposition film can be clearly understood, for example by consumers, facilitating waste sorting. In recycling treatment, furthermore, the inclusion of black-spot (metal-colored) foreign matters, which can occur due to aluminum deposition films, can be reduced.

The thickness of the vapor deposition film is preferably 1 nm or more, more preferably 5 nm or more, even more preferably 10 nm or more, for gas barrier properties reasons. The thickness of the vapor deposition film is preferably 150 nm or less, more preferably 100 nm or less, even more preferably 80 nm or less, for reduced development of cracks in the vapor deposition film and for the recyclability of the packaging container. The thickness of the vapor deposition film is, for example, 1 nm or more and 150 nm or less. The thickness of the first and second vapor deposition films, too, preferably falls within the above ranges, each independently.

When the vapor deposition film is an aluminum deposition film, the optical density (OD value) of the aluminum deposition film is preferably 2 or greater and 3.5 or less. Through this, oxygen barrier properties and water vapor barrier properties can be improved while, for example, productivity in the manufacture of the barrier substrate is maintained. When the vapor deposition film in the barrier substrate according to the present disclosure is formed solely on one surface of the stretched substrate, it tends to be possible to form an aluminum deposition film having a stable OD value and superior in thickness uniformity. When one vapor deposition film in the barrier substrate according to the present disclosure is a transparent deposition film, it tends to be possible to form an aluminum deposition film having a stable OD value and superior in thickness uniformity as the other vapor deposition film.

When the second vapor deposition film is an aluminum deposition film, the optical density (OD value) of the aluminum deposition film is preferably 2 or greater and 3.5 or less. Through this, oxygen barrier properties and water vapor barrier properties can be improved while, for example, productivity in the manufacture of the barrier substrate is maintained. When the first vapor deposition film in the barrier substrate according to the present disclosure is a transparent deposition film, it tends to be possible to form an aluminum deposition film having a stable OD value and superior in thickness uniformity.

The OD value can be measured according to JIS K7361-1: 1997.

The barrier substrate may include two or more vapor deposition films on the first surface (or the surface of the first barrier resin layer or first surface resin layer) of the stretched substrate. The barrier substrate may include two or more vapor deposition films on the second surface (or the surface of the second barrier resin layer or second surface resin layer) of the stretched substrate. Such a barrier substrate is better in terms of, for example, gas barrier properties. Specifically, the barrier substrate may include at least the stretched substrate, a third vapor deposition film, and a fourth vapor deposition film in this order or may include at least a sixth vapor deposition film, a fifth vapor deposition film, the stretched substrate, a third vapor deposition film, and a fourth vapor deposition film in this order, and may include additional vapor deposition films. A barrier coating layer may be provided on the fourth vapor deposition film. A barrier coating layer may be provided on the sixth vapor deposition film.

The fourth vapor deposition film may be in contact with the third vapor deposition film. The third vapor deposition film and the fourth vapor deposition film may be vapor deposition films constituting a multistage vapor deposition film. The sixth vapor deposition film may be in contact with the fifth vapor deposition film. The fifth vapor deposition film and the sixth vapor deposition film may be vapor deposition films constituting a multistage vapor deposition film. The thickness and/or composition of each vapor deposition film may be equal/identical to each other or may be different. A barrier coating layer may be provided on a multistage vapor deposition film.

The surface of the vapor deposition film has preferably undergone surface treatment as mentioned above. Such a vapor deposition film is superior in, for example, adhesion to the adjacent layer.

Examples of methods for forming the vapor deposition film include Physical Vapor Deposition (PVD) methods, such as vacuum deposition, sputtering, and ion plating, and Chemical Vapor Deposition (CVD) methods, such as plasma chemical vapor deposition, thermal chemical vapor deposition, and optical chemical vapor deposition. The vapor deposition film may be a composite film including two or more vapor deposition films of different types formed using both physical vapor deposition and chemical vapor deposition in combination.

As for the degree of vacuum in the deposition chamber, approximately 10⁻² to 10⁻⁸ mbar is preferred before oxygen introduction, and approximately 10⁻¹ to 10⁻⁶ mbar is preferred after oxygen introduction. The amount of oxygen introduced and other parameters vary depending on conditions such as the size of the deposition machine. For the oxygen introduced, inert gases, such as an argon gas, a helium gas, and a nitrogen gas, may be used as carrier gases, provided that they do not interfere with the process. The rate of transport of the target film on which the vapor deposition film is formed is, for example, 10 m/min or more and 800 m/min or less.

The vapor deposition film may be single-layer, formed through one deposition step, or may be multilayer, formed through multiple deposition steps. When the vapor deposition film is multilayer, each layer may be composed of identical components or may be composed of different components. Each layer may be formed using an identical method or may be formed using different methods.

In an embodiment, the stretched substrate includes a first barrier resin layer (a first surface resin layer) constituting the first surface and a second barrier resin layer (a second surface resin layer) constituting the second surface. In an embodiment, the first vapor deposition film is provided on the surface of the first surface resin layer, and the second vapor deposition film is provided on the surface of the second surface resin layer. In another embodiment, the vapor deposition film is provided on the surface of the second barrier resin layer and is not provided on the surface of the first barrier resin layer. Such a stretched substrate is superior in, for example, the formation, smoothness, and adhesion of the vapor deposition film(s), and the resulting barrier substrate is superior in, for example, gas barrier properties, specifically oxygen barrier properties and water vapor barrier properties. When the vapor deposition film(s) is metal deposition film(s), furthermore, the barrier substrate is superior in brightness.

### <Barrier Coating Layer>

The barrier substrate according to the present disclosure may further include at least one barrier coating layer on the vapor deposition film. That is, the barrier substrate may further include a barrier coating layer on the surface of the vapor deposition film on the side opposite the surface on the stretched substrate side. Such a barrier substrate is superior in, for example, oxygen barrier properties and water vapor barrier properties. When the vapor deposition film is composed of an inorganic oxide, such as aluminum oxide or silicon oxide, furthermore, the development of cracks in the vapor deposition film can be effectively reduced with it.

The barrier substrate includes, in an embodiment, a metal deposition film as a first vapor deposition film, a first barrier resin layer or first surface resin layer, a polyethylene layer, a second barrier resin layer or second surface resin layer, an inorganic oxide deposition film as a second vapor deposition film, and a barrier coating layer in this order.

The barrier substrate includes, in an embodiment, a barrier coating layer, an inorganic oxide deposition film as a first vapor deposition film, a first barrier resin layer or first surface resin layer, a polyethylene layer, a second barrier resin layer or second surface resin layer, and a metal deposition film as a second vapor deposition film in this order.

The barrier substrate includes, in an embodiment, a first barrier coating layer, an inorganic oxide deposition film as a first vapor deposition film, a first barrier resin layer or first surface resin layer, a polyethylene layer, a second barrier resin layer or second surface resin layer, an inorganic oxide deposition film as a second vapor deposition film, and a second barrier coating layer in this order.

The barrier substrate includes, in an embodiment, a first barrier resin layer or first surface resin layer, a polyethylene layer, a second surface resin layer, an inorganic oxide deposition film as the vapor deposition film, and a barrier coating layer in this order.

The barrier substrate may include two or more laminate films composed of a vapor deposition film and a barrier coating layer on the first surface (or the surface of the first barrier resin layer or first surface resin layer) of the stretched substrate. The barrier substrate may include two or more laminate films composed of a vapor deposition film and a barrier coating layer on the second surface (or the surface of the second barrier resin layer or second surface resin layer) of the stretched substrate. Such a barrier substrate is better in terms of, for example, gas barrier properties.

The barrier substrate may include a third vapor deposition film, a third barrier coating layer, a fourth vapor deposition film, and a fourth barrier coating layer in this order on the first surface (or the surface of the first barrier resin layer or first surface resin layer) of the stretched substrate. The barrier substrate may include a third vapor deposition film, a third barrier coating layer, a fourth vapor deposition film, and a fourth barrier coating layer in this order on the second surface (or the surface of the second barrier resin layer or second surface resin layer) of the stretched substrate.

The barrier substrate may include at least a sixth barrier coating layer, a sixth vapor deposition film, a fifth barrier coating layer, a fifth vapor deposition film, the stretched substrate, a third vapor deposition film, a third barrier coating layer, a fourth vapor deposition film, and a fourth barrier coating layer in this order and may include additional laminate films composed of a vapor deposition film and a barrier coating layer.

The thickness and/or composition of each vapor deposition film may be equal/identical to each other or may be different. The thickness and/or composition of each barrier coating layer may be equal/identical to each other or may be different.

In an embodiment, the barrier coating layer contains a gas barrier resin. Examples of gas barrier resins include ethylene-vinyl alcohol copolymers, polyvinyl alcohol, polyamides, polyvinylidene chloride, polyesters, polyether polyols, polyester polyols, polyurethanes, polyacrylonitrile, and (meth)acrylic resins.

The percentage of the gas barrier resin in the barrier coating layer is preferably more than 50% by mass, more preferably 60% by mass or more, even more preferably 70% by mass or more. Such a barrier coating layer is superior in, for example, gas barrier properties.

The barrier coating layer may contain additives as mentioned above.

The thickness of a barrier coating layer containing a gas barrier resin is preferably 0.01 µm or more, more preferably 0.1 µm or more, for gas barrier properties reasons. The thickness of a barrier coating layer containing a gas barrier resin is preferably 10 µm or less, more preferably 5 µm or less, for the workability of the barrier substrate and the recyclability of the packaging container. The thickness is, for example, 0.01 µm or more and 10 µm or less.

The barrier coating layer can be formed by, for example, dissolving or dispersing the materials, such as a gas barrier resin, in water or an appropriate organic solvent, applying the resulting coating liquid to the vapor deposition film, and drying the applied liquid.

In another embodiment, the barrier coating layer is a gas barrier coating film obtained by mixing a metal alkoxide, a water-soluble polymer, and optionally a silane coupling agent and optionally adding water, an organic solvent, and a sol-gel catalyst, applying the resulting gas barrier composition to the vapor deposition film, and drying the applied composition. The gas barrier coating film contains a hydrolysis and polycondensation product resulting from the hydrolysis and polycondensation of the metal alkoxide and other materials through the sol-gel process. By providing such a barrier coating layer on the vapor deposition film, gas barrier properties can be improved when the vapor deposition film is composed of an inorganic oxide. The development of cracks in the vapor deposition film, furthermore, can be effectively reduced.

Examples of metal alkoxides include alkoxysilanes, and specific examples include tetramethoxysilane, tetraethoxysilane, tetrapropoxysilane, and tetrabutoxysilane.

Examples of water-soluble polymers include hydroxyl-containing polymers, such as polyvinyl alcohol and ethylene-vinyl alcohol copolymers. Depending on the desired physical characteristics, such as oxygen barrier properties, water vapor barrier properties, water resistance, and weatherability, any one of polyvinyl alcohol or an ethylene-vinyl alcohol copolymer may be used, both may be used in combination, or a gas barrier coating film obtained using polyvinyl alcohol and a gas barrier coating film obtained using an ethylene-vinyl alcohol copolymer may be stacked. The amount of water-soluble polymer(s) used is preferably 5 parts by mass or more and 500 parts by mass or less per 100 parts by mass of the metal alkoxide.

The silane coupling agent can be a known organoalkoxysilane containing an organic reactive group. Organoalkoxysilanes having an epoxy group are preferred, with examples including γ-glycidoxypropyltrimethoxysilane, γ-glycidoxypropyltriethoxysilane, γ-glycidoxypropylmethyldiethoxysilane, and β-(3,4-epoxycyclohexyl)ethyltrimethoxysilane. The amount of silane coupling agent used is preferably 1 part by mass or more and 20 parts by mass or less per 100 parts by mass of the metal alkoxide.

The gas barrier composition may contain water, preferably in a proportion of 0.1 moles or more, more preferably 0.5 moles or more, preferably 100 moles or less, more preferably 60 moles or less, per mole of the metal alkoxide. By setting the amount of water equal to or greater than the lower limits, the oxygen barrier properties and water vapor barrier properties of the barrier substrate, for example, can be improved. By setting the amount of water equal to or smaller than the upper limits, the hydrolysis reaction, for example, can be performed rapidly.

The gas barrier composition may contain an organic solvent. Examples of organic solvents include methyl alcohol, ethyl alcohol, n-propyl alcohol, isopropyl alcohol, and n-butyl alcohol.

The sol-gel catalyst is preferably an acid or an amine compound.

Examples of methods for applying the gas barrier composition include application means such as gravure roll coating and other types of roll coating, spray coating, spin coating, dipping, a brush, bar coating, and an applicator.

In the following, an embodiment of a method for forming a gas barrier coating film will be described.

By mixing materials such as a metal alkoxide, a water-soluble polymer, a sol-gel catalyst, water, an organic solvent, and optionally a silane coupling agent, a gas barrier composition is prepared. Within the composition, a polycondensation reaction proceeds gradually. Using conventional methods, the composition is applied to the vapor deposition film and dried. Through this drying, the polycondensation of the metal alkoxide and the water-soluble polymer (and the silane coupling agent, if the composition contains a silane coupling agent) further proceeds, and a layer of a composite polymer is formed. Multiple composite polymer layers may be stacked by repeating this operation. For example, the applied composition is heated for 1 second or longer and 10 minutes or shorter, preferably at a temperature of 20°C or above, more preferably 50°C or above, even more preferably 70°C or above, and preferably at a temperature of 150°C or below, more preferably 120°C or below, even more preferably 100°C or below. Through this, a gas barrier coating film can be formed.

The thickness of the gas barrier coating film is preferably 0.01 µm or more, more preferably 0.05 µm or more, even more preferably 0.1 µm or more, and preferably is 100 µm or less, more preferably 50 µm or less, even more preferably 5 µm or less, still more preferably 2 µm or less, particularly preferably 1 µm or less. For example, the thickness is 0.01 µm or more and 100 µm or less. A barrier substrate including such a gas barrier coating film is superior in, for example, gas barrier properties, and, with such a barrier substrate, the development of cracks in a vapor deposition film composed of an inorganic oxide can be reduced. Such a barrier substrate, furthermore, is superior in the recyclability and workability of the packaging container.

### <Layer Configuration of the Barrier Base Material>

In the following, several examples will be presented for the layer configuration of the barrier substrate according to the present disclosure.

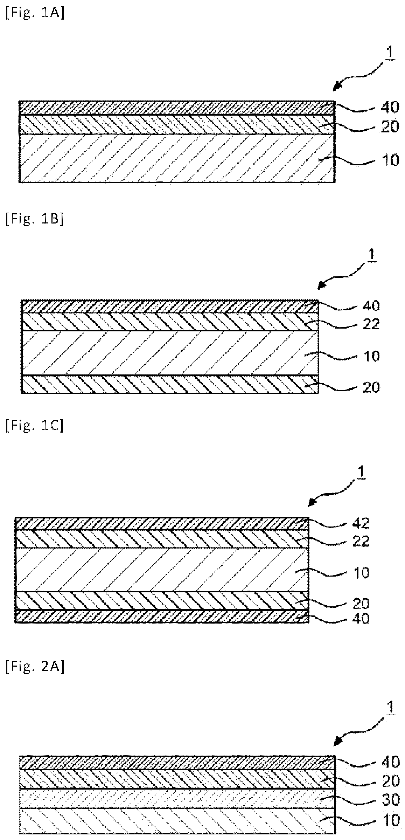

The barrier substrate 1 illustrated in Fig. 1A includes a polyethylene layer 10, a surface resin layer 20, and a vapor deposition film 40 in this order. The stretched substrate includes a polyethylene layer 10 and a surface resin layer 20 in this order.

The barrier substrate 1 illustrated in Fig. 1B includes a first surface resin layer 20, a polyethylene layer 10, a second surface resin layer 22, and a vapor deposition film 40 in this order. The stretched substrate includes a first surface resin layer 20, a polyethylene layer 10, and a second surface resin layer 22 in this order.

The barrier substrate 1 illustrated in Fig. 1C includes a first vapor deposition film 40, a first surface resin layer 20, a polyethylene layer 10, a second surface resin layer 22, and a second vapor deposition film 42 in this order. The stretched substrate includes a first surface resin layer 20, a polyethylene layer 10, and a second surface resin layer 22 in this order.

The barrier substrate 1 illustrated in Fig. 2A includes a polyethylene layer 10, an adhesive resin layer 30, a surface resin layer 20, and a vapor deposition film 40 in this order. The stretched substrate includes a polyethylene layer 10, an adhesive resin layer 30, and a surface resin layer 20 in this order.

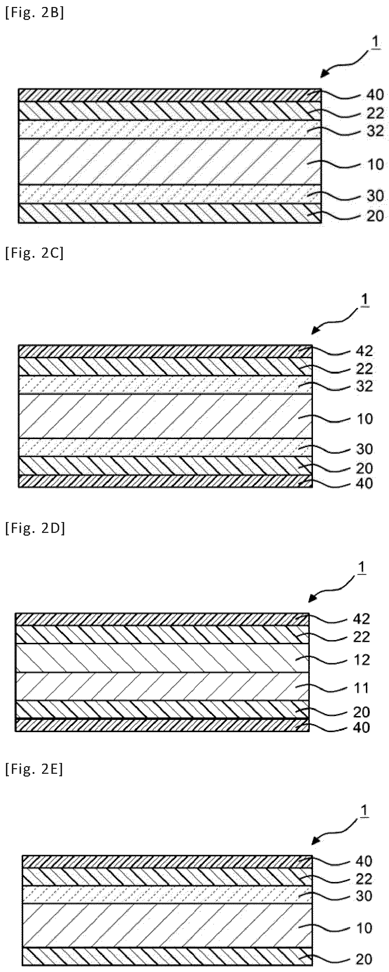

The barrier substrate 1 illustrated in Fig. 2B includes a first surface resin layer 20, a first adhesive resin layer 30, a polyethylene layer 10, a second adhesive resin layer 32, a second surface resin layer 22, and a vapor deposition film 40 in this order. The stretched substrate includes a first surface resin layer 20, a first adhesive resin layer 30, a polyethylene layer 10, a second adhesive resin layer 32, and a second surface resin layer 22 in this order.

The barrier substrate 1 illustrated in Fig. 2C includes a first vapor deposition film 40, a first surface resin layer 20, a first adhesive resin layer 30, a polyethylene layer 10, a second adhesive resin layer 32, a second surface resin layer 22, and a second vapor deposition film 42 in this order. The stretched substrate includes a first surface resin layer 20, a first adhesive resin layer 30, a polyethylene layer 10, a second adhesive resin layer 32, and a second surface resin layer 22 in this order.

The barrier substrate 1 illustrated in Fig. 2D includes a first vapor deposition film 40, a first surface resin layer 20, a first polyethylene layer 11, a second polyethylene layer 12, a second surface resin layer 22, and a second vapor deposition film 42 in this order. The stretched substrate includes a first surface resin layer 20, a first polyethylene layer 11, a second polyethylene layer 12, and a second surface resin layer 22 in this order.

The barrier substrate 1 illustrated in Fig. 2E includes a first surface resin layer 20, a polyethylene layer 10, an adhesive resin layer 30, a second surface resin layer 22, and a vapor deposition film 40 in this order. The stretched substrate includes a first surface resin layer 20, a polyethylene layer 10, an adhesive resin layer 30, and a second surface resin layer 22 in this order.

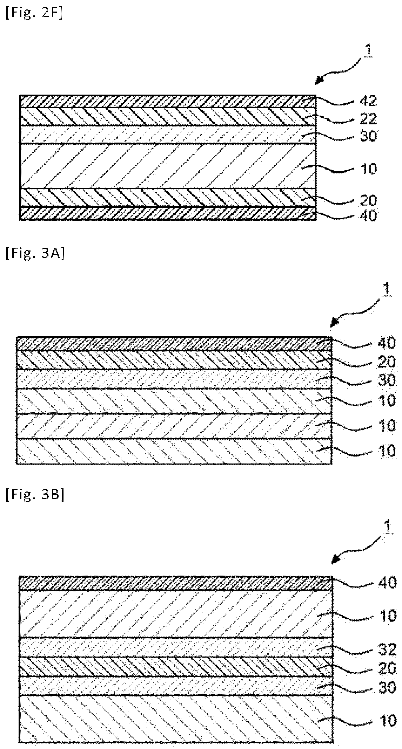

The barrier substrate 1 illustrated in Fig. 2F includes a first vapor deposition film 40, a first surface resin layer 20, a polyethylene layer 10, an adhesive resin layer 30, a second surface resin layer 22, and a second vapor deposition film 42 in this order. The stretched substrate includes a first surface resin layer 20, a polyethylene layer 10, an adhesive resin layer 30, and a second surface resin layer 22 in this order.

The barrier substrate 1 illustrated in Fig. 3A includes a first polyethylene layer 10, a second polyethylene layer 10, a third polyethylene layer 10, an adhesive resin layer 30, a surface resin layer 20, and a vapor deposition film 40 in this order.

The barrier substrate 1 illustrated in Fig. 3B includes a fourth polyethylene layer 10, a first adhesive resin layer 30, a barrier resin layer 20, a second adhesive resin layer 32, a fifth polyethylene layer 10, and a vapor deposition film 40 in this order.

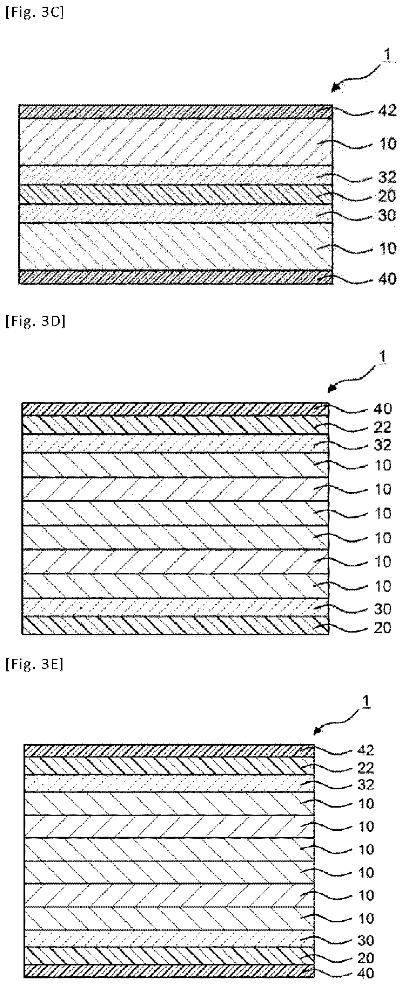

The barrier substrate 1 illustrated in Fig. 3C includes a first vapor deposition film 40, a fourth polyethylene layer 10, a first adhesive resin layer 30, a barrier resin layer 20, a second adhesive resin layer 32, a fifth polyethylene layer 10, and a second vapor deposition film 42 in this order.

The barrier substrate 1 illustrated in Fig. 3D includes a first surface resin layer 20, a first adhesive resin layer 30, a third-a polyethylene layer 10, a second-a polyethylene layer 10, a first-a polyethylene layer 10, a first-b polyethylene layer 10, a second-b polyethylene layer 10, a third-b polyethylene layer 10, a second adhesive resin layer 32, a second surface resin layer 22, and a vapor deposition film 40 in this order.

The barrier substrate 1 illustrated in Fig. 3E includes a first vapor deposition film 40, a first surface resin layer 20, a first adhesive resin layer 30, a third-a polyethylene layer 10, a second-a polyethylene layer 10, a first-a polyethylene layer 10, a first-b polyethylene layer 10, a second-b polyethylene layer 10, a third-b polyethylene layer 10, a second adhesive resin layer 32, a second surface resin layer 22, and a second vapor deposition film 42 in this order.

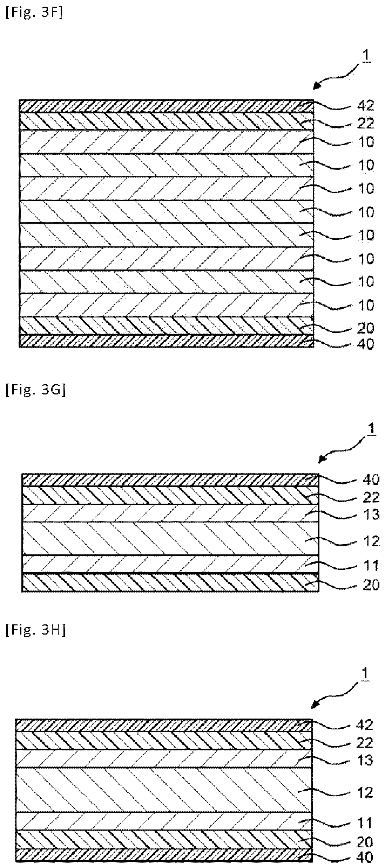

The barrier substrate 1 illustrated in Fig. 3F includes a first vapor deposition film 40, a first surface resin layer 20, a fourth-a polyethylene layer 10, a third-a polyethylene layer 10, a second-a polyethylene layer 10, a first-a polyethylene layer 10, a first-b polyethylene layer 10, a second-b polyethylene layer 10, a third-b polyethylene layer 10, a fourth-b polyethylene layer 10, a second surface resin layer 22, and a second vapor deposition film 42 in this order.

The barrier substrate 1 illustrated in Fig. 3G includes a first surface resin layer 20, a first polyethylene layer 11, a second polyethylene layer 12, a third polyethylene layer 13, a second surface resin layer 22, and a vapor deposition film 40 in this order. The stretched substrate includes a first surface resin layer 20, a first polyethylene layer 11, a second polyethylene layer 12, a third polyethylene layer 13, and a second surface resin layer 22 in this order.

The barrier substrate 1 illustrated in Fig. 3H includes a first vapor deposition film 40, a first surface resin layer 20, a first polyethylene layer 11, a second polyethylene layer 12, a third polyethylene layer 13, a second surface resin layer 22, and a second vapor deposition film 42 in this order.

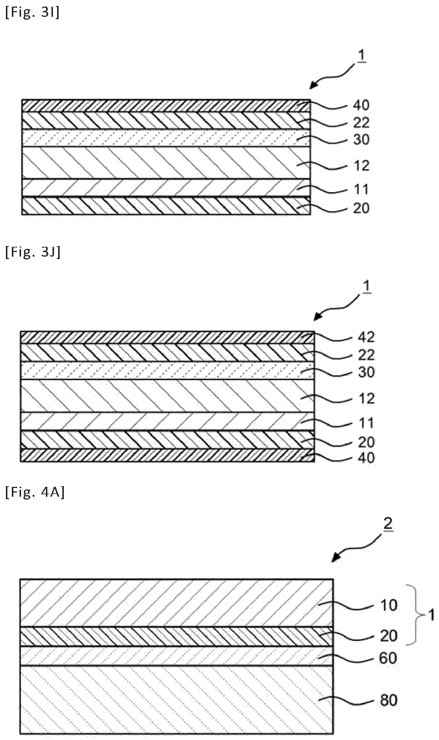

The barrier substrate 1 illustrated in Fig. 3I includes a first surface resin layer 20, a first polyethylene layer 11, a second polyethylene layer 12, an adhesive resin layer 30, a second surface resin layer 22, and a vapor deposition film 40 in this order. The stretched substrate includes a first surface resin layer 20, a first polyethylene layer 11, a second polyethylene layer 12, an adhesive resin layer 30, and a second surface resin layer 22 in this order.

The barrier substrate 1 illustrated in Fig. 3J includes a first vapor deposition film 40, a first surface resin layer 20, a first polyethylene layer 11, a second polyethylene layer 12, an adhesive resin layer 30, a second surface resin layer 22, and a second vapor deposition film 42 in this order.

In Figs. 1 to Figs. 3, the barrier substrate 1 may further include a barrier coating layer, not illustrated, on the (first) vapor deposition film 40. In Figs. 1 to Figs. 3, the barrier substrate 1 may further include a barrier coating layer, not illustrated, on the second vapor deposition film 42. In Figs. 1 to Figs. 3, a vapor deposition film may be provided solely on one surface of the stretched substrate.

### <Gas Barrier Properties of the Barrier Base Material>

The oxygen transmission rate (unit: cc/(m²·day·atm)) of the barrier substrate according to the present disclosure may be, for example, less than 30, may be less than 20, may be less than 10, may be less than 5.0, may be less than 3.0, may be less than 2.0, may be less than 1.0, may be less than 0.8, may be less than 0.5, may be less than 0.3, may be less than 0.2, or may be less than 0.1. The lower limit to the oxygen transmission rate may be, for example, 0.01, may be 0.05, or may be 0.1. The oxygen transmission rate is measured in an environment at a temperature of 23°C and a humidity of 90% RH according to JIS K7126-2: 2006.

The water vapor transmission rate (unit: g/(m²·day)) of the barrier substrate according to the present disclosure may be, for example, less than 10, may be less than 8.0, may be less than 5.0, may be less than 3.0, may be less than 2.0, may be less than 1.0, may be less than 0.8, may be less than 0.5, may be less than 0.3, or may be less than 0.2. The lower limit to the water vapor transmission rate may be, for example, 0.01, may be 0.05, or may be 0.1. The water vapor transmission rate is measured in an environment at a temperature of 40°C and a humidity of 90% RH according to JIS K7129-2: 2019.

### [Laminate]

A laminate according to the present disclosure includes at least:
a stretched substrate, printed substrate, or barrier substrate according to the present disclosure; and
at least one heat-sealing layer.

The laminate according to the present disclosure includes, in an embodiment, at least a first heat-sealing layer, a stretched substrate, printed substrate, or barrier substrate according to the present disclosure, and a second heat-sealing layer in this order.

The heat-sealing layer contains polyethylene as its main component.

The laminate according to the present disclosure is suitable for use as a packaging material. The laminate according to the present disclosure is suitable for use as, for example, a packaging material for forming the trunk of a tube container body. In that case, for example, the second heat-sealing layer is a sealant layer closer to the outer surface of the trunk, and the first heat-sealing layer is a sealant layer closer to the inner surface of the trunk. That is, the trunk includes the second heat-sealing layer, the barrier substrate, and the first heat-sealing layer in this order from the outside toward the inside of the trunk.

The laminate according to the present disclosure does not include, in an embodiment, aluminum foil. The laminate according to the present disclosure does not include, in an embodiment, a polyethylene terephthalate film or aluminum foil. Through this, the recyclability of the laminate according to the present disclosure and of a tube container body including this laminate can be improved.

The percentage of polyethylene across the entire laminate according to the present disclosure is preferably 80% by mass or more, more preferably 85% by mass or more, even more preferably 90% by mass or more, particularly preferably 95% by mass or more. Through this, for example, a monomaterialized packaging container can be produced using the laminate, through which the recyclability of the packaging container can be improved. The upper limit to the percentage of polyethylene is not particularly limited, but may be 99% by mass.

The total thickness of the laminate according to the present disclosure may be, in an embodiment, 40 µm or more, may be 60 µm or more, may be 80 µm or more, may be 100 µm or more, may be 120 µm or more, may be 140 µm or more, may be 400 µm or less, may be 350 µm or less, or may be 300 µm or less. For example, the total thickness is 40 µm or more and 400 µm or less. The total thickness of the laminate can be changed as appropriate, for example according to the intended use or form of the packaging container.

### <Base Material>

The laminate according to the present disclosure includes a stretched substrate, printed substrate, or barrier substrate according to the present disclosure. The laminate according to the present disclosure may include two or more stretched substrates. The laminate according to the present disclosure may include two or more printed substrates. The laminate according to the present disclosure may include two or more barrier substrates. The details of the stretched substrate, the printed substrate, and the barrier substrate are as described above, and their detailed descriptions are omitted here.

In a laminate that includes a stretched substrate and a heat-sealing layer, the orientation of the stretched substrate is not particularly limited. The stretched substrate may be positioned, in an embodiment, such that a first barrier resin layer or first surface resin layer faces the heat-sealing layer side (the inside of the packaging container) with a second barrier resin layer or second surface resin layer facing the side opposite the heat-sealing layer (the outside of the packaging container). That is, the laminate may include a second barrier resin layer or second surface resin layer, a polyethylene layer, a first barrier resin layer or first surface resin layer, and the heat-sealing layer in this order.

In a laminate that includes a barrier substrate and a heat-sealing layer, the orientation of the barrier substrate is not particularly limited.

In a laminate that includes a barrier substrate and a heat-sealing layer, the barrier substrate may be positioned such that a first barrier resin layer or first surface resin layer faces the heat-sealing layer side (the inside of the packaging container) with the vapor deposition film facing the side opposite the heat-sealing layer (the outside of the packaging container). That is, the laminate may include a vapor deposition film, a second barrier resin layer or second surface resin layer, a polyethylene layer, a first barrier resin layer or first surface resin layer, and the heat-sealing layer in this order.

In a laminate that includes a barrier substrate and a heat-sealing layer, the barrier substrate is preferably positioned such that a first vapor deposition film faces the heat-sealing layer side (the inside of the packaging container) with a second vapor deposition film facing the side opposite the heat-sealing layer (the outside of the packaging container). That is, the laminate according to the present disclosure preferably includes a second vapor deposition film, a second barrier resin layer or second surface resin layer, a polyethylene layer, a first barrier resin layer or first surface resin layer, a first vapor deposition film, and the heat-sealing layer in this order.

The laminate according to the present disclosure may further include a polyethylene stretched substrate.

A polyethylene stretched substrate is a polyethylene substrate that has undergone stretching treatment. The stretching treatment may be uniaxial orientation or may be biaxial orientation. The stretch ratio when stretching is performed in the longitudinal direction (the flow direction of the substrate, or the MD direction) is preferably 2 or greater, more preferably 3 or greater, preferably 10 or less, more preferably 7 or less. For example, this stretch ratio is 2 or greater and 10 or less. The stretch ratio when stretching is performed in the transverse direction (the direction perpendicular to the MD direction, or the TD direction) is preferably 2 or greater, more preferably 3 or greater, preferably 10 or less, more preferably 7 or less. For example, this stretch ratio is 2 or greater and 10 or less. The polyethylene stretched substrate is, for example, a uniaxially oriented polyethylene substrate, specifically a polyethylene substrate uniaxially oriented in the MD direction (an MDO substrate).

The polyethylene stretched substrate contains polyethylene as its main component. Examples of types of polyethylene include high-density polyethylene, medium-density polyethylene, low-density polyethylene, linear low-density polyethylene, and ultra-low-density polyethylene.

The polyethylene stretched substrate may contain biomass polyethylene.

The polyethylene stretched substrate may contain recycled polyethylene.

The polyethylene stretched substrate may contain additives as mentioned above.

The percentage of polyethylene in the polyethylene stretched substrate is preferably more than 50% by mass, more preferably 80% by mass or more, even more preferably 85% by mass or more, still more preferably 90% by mass or more, particularly preferably 95% by mass or more.

The polyethylene stretched substrate may have a single-layer structure or may have a multilayer structure.

The thickness of the polyethylene stretched substrate is preferably 5 µm or more, more preferably 8 µm or more, even more preferably 10 µm or more, for the strength and heat resistance of the laminate, and preferably is 300 µm or less, more preferably 100 µm or less, even more preferably 50 µm or less, for the workability of the laminate. For example, the thickness is 5 µm or more and 300 µm or less.

The polyethylene stretched substrate may have undergone surface treatment as mentioned above. Such a polyethylene stretched substrate is superior in, for example, adhesion to the layer adjacent to the substrate. On the surface of the polyethylene stretched substrate, furthermore, an anchor coating layer may be formed using an anchor coating agent known in the related art.

A laminate that includes a stretched substrate, printed substrate, or barrier substrate according to the present disclosure, a polyethylene stretched substrate, and a heat-sealing layer may include, for example, the polyethylene stretched substrate, the stretched substrate, printed substrate, or barrier substrate, and the heat-sealing layer in this order or may include the stretched substrate, printed substrate, or barrier substrate, the polyethylene stretched substrate, and the heat-sealing layer in this order.

### <Printed Layer>

The laminate according to the present disclosure may include at least one printed layer on one surface or both surfaces of the substrate described above, such as a stretched substrate, a barrier substrate, or a polyethylene stretched substrate. The laminate according to the present disclosure may include a printed layer on a second heat-sealing layer, which will be described later.

The printed layer includes an image. Examples of images include text, figures, patterns, symbols, and their combinations. The image may include text information, such as the product name, the name of the article in the packaging container, the manufacturer, and the raw material names. The image may be unicolored and plain (a so-called solid image).

The printed layer contains, in an embodiment, a coloring agent.

Examples of coloring agents include pigments, such as inorganic pigments and organic pigments, and dyes, such as acid dyes, direct dyes, disperse dyes, oil-soluble dyes, metal-containing oil-soluble dyes, and sublimation dyes. In addition, fluorescent materials, such as ultraviolet light-emitting materials, which produce fluorescence by absorbing ultraviolet radiation, and infrared light-emitting materials, which produce fluorescence by absorbing infrared radiation, are also examples of coloring agents.

The percentage of the coloring agent in the printed layer is preferably 1% by mass or more, more preferably 3% by mass or more, even more preferably 5% by mass or more. The percentage of the coloring agent in the printed layer is preferably 90% by mass or less, more preferably 70% by mass or less, even more preferably 50% by mass or less. The percentage is, for example, 1% by mass or more and 90% by mass or less.

The printed layer contains, in an embodiment, a resin material in addition to a coloring agent.

Examples of resin materials include thermoplastic resins, cured forms of thermosetting resins, and cured forms of energy-radiation curable compounds. Examples of thermoplastic resins include polyolefins, chlorinated polyolefins, polystyrene, (meth)acrylic resins, vinyl resins, acetal resins, polyesters, polyurethanes, polycarbonates, polyamides, polyimides, cellulose resins, petroleum resins, and fluoropolymers. Examples of thermosetting resins include phenolic resins, melamine resins, urea resins, epoxy resins, unsaturated polyesters, thermosetting polyurethanes, silicone resins, and (meth)acrylic thermosetting resins. Examples of energy radiation-curable compounds include polyfunctional (meth)acrylate compounds.

The percentage of the resin material in the printed layer is preferably 10% by mass or more, more preferably 30% by mass or more, even more preferably 50% by mass or more. The percentage of the resin material in the printed layer is preferably 99% by mass or less, more preferably 97% by mass or less, even more preferably 95% by mass or less. The percentage is, for example, 10% by mass or more and 99% by mass or less.

The printed layer may contain additives as specified above.

The printed layer can be formed using, for example, an ink composition that contains the components described above and optionally a solvent. Examples of methods for forming the printed layer include gravure printing, offset printing, flexography, screen printing, letterpress printing, and transfer printing. The printed layer may be formed by flexography for reduced environmental impacts. The printed layer may be formed using a biomass-derived ink for reduced environmental impacts.

The thickness of the printed layer is preferably 0.1 µm or more, more preferably 0.2 µm or more, even more preferably 0.3 µm or more, and preferably is 10 µm or less, more preferably 5 µm or less, even more preferably 3 µm or less. For example, the thickness is 0.1 µm or more and 10 µm or less.

### <Surface Protection Layer>

The laminate according to the present disclosure may include a surface protection layer on a printed layer provided on a second heat-sealing layer, which will be described later, to ensure good abrasion resistance and weatherability of the printed layer. The laminate according to the present disclosure preferably includes a surface protection layer that covers the entire area of a printed layer. For the visibility of the printed layer, the surface protection layer preferably has transparency in the visible light region and more preferably is colorless and transparent.

The surface protection layer contains, for example, a thermoplastic resin, a cured form of a thermosetting resin, or a cured form of an energy radiation-curable compound. Of these, it is particularly preferred that the surface protection layer contain a cured form of a thermosetting resin or a cured form of an energy radiation-curable compound, more preferably a cured form of an energy radiation-curable compound, because abrasion resistance and weatherability can be improved through this. The percentage of the cured form in all resin components in the surface protection layer is preferably 80% by mass or more, more preferably 90% by mass or more. Examples of methods for printing the surface protection layer include letterpress printing, flexography, gravure printing, offset printing, screen printing, inkjet printing, and thermal transfer printing.

The thickness of the surface protection layer is preferably 0.5 µm or more, more preferably 1 µm or more, preferably 15 µm or less, more preferably 10 µm or less. For example, the thickness is 0.5 µm or more and 15 µm or less. A laminate including such a surface protection layer is superior in abrasion resistance and weatherability.

### <Heat-Sealing Layer>

The laminate according to the present disclosure includes at least one heat-sealing layer.

The heat-sealing layer contains polyethylene as its main component. Through this, the monomaterialization of the packaging container can be sought. Such a packaging container is superior in recyclability; for example, there is no need to separate the substrate, such as the stretched substrate, printed substrate, or barrier substrate, and the heat-sealing layer after collecting a used packaging container.

Examples of types of polyethylene that can be contained in the heat-sealing layer include high-density polyethylene, medium-density polyethylene, low-density polyethylene, linear low-density polyethylene, and ultra-low-density polyethylene, with low-density polyethylene, linear low-density polyethylene, and ultra-low-density polyethylene being preferred from the viewpoint of heat sealability. As the polyethylene, biomass polyethylene and/or recycled polyethylene may be used for reduced environmental impacts.

When considered from the viewpoint of heat sealability, it is preferred that the heat-sealing layer contain low-density polyethylene and/or linear low-density polyethylene. When the heat-sealing layer contains low-density polyethylene and linear low-density polyethylene, the percentage (% by mass) of linear low-density polyethylene may be greater than the percentage (% by mass) of low-density polyethylene.

The melting point (Tm) of the polyethylene contained in the heat-sealing layer is preferably 90°C or above, more preferably 95°C or above, and preferably is 140°C or below, more preferably 130°C or below, for the balance between heat resistance and heat sealability. For example, the melting point is 90°C or above and 140°C or below.

The MFR of the polyethylene contained in the heat-sealing layer is preferably 0.1 g/10 minutes or more, more preferably 0.3 g/10 minutes or more, even more preferably 0.5 g/10 minutes or more, and preferably is 50 g/10 minutes or less, more preferably 30 g/10 minutes or less, even more preferably 10 g/10 minutes or less, for film formation and workability reasons. For example, the MFR is 0.1 g/10 minutes or more and 50 g/10 minutes or less.

The percentage of polyethylene in the heat-sealing layer is preferably more than 50% by mass, more preferably 80% by mass or more, even more preferably 90% by mass or more. A laminate including such a heat-sealing layer is superior in, for example, recyclability.

The heat-sealing layer may contain additives as specified above.

A form of the laminate according to the present disclosure may include at least a first heat-sealing layer as a heat-sealing layer as mentioned above, the stretched substrate, printed substrate, or barrier substrate according to the present disclosure, and a second heat-sealing layer as a heat-sealing layer as mentioned above in this order. Such a laminate is suitable for use as, for example, a packaging material for forming the trunk of a tube container body. In that case, the second heat-sealing layer is a sealant layer closer to the outer surface of the trunk, and the first heat-sealing layer is a sealant layer closer to the inner surface of the trunk. That is, the trunk includes the second heat-sealing layer, the stretched substrate, printed substrate, or barrier substrate, and the first heat-sealing layer in this order from the outside toward the inside of the trunk.

In a laminate in this form, the orientation of the stretched substrate is not particularly limited. In a laminate in this form, the stretched substrate may be positioned, in an embodiment, such that a first barrier resin layer or first surface resin layer faces the first heat-sealing layer side (the inside of the packaging container) with a second barrier resin layer or second surface resin layer facing the second heat-sealing layer side (the outside of the packaging container). That is, a laminate in this form may include a second heat-sealing layer, a second barrier resin layer or second surface resin layer, a polyethylene layer, a first barrier resin layer or first surface resin layer, and a first heat-sealing layer in this order.

In a laminate in this form, the orientation of the barrier substrate is not particularly limited.

In an embodiment of the laminate according to the present disclosure, a first vapor deposition film is provided on the surface of a first barrier resin layer or first surface resin layer of the stretched substrate, and a second vapor deposition film is provided on the surface of a second barrier resin layer or second surface resin layer of the stretched substrate. In a laminate in this embodiment, the barrier substrate may be positioned such that a first vapor deposition film faces the first heat-sealing layer side with a second vapor deposition film facing the second heat-sealing layer side. That is, a laminate in this embodiment may include a second heat-sealing layer, a second vapor deposition film, a second barrier resin layer or second surface resin layer, a polyethylene layer, a first barrier resin layer or first surface resin layer, a first vapor deposition film, and a first heat-sealing layer in this order.

In an embodiment of the laminate according to the present disclosure, the vapor deposition film is provided on the surface of a second barrier resin layer or second surface resin layer of the stretched substrate and is not provided on the surface of a first barrier resin layer or first surface resin layer of the stretched substrate. In a laminate in this embodiment, the barrier substrate may be positioned such that a first barrier resin layer or first surface resin layer faces the first heat-sealing layer side with the vapor deposition film facing the second heat-sealing layer side. That is, a laminate in this embodiment may include a second heat-sealing layer, a vapor deposition film, a second barrier resin layer or second surface resin layer, a polyethylene layer, a first barrier resin layer or first surface resin layer, and a first heat-sealing layer in this order.

The first heat-sealing layer contains polyethylene as its main component. The second heat-sealing layer contains polyethylene as its main component. The polyethylene contained in the first heat-sealing layer and the polyethylene contained in the second heat-sealing layer may be identical or may be different. The first heat-sealing layer and the second heat-sealing layer can each melt and fuse together upon heating.

The heat-sealing layer may have a single-layer structure or may have a multilayer structure.

The first and second heat-sealing layers may have a single-layer structure or may have a multilayer structure.

The heat-sealing layer, such as the first and second heat-sealing layers, includes, in an embodiment, a layer containing linear low-density polyethylene as its main component, a layer containing high-density polyethylene as its main component, and a layer containing linear low-density polyethylene as its main component in this order. Such a heat-sealing layer is superior in the balance between heat sealability and rigidity.

The thickness of the heat-sealing layer may be 10 µm or more, may be 20 µm or more, may be 30 µm or more, may be 50 µm or more, may be 60 µm or more, may be 70 µm or more, or may be 80 µm or more for heat sealability and the recyclability of the packaging container. The thickness of the heat-sealing layer may be 300 µm or less, may be 200 µm or less, or may be 150 µm or less for the workability of the laminate. The thickness of the heat-sealing layer is, for example, 10 µm or more and 300 µm or less. The thickness of the first and second heat-sealing layers, too, preferably falls within the above ranges, each independently. The thickness of the heat-sealing layer can be changed as appropriate, for example according to the intended use or form of the packaging container. In the case of a sachet, the thickness of the heat-sealing layer may be, for example, 20 µm or more and 60 µm or less, but is not particularly limited. In the case of a stand-up pouch, the thickness of the heat-sealing layer may be, for example, 60 µm or more and 150 µm or less, but is not particularly limited. In the case of a tube container, the thickness of the heat-sealing layer may be, for example, 50 µm or more, may be 60 µm or more, may be 70 µm or more, or may be 80 µm or more, but is not particularly limited.

The heat-sealing layer is preferably a cast resin film for heat sealability reasons. More preferably, the heat-sealing layer is a cast coextruded resin film, with each layer constituting the heat-sealing layer being a coextruded resin layer. This resin film can be produced by utilizing, for example, T-die casting or inflation. "Cast film" is a concept that does not only represent a completely unstretched film but also encompasses a film that is slightly stretched due to the tension applied during film formation.

For example, a cast resin film corresponding to the heat-sealing layer may be placed on the stretched substrate, printed substrate, or barrier substrate, optionally with a bonding layer interposed therebetween, or polyethylene or its resin composition may be melted and extruded onto the stretched substrate, printed substrate, or barrier substrate to form the heat-sealing layer. In the latter case, a bonding layer does not need to be provided. Examples of bonding layers include bonding layers such as an adhesive agent layer and an extruded resin layer, which will be described later.

### <Bonding Layer>

The laminate according to the present disclosure may include a bonding layer between any layers, for example between the substrate, such as the stretched substrate, printed substrate, or barrier substrate, and the heat-sealing layer. Such a laminate is superior in, for example, adhesion between the substrate and the heat-sealing layer.

The laminate according to the present disclosure may include, for example, the stretched substrate, printed substrate, or barrier substrate according to the present disclosure, a bonding layer, and the heat-sealing layer in this order, may include a polyethylene stretched substrate, a second bonding layer, the stretched substrate, printed substrate, or barrier substrate according to the present disclosure, a first bonding layer, and the heat-sealing layer in this order, or may include the stretched substrate, printed substrate, or barrier substrate according to the present disclosure, a second bonding layer, a polyethylene stretched substrate, a first bonding layer, and the heat-sealing layer in this order. The laminate according to the present disclosure may include, for example, a second heat-sealing layer, a second bonding layer, the stretched substrate, printed substrate, or barrier substrate according to the present disclosure, a first bonding layer, and a first heat-sealing layer in this order.

The laminate according to the present disclosure includes, in an embodiment, a first heat-sealing layer, a first adhesive agent layer, the barrier substrate, a second adhesive agent layer, and a second heat-sealing layer in this order. Such a laminate is superior in, for example, adhesion between the barrier substrate and the heat-sealing layers.

The laminate according to the present disclosure includes, in an embodiment, a first heat-sealing layer, a first extruded resin layer, the barrier substrate, a second extruded resin layer, and a second heat-sealing layer in this order. Such a laminate is superior in, for example, adhesion between the barrier substrate and the heat-sealing layers.

The bonding layer may be, in an embodiment, an adhesive agent layer, which is composed of an adhesive. The adhesive may be any of a one-component adhesive, a two-component adhesive, or a non-curing adhesive. The adhesive may be a solventless adhesive or may be a solvent-based adhesive. Of these, a solvent-based adhesive is particularly preferred because it offers better resistance to contents.

Examples of solventless adhesives, or solventless lamination adhesives, include polyether adhesives, polyester adhesives, silicone adhesives, epoxy adhesives, and urethane adhesives. Of these, urethane adhesives are particularly preferred, with two-component urethane adhesives being more preferred.

Examples of solvent-based adhesives include rubber adhesives, vinyl adhesives, olefin adhesives, silicone adhesives, epoxy adhesives, phenolic adhesives, and urethane adhesives. Of these, urethane adhesives are particularly preferred, with two-component urethane adhesives being more preferred.

The laminate according to the present disclosure may be, in an embodiment, manufactured by joining the stretched substrate, printed substrate, or barrier substrate, optionally a polyethylene stretched substrate, and a resin film corresponding to the heat-sealing layer by solventless lamination, in which a solventless adhesive is used, or may be manufactured by joining them together using dry lamination, in which a solvent-based adhesive is used.

The adhesive agent layer can be formed by, for example, applying an adhesive, for example to the stretched substrate, printed substrate, or barrier substrate, using a method such as direct gravure roll coating, gravure roll coating, kiss coating, reverse roll coating, fountain coating, or transfer roll coating and drying the applied adhesive.

The thickness of the adhesive agent layer may be 0.1 µm or more, may be 0.2 µm or more, may be 0.5 µm or more, may be 10 µm or less, may be 8 µm or less, or may be 6 µm or less. For example, the thickness is 0.1 µm or more and 10 µm or less. The thickness of the adhesive agent layer may be 2 µm or less.

The bonding layer may be, in an embodiment, an adhesive resin layer containing a thermoplastic resin or may be an extruded resin layer containing a thermoplastic resin. Examples of thermoplastic resins include high-density polyethylene, medium-density polyethylene, high-pressure low-density polyethylene, linear low-density polyethylene, ultra-low-density polyethylene, ethylene-vinyl acetate copolymers, ethylene-(meth)acrylic acid copolymers, ethylene-methyl (meth)acrylate copolymers, ethylene-ethyl (meth)acrylate copolymers, ethylene-maleic acid copolymers, ionomer resins, and resins obtained by grafting or copolymerizing a polyolefin with an unsaturated carboxylic acid, an unsaturated carboxylic anhydride, or an ester monomer. The thermoplastic resin may be a fossil fuel-derived material or may be a biomass-derived material, or both of them may be used.

The extruded resin layer is preferably an extruded polyethylene layer. Through this, the percentage of polyethylene in the laminate can be increased compared to when a known non-polyethylene adhesive (e.g., a two-component polyurethane adhesive) is used. Through this, the recyclability of the laminate can be improved.

Examples of types of polyethylene that can be contained in the extruded polyethylene layer include high-density polyethylene, medium-density polyethylene, low-density polyethylene, linear low-density polyethylene, and ultra-low-density polyethylene. Of these, low-density polyethylene, linear low-density polyethylene, and ultra-low-density polyethylene are particularly preferred from the viewpoint of interlayer adhesion, and low-density polyethylene is more preferred.

The extruded polyethylene layer may contain, in an embodiment, a polyolefin plastomer and acid group-containing polyethylene. The percentage of the polyolefin plastomer in the extruded polyethylene layer is, for example, 60% by mass or more and 80% by mass or less, and the percentage of the acid group-containing polyethylene is, for example, 20% by mass or more and 40% by mass or less. Through this, the melting temperature during melt extrusion can be lowered, and thus damage to the vapor deposition film in the case of a barrier substrate can be reduced. The gas barrier properties based on the vapor deposition film, therefore, can be maintained, and the adhesion between the vapor deposition film and the extruded polyethylene layer can also be improved.

Examples of polyolefin plastomers include a polyethylene plastomer. The details of a polyethylene plastomer are as described above, and their descriptions are omitted here.

Examples of types of acid group-containing polyethylene include copolymers of ethylene, an unsaturated carboxylic acid or its acid anhydride, and additional monomers as desired, as well as resins obtained by grafting polyethylene with an unsaturated carboxylic acid or its acid anhydride. Examples of unsaturated carboxylic acids include monocarboxylic acids, such as (meth)acrylic acid, and dicarboxylic acids, such as maleic acid. Examples of additional monomers include (meth)acrylates.

In the acid-group containing polyethylene, the percentage of constituent units derived from an unsaturated carboxylic acid or its acid anhydride may be, for example, 0.1% by mass or more, may be 1% by mass or more, may be 5% by mass or more, may be 25% by mass or less, may be 20% by mass or less, or may be 15% by mass or less. For example, the percentage is 0.1% by mass or more and 25% by mass or less. In the acid-group containing polyethylene, the percentage of ethylene-derived constituent units may be, for example, more than 50% by mass, may be 60% by mass or more, may be 95% by mass or less, or may be 90% by mass or less. For example, the percentage is more than 50% by mass and 95% by mass or less. These percentages are measured by NMR.

The density of the acid group-containing polyethylene may be 0.905 g/cm³ or more, may be 0.910 g/cm³ or more, may be 0.940 g/cm³ or less, or may be 0.930 g/cm³ or less. For example, the density may be 0.905 g/cm³ or more and 0.940 g/cm³ or less.

Examples of types of acid group-containing polyethylene include ethylene-(meth)acrylic acid copolymers and ethylene-(meth)acrylic acid-(meth)acrylate copolymers, such as ethylene-(meth)acrylic acid-butyl (meth)acrylate copolymers.

The MFR of the polyethylene contained in the extruded polyethylene layer is preferably 1 g/10 minutes or more, more preferably 2 g/10 minutes or more, even more preferably 3 g/10 minutes or more, and preferably is 50 g/10 minutes or less, more preferably 30 g/10 minutes or less, even more preferably 20 g/10 minutes or less, for film formation and workability reasons. For example, the MFR is 1 g/10 minutes or more and 50 g/10 minutes or less.

The melting point (Tm) of the polyethylene contained in the extruded polyethylene layer is preferably 140°C or below, more preferably 130°C or below, even more preferably 120°C or below, for the balance between heat resistance and bonding. The melting point may be 100°C or above; for example, the melting point is 100°C or above and 140°C or below.

The extruded polyethylene layer may contain biomass polyethylene.

The extruded polyethylene layer may contain recycled polyethylene.

The extruded polyethylene layer may contain additives as mentioned above.

The percentage of polyethylene in the extruded polyethylene layer is preferably 80% by mass or more, more preferably 90% by mass or more, even more preferably 95% by mass or more. With such a configuration, bonding and recyclability, for example, can be improved.

The thickness of the extruded polyethylene layer is preferably 5 µm or more, more preferably 10 µm or more, for interlayer adhesion reasons, and preferably is 30 µm or less, more preferably 25 µm or less, for reduced production cost of the laminate and improved productivity in its manufacture. For example, the thickness is 5 µm or more and 30 µm or less.

The extruded polyethylene layer may be formed by, for example, melting polyethylene or a resin composition containing polyethylene and extruding it onto, for example, the stretched substrate, printed substrate, or barrier substrate. The melting temperature during this is preferably 260°C or above, more preferably 265°C or above, even more preferably 280°C or above, still more preferably 290°C or above, and preferably is 340°C or below, more preferably 335°C or below. For example, the melting temperature is 260°C or above and 340°C or below.

On the surface of a barrier substrate on which an extruded resin layer is to be formed, an anchor coating layer may optionally be provided. The anchor coating layer is formed using an anchor coating agent. Examples of anchor coating agents include polyurethane, polyolefin, or epoxy-resin anchor coating agents. The thickness of the anchor coating layer is, for example, 0.05 µm or more and 3 µm or less.

### <Layer Configuration of the Laminate>

In the following, several examples will be presented for the layer configuration of the laminate according to the present disclosure.

The laminate 2 illustrated in Fig. 4A includes a stretched substrate 1, a bonding layer 60, and a heat-sealing layer 80 in this order. Specifically, the laminate 2 includes a polyethylene layer 10, a barrier resin layer 20, a bonding layer 60, and a heat-sealing layer 80 in this order. The laminate 2 may further include a printed layer, not illustrated; for example, it may further include a printed layer on the polyethylene layer 10 or on the barrier resin layer 20 in the stretched substrate 1.

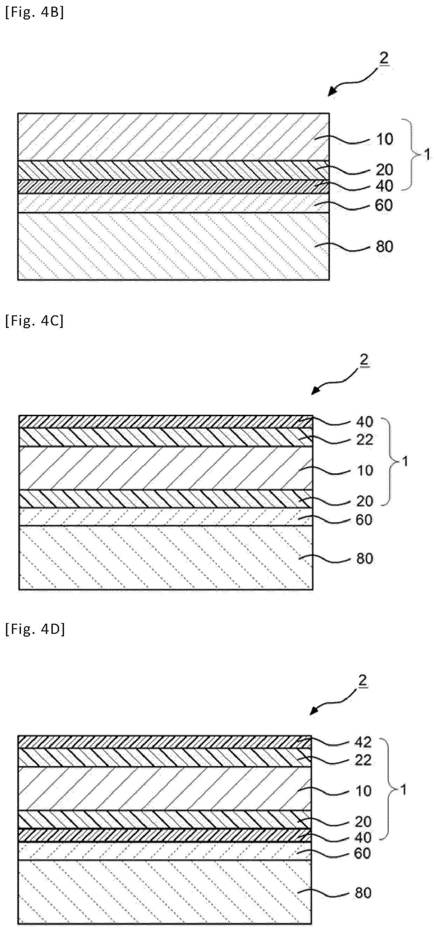

The laminate 2 illustrated in Fig. 4B includes a barrier substrate 1, a bonding layer 60, and a heat-sealing layer 80 in this order. Specifically, the laminate 2 includes a polyethylene layer 10, a barrier resin layer 20, a vapor deposition film 40, a bonding layer 60, and a heat-sealing layer 80 in this order. The laminate 2 may further include a printed layer, not illustrated; for example, it may further include a printed layer on the polyethylene layer 10 or on the vapor deposition film 40 in the barrier substrate 1.

The laminate 2 illustrated in Fig. 4C includes a barrier substrate 1, a bonding layer 60, and a heat-sealing layer 80 in this order. Specifically, the laminate 2 includes a vapor deposition film 40, a second barrier resin layer 22, a polyethylene layer 10, a first barrier resin layer 20, a bonding layer 60, and a heat-sealing layer 80 in this order. The laminate 2 may further include a printed layer, not illustrated; for example, it may further include a printed layer on the vapor deposition film 40 or on the first barrier resin layer 20 in the barrier substrate 1.

The laminate 2 illustrated in Fig. 4D includes a barrier substrate 1, a bonding layer 60, and a heat-sealing layer 80 in this order. Specifically, the laminate 2 includes a second vapor deposition film 42, a second barrier resin layer 22, a polyethylene layer 10, a first barrier resin layer 20, a first vapor deposition film 40, a bonding layer 60, and a heat-sealing layer 80 in this order. The laminate 2 may further include a printed layer, not illustrated; for example, it may further include a printed layer on the first vapor deposition film 40 or on the second vapor deposition film 42 in the barrier substrate 1.

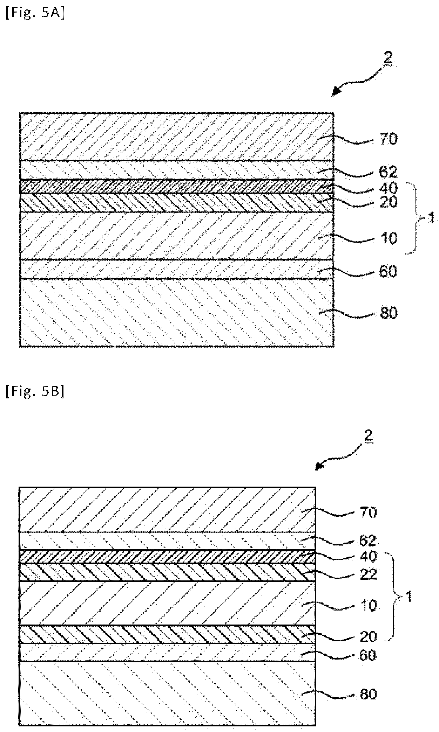

The laminate 2 illustrated in Fig. 5A includes a polyethylene stretched substrate 70, a second bonding layer 62, a barrier substrate 1, a first bonding layer 60, and a heat-sealing layer 80 in this order. Specifically, the laminate 2 includes a polyethylene stretched substrate 70, a second bonding layer 62, a vapor deposition film 40, a barrier resin layer 20, a polyethylene layer 10, a first bonding layer 60, and a heat-sealing layer 80 in this order. The laminate 2 may further include a printed layer, not illustrated; for example, it may further include a printed layer on the surface of the polyethylene stretched substrate 70 closer to the barrier substrate 1. A laminate having such a configuration is suitable as, for example, a packaging material for forming a stand-up pouch.

The laminate 2 illustrated in Fig. 5B includes a polyethylene stretched substrate 70, a second bonding layer 62, a barrier substrate 1, a first bonding layer 60, and a heat-sealing layer 80 in this order. Specifically, the laminate 2 includes a polyethylene stretched substrate 70, a second bonding layer 62, a vapor deposition film 40, a second barrier resin layer 22, a polyethylene layer 10, a first barrier resin layer 20, a first bonding layer 60, and a heat-sealing layer 80 in this order. The laminate 2 may further include a printed layer, not illustrated; for example, it may further include a printed layer on the surface of the polyethylene stretched substrate 70 closer to the barrier substrate 1. A laminate having such a configuration is suitable as, for example, a packaging material for forming a stand-up pouch.

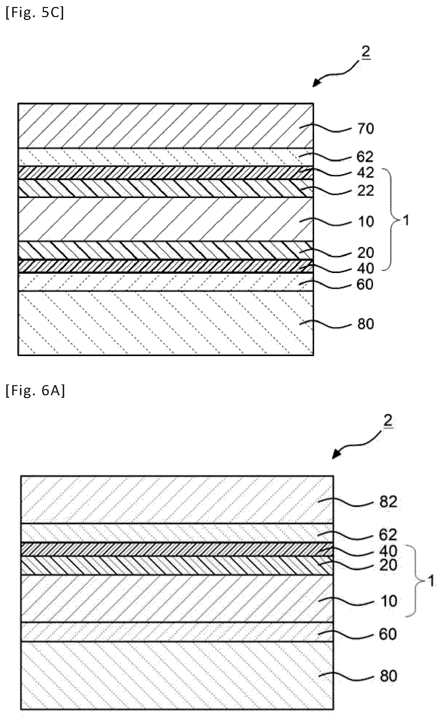

The laminate 2 illustrated in Fig. 5C includes a polyethylene stretched substrate 70, a second bonding layer 62, a barrier substrate 1, a first bonding layer 60, and a heat-sealing layer 80 in this order. Specifically, the laminate 2 includes a polyethylene stretched substrate 70, a second bonding layer 62, a second vapor deposition film 42, a second barrier resin layer 22, a polyethylene layer 10, a first barrier resin layer 20, a first vapor deposition film 40, a first bonding layer 60, and a heat-sealing layer 80 in this order. The laminate 2 may further include a printed layer, not illustrated; for example, it may further include a printed layer on the surface of the polyethylene stretched substrate 70 closer to the barrier substrate 1. A laminate having such a configuration is suitable as, for example, a packaging material for forming a stand-up pouch.

The laminate 2 illustrated in Fig. 6A includes a second heat-sealing layer 82, a second bonding layer 62, a barrier substrate 1, a first bonding layer 60, and a first heat-sealing layer 80 in this order. Specifically, the laminate 2 includes a second heat-sealing layer 82, a second bonding layer 62, a vapor deposition film 40, a barrier resin layer 20, a polyethylene layer 10, a first bonding layer 60, and a first heat-sealing layer 80 in this order. The laminate 2 may further include a printed layer, not illustrated; for example, it may further include a printed layer on the surface of the second heat-sealing layer 82. A laminate having such a configuration is suitable as, for example, a packaging material for forming the trunk of a tube container body.

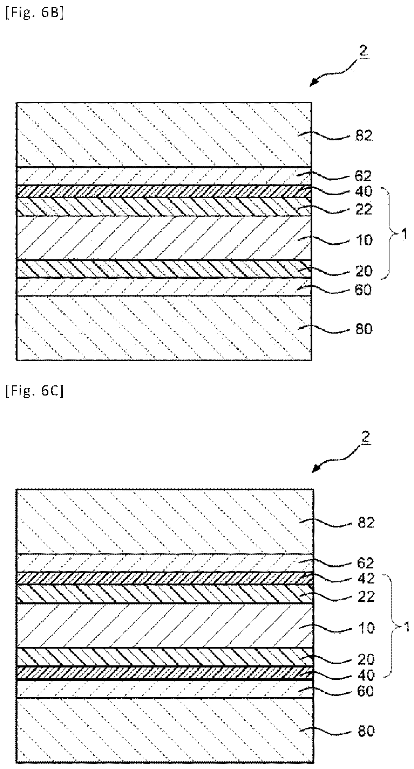

The laminate 2 illustrated in Fig. 6B includes a second heat-sealing layer 82, a second bonding layer 62, a barrier substrate 1, a first bonding layer 60, and a first heat-sealing layer 80 in this order. Specifically, the laminate 2 includes a second heat-sealing layer 82, a second bonding layer 62, a vapor deposition film 40, a second barrier resin layer 22, a polyethylene layer 10, a first barrier resin layer 20, a first bonding layer 60, and a first heat-sealing layer 80 in this order. The laminate 2 may further include a printed layer, not illustrated; for example, it may further include a printed layer on the surface of the second heat-sealing layer 82. A laminate having such a configuration is suitable as, for example, a packaging material for forming the trunk of a tube container body.

The laminate 2 illustrated in Fig. 6C includes a second heat-sealing layer 82, a second bonding layer 62, a barrier substrate 1, a first bonding layer 60, and a first heat-sealing layer 80 in this order. Specifically, the laminate 2 includes a second heat-sealing layer 82, a second bonding layer 62, a second vapor deposition film 42, a second barrier resin layer 22, a polyethylene layer 10, a first barrier resin layer 20, a first vapor deposition film 40, a first bonding layer 60, and a first heat-sealing layer 80 in this order. The laminate 2 may further include a printed layer, not illustrated; for example, it may further include a printed layer on the surface of the second heat-sealing layer 82. A laminate having such a configuration is suitable as, for example, a packaging material for forming the trunk of a tube container body.

In Figs. 4 to Figs. 6, the barrier substrate 1 may further include a barrier coating layer, not illustrated, on the (first) vapor deposition film 40. In Figs. 4 to Figs. 6, the barrier substrate 1 may further include a barrier coating layer, not illustrated, on the second vapor deposition film 42. In Figs. 4 to Figs. 6, the orientation of the barrier substrate 1 may be opposite. In Figs. 4 to Figs. 6, the laminate 2 may include a stretched substrate or may include a barrier substrate that includes a vapor deposition film solely on one surface of the stretched substrate, instead of the barrier substrate 1. In Figs. 4 to Figs. 6, the bonding layer 60 may be, for example, an adhesive agent layer or may be an extruded resin layer.

### <Gas Barrier Properties of the Laminate>

The oxygen transmission rate of the laminate according to the present disclosure is preferably 3.0 cc/(m²·day·atm) or less, more preferably 2.0 cc/(m²·day·atm) or less, even more preferably 1.0 cc/(m²·day·atm)or less, particularly preferably 0.5 cc/(m²·day·atm) or less, 0.3 cc/(m²·day·atm) or less, or 0.1 cc/(m²·day·atm) or less. The lower limit to the oxygen transmission rate may be, for example, 0.01 cc/(m²·day·atm). The oxygen transmission rate is measured in an environment at a temperature of 23°C and a humidity of 90% RH according to JIS K7126-2: 2006.

The water vapor transmission rate of the laminate according to the present disclosure may be, for example, 10 g/(m²·day) or less. Preferably, the water vapor transmission rate is 3.0 g/(m²·day) or less, more preferably 2.0 g/(m²·day) or less, even more preferably 1.0 g/(m²·day)or less, particularly preferably 0.5 g/(m²·day) or less or 0.3 g/(m²·day) or less. The lower limit to the water vapor transmission rate may be, for example, 0.01 g/(m²·day) or may be 0.05 g/(m²·day). The water vapor transmission rate is measured in an environment at a temperature of 40°C and a humidity of 90% RH according to JIS K7129-2: 2019.

### [Packaging Container]

The laminate according to the present disclosure is suitable for use in packaging material applications. Packaging materials are used to produce packaging containers. By using at least the laminate according to the present disclosure, packaging containers superior in gas barrier properties and aroma retention can be manufactured.

Examples of packaging containers include packaging bags, tube containers, and lidded containers.

Examples of packaging containers include packaging bags in various forms, such as the stand-up pouch type, the side-seal type, the two-side-seal type, the three-side-seal type, the four-side-seal type, the center-seal type, the pillow-seal type, the pleated-seal type, the flat-bottom-seal type, the square-bottom- seal type, and the gusset type. A packaging bag may be, for example, a sachet or may be a zipper bag. A packaging bag may be a refill pouch, in which liquid, powder, or other contents to be placed into a container, such as a bottle, for replacement are contained, a stand-up pouch in particular. A packaging bag may be, for example, a flexible packaging bag.

A packaging container according to the present disclosure includes a laminate according to the present disclosure.

A packaging container according to the present disclosure has, for example:
one or more laminates according to the present disclosure;
a seal portion in which surfaces of the heat-sealing layer of the laminate are joined together; and
a holding portion in which the contents are contained.

The seal portion includes inner edges that define the holding portion.

Examples of methods for forming the seal portion include heat sealing, in which the heat-sealing layer of the laminate is melted, for example by heating, and surfaces of the heat-sealing layer are fused together. Specific examples include bar sealing, revolving roller sealing, belt sealing, impulse sealing, radiofrequency sealing, and ultrasonic sealing. For example, a packaging bag can be sealed by placing the contents into the packaging bag and then heat-sealing the opening of the packaging bag.

A packaging bag may include an easy-open portion. Examples of easy-open portions include a notch portion, which serves as a starting point for tearing the packaging bag, and a half-cut line, formed using laser machining, a cutting knife, or other methods as a guideline during the tearing of the packaging bag.

In an embodiment, the laminate according to the present disclosure is used as the lid of a lidded container. A lidded container includes a container body having a holding portion and a lid joined (heat-sealed) to the container body so as to seal the holding portion. In this configuration, the lid, or the heat-sealing layer of the laminate, and the container body have been heat-sealed together. Examples of shapes of the container body include a cup shape and a bottomed cylindrical shape. The container body is, for example, made of polystyrene, made of polypropylene, made of polyethylene, or made of paper.

Examples of contents that can be held in the packaging container include liquids, solids, powders, and gels. The contents may be food or a beverage or may be an inedible article, such as a chemical product, a cosmetic product, a pharmaceutical product, a metal component, or an electronic component. Examples of contents include shampoo, hair rinse, hair conditioner, hand soap, body soap, air freshener, a chemical deodorizer, a physical deodorizer, mothballs, fabric softener, and detergent; sauce, soy sauce, dressing, cooking oil, mayonnaise, ketchup, syrup, cooking liquor, and other liquid or viscous seasonings and ingredients; a liquid beverage, jelly drink, liquid soup, powder soup, instant food, and other foods and beverages; cream; toothpaste; and a metal component and an electronic component. The packaging container according to the present disclosure is, in an embodiment, superior in aroma retention as stated above, despite being monomaterialized. Even when contents with a strong smell, such as shampoo, hair rinse, hair conditioner, fabric softener, or detergent, are packed in the packaging container, therefore, the leakage of the smell can be limited. As the contents of a tube container, for example, toothpaste is particularly preferred.

In an embodiment, the packaging container can be produced by folding a laminate according to the present disclosure in two, for example to position the stretched substrate, printed substrate, or barrier substrate outside and the heat-sealing layer inside, aligning the two halves, and heat-sealing, for example, their edges. In another embodiment, the packaging container can be produced by aligning multiple laminates according to the present disclosure such that their heat-sealing layers face each other and heat-sealing, for example, their edges. All of the packaging container may be composed of the laminate(s), or part of the packaging container may be composed of the laminate(s).

A stand-up pouch includes, in an embodiment, a trunk composed of a side sheet and a bottom composed of a bottom sheet. By virtue of the bottom sheet retaining the shape of the side sheet, self-standability is imparted to the pouch, and thus it can be made as a pouch of stand-up type. Inside the region surrounded by the side sheet and the bottom sheet, the holding portion for holding contents is created. For a stand-up pouch, only the side sheet may be a laminate according to the present disclosure, only the bottom sheet may be a laminate according to the present disclosure, or both of the side sheet and the bottom sheet may be laminates according to the present disclosure.

In an embodiment, the side sheet can be formed by shaping a laminate according to the present disclosure into a bag such that its heat-sealing layer becomes the innermost layer. In an embodiment, the side sheet can be formed by preparing two laminates according to the present disclosure, aligning them such that their heat-sealing layers face each other, and shaping the laminates into a bag by heat-sealing both side edges.

In another embodiment, the side sheet can be formed by preparing two laminates according to the present disclosure, aligning them such that their heat-sealing layers face each other, folding two laminates into a V-shape such that the heat-sealing layer is on the outside, inserting the two folded laminates between the aligned laminates at both side edges, with one on one side and the other on the other side, and heat-sealing the laminates. With such a production method, a stand-up pouch having a trunk with side gussets is obtained.

In an embodiment, the bottom sheet can be formed by inserting a laminate according to the present disclosure between lower portions of a bag-shaped side sheet and heat-sealing them. More specifically, the bottom sheet can be formed by folding a laminate into a V-shape such that its heat-sealing layer is on the outside, inserting the folded laminate between lower portions of a bag-shaped side sheet, and heat-sealing them.

In an embodiment, the bottom is formed by preparing two laminates according to the present disclosure, aligning them such that their heat-sealing layers face each other, then folding another laminate according to the present disclosure into a V-shape such that its heat-sealing layer is on the outside, placing it between lower portions of the laminates facing each other, and heat-sealing the laminates. Subsequently, the trunk is formed by heat-sealing the two edges adjacent to the bottom. In such a manner, a stand-up pouch according to an embodiment can be formed.

### [Tube Container Body]

A tube container body according to the present disclosure includes a laminate according to the present disclosure.

In the following, a tube container body according to the present disclosure will be described with reference to drawings. Fig. 7 is a diagram briefly illustrating the structure of a tube container 120, and Fig. 8 is an A-A cross-sectional view of Fig. 7. As illustrated in Fig. 7, the tube container body 121 includes a head 122 and a trunk 123; the trunk 123 is composed of a laminate according to the present disclosure.

### <Head>

The head 122 includes a shoulder 124 connected to one end of the trunk 123 and an outlet 125 connected to the shoulder 124. In an embodiment, the injection outlet 125 includes a thread 127 for a cap 126 to engage with it by screwing.

In an embodiment, the head is formed by a resin composition containing polyethylene. Through this, the recyclability of the tube container body can be improved. Examples of types of polyethylene include high-density polyethylene, medium-density polyethylene, low-density polyethylene, linear low-density polyethylene, and ultra-low-density polyethylene. Of these, high-density polyethylene is particularly preferred from the viewpoints of shape retention and shapability. The resin composition may contain at least one selected from biomass polyethylene and recycled polyethylene. The resin composition may contain additives as mentioned above.

The head can be produced by methods known in the related art. For example, compression molding or injection molding can be used to produce the head and join it to the trunk at the same time.

### <Trunk>

For the tube container body 121 according to the present disclosure, the trunk 123 is connected to the shoulder 124 of the head 122. The trunk 123 includes, for example, a fused portion 128 formed by rolling a laminate according to the present disclosure into a cylinder by putting one end of the laminate on top of the other end, with the surface closer to a first heat-sealing layer in contact with the surface closer to a second heat-sealing layer, and heat-sealing the overlapping portions. The trunk 123 includes, for example, a bottom seal portion 129 formed by heat-sealing the opening of the laminate rolled into a cylinder.

Examples of methods for heat sealing include methods known in the related art, such as bar sealing, revolving roller sealing, belt sealing, impulse sealing, radiofrequency sealing, ultrasonic sealing, and flame sealing.

For example, a cylindrical trunk may be produced by rolling a laminate according to the present disclosure into a cylinder by putting one end of the laminate on top of the other end, with the surface closer to a first heat-sealing layer in contact with the surface closer to a second heat-sealing layer, and heat-sealing the overlapping portions. From the viewpoint of the ease of heat sealing, it is preferred that one of the overlapping ends be a first heat-sealing layer, with the other end being a second heat-sealing layer. In that case, the first heat-sealing layer and the second heat-sealing layer are melted and joined together, resulting in the formation of a fused portion.

It is, therefore, preferred that the region of the second heat-sealing layer intended to be heat-sealed during the formation of the trunk of the tube container body be free of any printed layer or surface protection layer. Through this, good heat sealing can be ensured within this region when a cylindrical trunk is formed using a laminate according to the present disclosure.

In the above embodiment, the fused portion is formed by overlapping. The fused portion, however, may be formed by bringing both ends of the same surface of a laminate together and joining them by heat-sealing the surfaces of the first heat-sealing layer. In that case, a printed layer and a surface protection layer may be formed on the second heat-sealing layer at both ends of the laminate. In that case, furthermore, joining tape may be applied to the outer surface side of the trunk to cover the joint. The area of the laminate to which the joining tape is applied is preferably free of any printed layer or surface protection layer. The joining tape may be provided on both of the inner surface and the outer surface of the trunk.

### [Tube Container]

A tube container according to the present disclosure will now be described with reference to a drawing. As illustrated in Fig. 7, a tube container 120 according to the present disclosure includes a tube container body 121 and a cap 26 to be attached to its head 122.

### <Tube Container Body>

The tube container body has already been described above; therefore, its description is omitted here.

### <Cap>

The cap is detachably attached to the outlet of the head and plays the role of closing the outlet. In an embodiment, the cap is formed by a resin composition containing a thermoplastic resin. Examples of thermoplastic resins include polyolefins, such as polyethylene and polypropylene, polyesters, cellulose resins, and vinyl resins. From the viewpoint of recyclability, polyethylene is particularly preferred. Examples of types of polyethylene include high-density polyethylene, medium-density polyethylene, low-density polyethylene, linear low-density polyethylene, and ultra-low-density polyethylene. Of these, high-density polyethylene is particularly preferred from the viewpoints of shape retention and shapability. The resin composition may contain at least one selected from biomass polyethylene and recycled polyethylene. The resin composition may contain additives as mentioned above.

The cap may be, as illustrated in Fig. 7, of the screw type, which has a groove recess on the cap's inner surface to engage with the thread 127 of the outlet 125 by screwing, or, alternatively, may be of the stopper type, which is pressed into the outlet 125 to engage.

### [Example of an Aspect of the Present Disclosure]

[1] A barrier substrate including a stretched substrate and a vapor deposition film, wherein the stretched substrate includes a first barrier resin layer, at least one polyethylene layer, and a second barrier resin layer in this order, the polyethylene layer contains polyethylene as a main component thereof, the first barrier resin layer and the second barrier resin layer each independently contain a gas barrier resin as a main component thereof, and the vapor deposition film is provided on a surface of the second barrier resin layer of the stretched substrate and is not provided on a surface of the first barrier resin layer of the stretched substrate.
[2] The barrier substrate according to [1] above, wherein the first barrier resin layer and the second barrier resin layer each independently contain an ethylene-vinyl alcohol copolymer as the main component thereof.
[3] The barrier substrate according to [1] or [2] above, wherein the stretched substrate further includes a first adhesive resin layer between the first barrier resin layer and the polyethylene layer and further includes a second adhesive resin layer between the polyethylene layer and the second barrier resin layer.
[4] The barrier substrate according to [3] above, wherein the stretched substrate includes the first barrier resin layer, the first adhesive resin layer, a third-a polyethylene layer, a second-a polyethylene layer, a first-a polyethylene layer, a first-b polyethylene layer, a second-b polyethylene layer, a third-b polyethylene layer, the second adhesive resin layer, and the second barrier resin layer in this order.
[5] The barrier substrate according to [4] above, wherein the third-a polyethylene layer contains linear low-density polyethylene, the second-a polyethylene layer contains linear low-density polyethylene as a main component thereof, the first-a polyethylene layer contains a polyethylene plastomer as a main component thereof, the first-b polyethylene layer contains a polyethylene plastomer as a main component thereof, the second-b polyethylene layer contains linear low-density polyethylene as a main component thereof, and the third-b polyethylene layer contains linear low-density polyethylene.
[6] The barrier substrate according to [5] above, wherein melting points of the polyethylene plastomers are 115°C or below.
[7] The barrier substrate according to any one of [1] to [6] above, wherein at least one of the polyethylene layer further contains a compatibilizer.
[8] The barrier substrate according to any one of [1] to [7] above, wherein a thickness of the barrier resin layers is 0.5 µm or more and 10 µm or less.
[9] The barrier substrate according to any one of [1] to [8] above, wherein the vapor deposition film is a metal deposition film or an inorganic oxide deposition film.
[10] The barrier substrate according to any one of [1] to [9] above, wherein the vapor deposition film is an aluminum deposition film, an alumina deposition film, a silica deposition film, or a silicon oxycarbide deposition film.
[11] A laminate including at least the barrier substrate according to any one of [1] to [10] above and at least one heat-sealing layer containing polyethylene as a main component thereof.
[12] The laminate according to [11] above, wherein the laminate includes at least a first heat-sealing layer, the barrier substrate, and a second heat-sealing layer in this order, the first heat-sealing layer contains polyethylene as a main component thereof, and the second heat-sealing layer contains polyethylene as a main component thereof.
[13] The laminate according to [12] above, wherein the laminate is for forming a trunk of a tube container body, the second heat-sealing layer is a sealant layer closer to an outer surface of the trunk, and the first heat-sealing layer is a sealant layer closer to an inner surface of the trunk.
[14] The laminate according to [11] above, wherein the laminate includes at least a polyethylene stretched substrate containing polyethylene as a main component thereof, the barrier substrate, and the heat-sealing layer.
[15] The laminate according to any one of [11] to [14] above, wherein a percentage of polyethylene across the entire laminate is 80% by mass or more.
[16] A packaging container including the laminate according to any one of [11] to [15] above.
[17] A tube container body including a head and a trunk, wherein the head includes a shoulder connected to one end of the trunk and an outlet connected to the shoulder, and the trunk is composed of the laminate according to [12], [13], or [15] above.
[18] A tube container including the tube container body according to [17] above and a cap.
[19] A stand-up pouch including the laminate according to [14] or [15] above.

### [Example of an Aspect of the Present Disclosure]

[1] A barrier substrate including at least a first vapor deposition film, a stretched substrate, and a second vapor deposition film, wherein the stretched substrate includes a first barrier resin layer, a polyethylene layer, and a second barrier resin layer in this order, the polyethylene layer contains polyethylene as a main component thereof, the first barrier resin layer and the second barrier resin layer each independently contain a gas barrier resin as a main component thereof, the first vapor deposition film is an inorganic oxide deposition film provided on a surface of the first barrier resin layer of the stretched substrate, and the second vapor deposition film is a metal deposition film or inorganic oxide deposition film provided on a surface of the second barrier resin layer of the stretched substrate.
[2] The barrier substrate according to [1] above, wherein the first vapor deposition film is an alumina deposition film, a silica deposition film, or a silicon oxycarbide deposition film, and the second vapor deposition film is an aluminum deposition film.
[3] The barrier substrate according to [1] above, wherein each of the first vapor deposition film and the second vapor deposition film is independently an alumina deposition film, a silica deposition film, or a silicon oxycarbide deposition film.

### [Example of an Aspect of the Present Disclosure]

According to the following aspect, there can be provided laminates useful as packaging materials for producing a packaging container superior in recyclability and gas barrier properties, laminates for forming the trunk of a tube container body in particular.
[1] A laminate including at least a first heat-sealing layer, a first adhesive agent layer, a barrier substrate, a second adhesive agent layer, and a second heat-sealing layer in this order, wherein the first heat-sealing layer contains polyethylene as a main component thereof, the second heat-sealing layer contains polyethylene as a main component thereof, the barrier substrate includes at least a stretched substrate and at least one vapor deposition film, the stretched substrate includes a first barrier resin layer, a polyethylene layer, and a second barrier resin layer in this order, the polyethylene layer contains polyethylene as a main component thereof, the first barrier resin layer and the second barrier resin layer each independently contain a gas barrier resin as a main component thereof, the barrier substrate is positioned such that the first barrier resin layer faces a first heat-sealing layer side with the second barrier resin layer facing a second heat-sealing layer side, and the vapor deposition film is provided at least on a surface of the second barrier resin layer of the stretched substrate.
[2] The laminate according to [1] above, wherein the first adhesive agent layer and the second adhesive agent layer are each independently composed of a solvent-based adhesive.
[3] A laminate including at least a first heat-sealing layer, a first extruded resin layer, a barrier substrate, a second extruded resin layer, and a second heat-sealing layer in this order, wherein the first heat-sealing layer contains polyethylene as a main component thereof, the second heat-sealing layer contains polyethylene as a main component thereof, the barrier substrate includes at least a stretched substrate and at least one vapor deposition film, the stretched substrate includes a first barrier resin layer, a polyethylene layer, and a second barrier resin layer in this order, the polyethylene layer contains polyethylene as a main component thereof, the first barrier resin layer and the second barrier resin layer each independently contain a gas barrier resin as a main component thereof, the barrier substrate is positioned such that the first barrier resin layer faces a first heat-sealing layer side with the second barrier resin layer facing a second heat-sealing layer side, and the vapor deposition film is provided at least on a surface of the second barrier resin layer of the stretched substrate.
[4] The laminate according to [1] above, wherein the first extruded resin layer and the second extruded resin layer each independently contain polyethylene as a main component thereof.
[5] The laminate according to [1] or [2] above, wherein the first extruded resin layer and the second extruded resin layer each independently contain a polyolefin plastomer and acid group-containing polyethylene.
[6] The laminate according to any one of [1] to [4] above, wherein the vapor deposition film provided on the surface of the second barrier resin layer of the stretched substrate is a metal deposition film or an inorganic oxide deposition film.
[7] The laminate according to any one of [1] to [6] above, wherein the barrier substrate includes a first vapor deposition film provided on a surface of the first barrier resin layer of the stretched substrate and a second vapor deposition film provided on the surface of the second barrier resin layer of the stretched substrate.
[8] The laminate according to [7] above, wherein each of the first vapor deposition film and the second vapor deposition film is independently a metal deposition film.
[9] The laminate according to [7] above, wherein the first vapor deposition film is an inorganic oxide deposition film, and the second vapor deposition film is a metal deposition film or an inorganic oxide deposition film.
[10] The laminate according to [7] above, wherein the first vapor deposition film is an alumina deposition film, a silica deposition film, or a silicon oxycarbide deposition film, and the second vapor deposition film is an aluminum deposition film.
[11] The laminate according to [9] above, wherein each of the first vapor deposition film and the second vapor deposition film is independently an alumina deposition film, a silica deposition film, or a silicon oxycarbide deposition film.

### [Example of an Aspect of the Present Disclosure]

[1] A stretched substrate including, at least, at least one polyethylene layer and a barrier resin layer, wherein the polyethylene layer contains polyethylene as a main component thereof, and the barrier resin layer contains at least one gas barrier resin as a main component thereof.
[2] The stretched substrate according to [1] above, wherein the barrier resin layer contains, as the gas barrier resin, at least one selected from an ethylene-vinyl alcohol copolymer, polyvinyl alcohol, and a polyamide.
[3] The stretched substrate according to [1] or [2] above, wherein the stretched substrate includes two or more of the polyethylene layers.
[4] The stretched substrate according to any one of [1] to [3] above, wherein the stretched substrate includes two or more of the polyethylene layers and the barrier resin layer in this order, and a density of the polyethylene layer positioned farthest from the barrier resin layer is higher than a density of the polyethylene layer positioned closest to the barrier resin layer.
[5] The stretched substrate according to any one of [1] to [4] above, wherein the stretched substrate further includes an adhesive resin layer between the polyethylene layer and the barrier resin layer.
[6] The stretched substrate according to any one of [1] to [5] above, wherein the stretched substrate includes a first polyethylene layer containing medium-density polyethylene as a main component thereof, a second polyethylene layer containing linear low-density polyethylene and medium-density polyethylene, a third polyethylene layer containing linear low-density polyethylene as a main component thereof, an adhesive resin layer, and the barrier resin layer in this order.
[7] The stretched substrate according to any one of [1] to [6] above, wherein the stretched substrate includes a first polyethylene layer containing medium-density polyethylene and linear low-density polyethylene, a second polyethylene layer containing linear low-density polyethylene and medium-density polyethylene, a third polyethylene layer containing linear low-density polyethylene as a main component thereof, an adhesive resin layer, and the barrier resin layer in this order.
[8] The stretched substrate according to any one of [1] to [7] above, wherein the stretched substrate includes a first polyethylene layer containing medium-density polyethylene and high-density polyethylene, a second polyethylene layer containing linear low-density polyethylene and medium-density polyethylene, a third polyethylene layer containing linear low-density polyethylene as a main component thereof, an adhesive resin layer, and the barrier resin layer in this order.
[9] The stretched substrate according to any one of [1] to [8] above, at least one of the polyethylene layer further contains a compatibilizer.
[10] The stretched substrate according to any one of [1] to [9] above, wherein a thickness of the barrier resin layer is 0.5 µm or more and 10 µm or less.
[11] The stretched substrate according to any one of [1] to [10] above, wherein the stretched substrate is a coextruded resin film.
[12] A printed substrate including the stretched substrate according to any one of [1] to [11] above and at least one printed layer provided on one surface or both surfaces of the stretched substrate.
[13] A printed substrate including the stretched substrate according to any one of [1] to [11] above and at least one vapor deposition film provided on one surface or both surfaces of the stretched substrate.
[14] The barrier substrate according to [13] above, wherein the stretched substrate includes the barrier resin layer as one surface layer, and the vapor deposition film is provided on a surface of the barrier resin layer.
[15] The barrier substrate according to [13] or [14] above, wherein the vapor deposition film is at least one aluminum deposition film.

### [Example of an Aspect of the Present Disclosure]

[1] A barrier substrate including at least a first vapor deposition film, a stretched substrate, and a second vapor deposition film, wherein the stretched substrate includes, at least, at least one polyethylene layer and at least one barrier resin layer, the polyethylene layer contains polyethylene as a main component thereof, the barrier resin layer contains at least one gas barrier resin as a main component thereof, the stretched substrate has a first surface and a second surface opposite the first surface, the first vapor deposition film is provided on the first surface of the stretched substrate, and the second vapor deposition film is provided on the second surface of the stretched substrate.
[2] The barrier substrate according to [1] above, wherein the barrier resin layer contains, as the gas barrier resin, at least one selected from an ethylene-vinyl alcohol copolymer, polyvinyl alcohol, and a polyamide.
[3] The barrier substrate according to [1] or [2] above, wherein the stretched substrate further includes an adhesive resin layer between the polyethylene layer and the barrier resin layer.
[4] The barrier substrate according to any one of [1] to [3] above, wherein the stretched substrate includes a first barrier resin layer constituting the first surface and a second barrier resin layer constituting the second surface, the first vapor deposition film is provided on a surface of the first barrier resin layer, and the second vapor deposition film is provided on a surface of the second barrier resin layer.
[5] The barrier substrate according to [4] above, wherein the stretched substrate includes the first barrier resin layer, a first adhesive resin layer, one or two or more of the polyethylene layers, a second adhesive resin layer, and the second barrier resin layer in this order.
[6] The barrier substrate according to [4] or [5] above, wherein the stretched substrate includes the first barrier resin layer, a first adhesive resin layer, a third-a polyethylene layer, a second-a polyethylene layer, a first-a polyethylene layer, a first-b polyethylene layer, a second-b polyethylene layer, a third-b polyethylene layer, a second adhesive resin layer, and the second barrier resin layer in this order.
[7] The barrier substrate according to [6] above, wherein the third-a polyethylene layer contains linear low-density polyethylene, the second-a polyethylene layer contains linear low-density polyethylene as a main component thereof, the first-a polyethylene layer contains a polyethylene plastomer as a main component thereof, the first-b polyethylene layer contains a polyethylene plastomer as a main component thereof, the second-b polyethylene layer contains linear low-density polyethylene as a main component thereof, and the third-b polyethylene layer contains linear low-density polyethylene.
[8] The barrier substrate according to [7] above, wherein melting points of the polyethylene plastomers are 115°C or below.
[9] The barrier substrate according to [1] to [8] above, wherein at least one of the polyethylene layer further contains a compatibilizer.
[10] The barrier substrate according to any one of [1] to [9] above, wherein a thickness of said at least one barrier resin layer is 0.5 µm or more and 10 µm or less.
[11] The barrier substrate according to any one of [1] to [10] above, wherein the first vapor deposition film is a metal deposition film with the second vapor deposition film being a metal deposition film, one of the first vapor deposition film or the second vapor deposition film is a metal deposition film with the other being an inorganic oxide deposition film, or the first vapor deposition film is an inorganic oxide deposition film with the second vapor deposition film being an inorganic oxide deposition film.
[12] The barrier substrate according to any one of [1] to [11] above, wherein the first vapor deposition film is an aluminum deposition film with the second vapor deposition film being an aluminum deposition film, one of the first vapor deposition film or the second vapor deposition film is an aluminum deposition film with the other being an alumina deposition film, a silica deposition film, or a silicon oxycarbide deposition film, or the first vapor deposition film is an alumina deposition film, a silica deposition film, or a silicon oxycarbide deposition film with the second vapor deposition film being an alumina deposition film, a silica deposition film, or a silicon oxycarbide deposition film.

### [Example of an Aspect of the Present Disclosure]

[1] A stretched substrate including at least a first surface resin layer containing a polyamide as a main component thereof, at least one polyethylene layer containing polyethylene as a main component thereof, and a second surface resin layer containing a polyamide as a main component thereof in this order, wherein the stretched substrate has undergone uniaxial orientation treatment.
[2] The stretched substrate according to [1] above, wherein the stretched substrate further includes a first adhesive resin layer between the first surface resin layer and the polyethylene layer and further includes a second adhesive resin layer between the polyethylene layer and the second surface resin layer.
[3] The stretched substrate according to [1] or [2] above, wherein the stretched substrate includes two or more of the polyethylene layers.
[4] The stretched substrate according to [3] above, wherein the stretched substrate includes a third-a polyethylene layer, a second-a polyethylene layer, a first-a polyethylene layer, a first-b polyethylene layer, a second-b polyethylene layer, and a third-b polyethylene layer in this order between the first surface resin layer and the second surface resin layer.
[5] The stretched substrate according to [4] above, wherein the third-a polyethylene layer contains linear low-density polyethylene, the second-a polyethylene layer contains linear low-density polyethylene as a main component thereof, the first-a polyethylene layer contains a polyethylene plastomer as a main component thereof, the first-b polyethylene layer contains a polyethylene plastomer as a main component thereof, the second-b polyethylene layer contains linear low-density polyethylene as a main component thereof, and the third-b polyethylene layer contains linear low-density polyethylene.
[6] The stretched substrate according to [5] above, wherein melting points of the polyethylene plastomers are 115°C or below.
[7] The stretched substrate according to any one of [3] to [6] above, wherein at least one of the polyethylene layer further contains a compatibilizer.
[8] The stretched substrate according to any one of [1] to [7] above, wherein a thickness of the first surface resin layer is 0.5 µm or more and 10 µm or less, and a thickness of the second surface resin layer is 0.5 µm or more and 10 µm or less.
[9] The stretched substrate according to any one of [1] to [8], wherein a percentage of polyethylene in the stretched substrate is more than 50% by mass.
[10] A stretched substrate including at least a first surface resin layer containing polyethylene as a main component thereof, at least one polyethylene layer containing polyethylene as a main component thereof, and a second surface resin layer containing a polyamide as a main component thereof in this order, wherein the stretched substrate has undergone uniaxial orientation treatment.
[11] The stretched substrate according to [10] above, wherein the stretched substrate further includes an adhesive resin layer between the polyethylene layer and the second surface resin layer.
[12] The stretched substrate according to [10] or [11] above, wherein the stretched substrate includes two or more of the polyethylene layers.
[13] The stretched substrate according to [12] above, wherein the stretched substrate includes the first surface resin layer, a first polyethylene layer, a second polyethylene layer, an adhesive resin layer, and the second surface resin layer in this order.
[14] The stretched substrate according to [12] or [13] above, wherein at least one of the polyethylene layer further contains a compatibilizer.
[15] The stretched substrate according to any one of [10] to [14], wherein a thickness of the first surface resin layer is 1 µm or more and 20 µm or less, and a thickness of the second surface resin layer is 0.5 µm or more and 10 µm or less.
[16] The stretched substrate according to any one of [10] to [15] above, wherein a percentage of polyethylene in the stretched substrate is 70% by mass or more.
[17] A barrier substrate including the stretched substrate according to any one of [1] to [9] above and at least one vapor deposition film provided on a surface of at least one selected from the first surface resin layer and the second surface resin layer in the stretched substrate or including the stretched substrate according to any one of [10] to [16] above and a vapor deposition film provided on a surface of the second surface resin layer in the stretched substrate.
[18] The barrier substrate according to [17] above, wherein the barrier substrate includes at least a first vapor deposition film, the stretched substrate, and a second vapor deposition film in this order, the first vapor deposition film is provided on a surface of the first surface resin layer, and the second vapor deposition film is provided on a surface of the second surface resin layer.
[19] The barrier substrate according to [18] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.
[20] The barrier substrate according to [19] above, wherein the inorganic oxide deposition film is an alumina deposition film, a silica deposition film, or a silicon oxycarbide deposition film, and the metal deposition film or each metal deposition film is an aluminum deposition film.

### [Example of an Aspect of the Present Disclosure]

[1] A stretched substrate including at least a first surface resin layer containing polyethylene as a main component thereof, at least one polyethylene layer containing polyethylene as a main component thereof, and a second surface resin layer containing polyethylene and at least one adhesive resin in this order, wherein the stretched substrate has undergone uniaxial orientation treatment.
[2] The stretched substrate according to [1] above, wherein, in the second surface resin layer, a percentage of the polyethylene is 60% by mass or more and 95% by mass or less, and a percentage of the adhesive resin is 5% by mass or more and 40% by mass or less.
[3] The stretched substrate according to [1] or [2] above, wherein the adhesive resin in the second surface resin layer includes acid-modified polyethylene.
[4] The stretched substrate according to any one of [1] to [3] above, wherein the stretched substrate includes two or more of the polyethylene layers.
[5] The stretched substrate according to [4] above, wherein the stretched substrate includes a first polyethylene layer, a second polyethylene layer, and a third polyethylene layer in this order between the first surface resin layer and the second surface resin layer.
[6] The stretched substrate according to any one of [1] to [5] above, wherein a thickness of the first surface resin layer is 0.5 µm or more and 10 µm or less, a thickness of said at least one polyethylene layer is 3 µm or more and 180 µm or less, and a thickness of the second surface resin layer is 0.5 µm or more and 10 µm or less.
[7] The stretched substrate according to any one of [1] to [6] above, wherein a percentage of polyethylene in the stretched substrate is 80% by mass or more.
[8] The stretched substrate according to any one of [1] to [7] above, wherein the stretched substrate is a stretched coextruded resin film.
[9] A barrier substrate including the stretched substrate according to any one of [1] to [8] above and a vapor deposition film provided on a surface of the second surface resin layer in the stretched substrate.
[10] The barrier substrate according to [9] above, wherein the vapor deposition film is a metal deposition film or an inorganic oxide deposition film.
[11] The barrier substrate according to [9] or [10] above, wherein the vapor deposition film is an aluminum deposition film, an alumina deposition film, a silica deposition film, or a silicon oxycarbide deposition film.

### [Example of an Aspect of the Present Disclosure]

[1] A stretched substrate including at least a first surface resin layer containing polyethylene and at least one adhesive resin, at least one polyethylene layer containing polyethylene as a main component thereof, and a second surface resin layer containing polyethylene and at least one adhesive resin in this order, wherein the stretched substrate has undergone uniaxial orientation treatment.
[2] The stretched substrate according to [1] above, wherein, in the first surface resin layer and the second surface resin layer, each independently, a percentage of the polyethylene is 60% by mass or more and 95% by mass or less, and a percentage of the adhesive resin is 5% by mass or more and 40% by mass or less.
[3] The stretched substrate according to [1] or [2] above, wherein the adhesive resin in the first surface resin layer includes acid-modified polyethylene, and the adhesive resin in the second surface resin layer includes acid-modified polyethylene.
[4] The stretched substrate according to any one of [1] to [3] above, wherein the stretched substrate includes two or more of the polyethylene layers.
[5] The stretched substrate according to [4] above, wherein the stretched substrate includes a first polyethylene layer, a second polyethylene layer, and a third polyethylene layer in this order between the first surface resin layer and the second surface resin layer.
[6] The stretched substrate according to [4] above, wherein the stretched substrate includes a fourth-a polyethylene layer, a third-a polyethylene layer, a second-a polyethylene layer, a first-a polyethylene layer, a first-b polyethylene layer, a second-b polyethylene layer, a third-b polyethylene layer, and a fourth-b polyethylene layer in this order between the first surface resin layer and the second surface resin layer.
[7] The stretched substrate according to [6] above, wherein the fourth-a polyethylene layer contains linear low-density polyethylene, the third-a polyethylene layer contains linear low-density polyethylene, the second-a polyethylene layer contains linear low-density polyethylene as a main component thereof, the first-a polyethylene layer contains a polyethylene plastomer as a main component thereof, the first-b polyethylene layer contains a polyethylene plastomer as a main component thereof, the second-b polyethylene layer contains linear low-density polyethylene as a main component thereof, the third-b polyethylene layer contains linear low-density polyethylene, and the fourth-b polyethylene layer contains linear low-density polyethylene.
[8] The stretched substrate according to [7] above, wherein melting points of the polyethylene plastomers are 115°C or below.
[9] The stretched substrate according to any one of [1] to [8] above, wherein a thickness of the first surface resin layer is 0.5 µm or more and 10 µm or less, a thickness of said at least one polyethylene layer is 3 µm or more and 180 µm or less, and a thickness of the second surface resin layer is 0.5 µm or more and 10 µm or less.
[10] The stretched substrate according to any one of [1] to [9] above, wherein a percentage of polyethylene in the stretched substrate is 80% by mass or more.
[11] A stretched substrate including at least a first surface resin layer containing polyethylene and at least one adhesive resin, at least one polyethylene layer containing polyethylene as a main component thereof, and a second surface resin layer containing at least one gas barrier resin as a main component thereof in this order, wherein the stretched substrate has undergone uniaxial orientation treatment.
[12] The stretched substrate according to [11] above, wherein a percentage of the polyethylene in the first surface resin layer is 60% by mass or more and 95% by mass or less, and a percentage of the adhesive resin in the first surface resin layer is 5% by mass or more and 40% by mass or less.
[13] The stretched substrate according to [11] or [12] above, wherein the adhesive resin in the first surface resin layer includes acid-modified polyethylene, and the gas barrier resin in the second surface resin layer includes at least one selected from an ethylene-vinyl alcohol copolymer and a polyamide.
[14] The stretched substrate according to any one of [11] to [13] above, wherein the stretched substrate further includes an adhesive resin layer between the polyethylene layer and the second surface resin layer.
[15] The stretched substrate according to any one of [11] to [14] above, wherein the stretched substrate includes two or more of the polyethylene layers.
[16] The stretched substrate according to [15] above, wherein the stretched substrate includes the first surface resin layer, a first polyethylene layer, a second polyethylene layer, an adhesive resin layer, and the second surface resin layer in this order.
[17] The stretched substrate according to any one of [15] or [16] above, wherein at least one of the polyethylene layer further contains a compatibilizer.
[18] The stretched substrate according to any one of [11] to [17] above, wherein a thickness of the first surface resin layer is 0.5 µm or more and 10 µm or less, a thickness of said at least one polyethylene layer is 3 µm or more and 180 µm or less, and a thickness of the second surface resin layer is 0.5 µm or more and 10 µm or less.
[19] The stretched substrate according to any one of [11] to [18] above, wherein a percentage of polyethylene in the stretched substrate is 70% by mass or more.
[20] A barrier substrate including the stretched substrate according to any one of [1] to [19] above and at least one vapor deposition film provided on a surface of at least one selected from the first surface resin layer and the second surface resin layer in the stretched substrate.
[21] The barrier substrate according to [20] above, wherein the barrier substrate includes at least a first vapor deposition film, the stretched substrate, and a second vapor deposition film in this order, the first vapor deposition film is provided on a surface of the first surface resin layer, and the second vapor deposition film is provided on a surface of the second surface resin layer.
[22] The barrier substrate according to [21] above, wherein each of the first vapor deposition film and the second vapor deposition film is independently a metal deposition film, the first vapor deposition film is an inorganic oxide deposition film with the second vapor deposition film being a metal deposition film, the first vapor deposition film is a metal deposition film with the second vapor deposition film being an inorganic oxide deposition film, or each of the first vapor deposition film and the second vapor deposition film is independently an inorganic oxide deposition film.
[23] The barrier substrate according to [22] above, wherein the inorganic oxide deposition film is an alumina deposition film, a silica deposition film, or a silicon oxycarbide deposition film, and the metal deposition film or each metal deposition film is an aluminum deposition film.

### EXAMPLES

The stretched substrate, the barrier substrate, and the laminate according to the present disclosure will now be more specifically described using examples; however, the stretched substrate, the barrier substrate, and the laminate according to the present disclosure are not limited to the following examples. In the descriptions below, "parts by mass" will be referred to simply as "parts."

### [Production of Stretched Base Materials]

In the production of stretched substrates, the following materials were used.

### - Ethylene-vinyl alcohol copolymer (EVOH)

EVAL E171B, manufactured by Kuraray Co., Ltd.;
density, 1.14 g/cm³; melting point, 165°C;
MFR, 1.7 g/10 minutes; ethylene content, 44 mol%

### - Aliphatic polyamide (aliphatic PA)

ULTRAMID B40, manufactured by BASF SE; polyamide 6 (PA6);
melting point, 220°C; relative viscosity, 4.0

### - Aliphatic polyamide (aliphatic PA)

ULTRAMID C33, manufactured by BASF SE;
polyamide 6/66 (PA6/66);
melting point, 196°C; relative viscosity, 3.3

### - Aromatic polyamide (aromatic PA)

MX Nylon (MXD6) S6007, manufactured by Mitsubishi Gas Chemical Company, Inc.;
polymeta-xylylene adipamide;
melting point, 240°C; relative viscosity, 2.7

### - Acid-modified linear low-density polyethylene (MAH-LLDPE)

OREVAC 18302N, manufactured by Arkema;
maleic anhydride-grafted linear low-density polyethylene;
density, 0.912 g/cm³; melting point, 123°C;
MFR, 1.5 g/10 minutes

### - Linear low-density polyethylene (LLDPE)

Exceed XP8656ML, manufactured by Exxon Mobil Corporation;
an ethylene-1-hexene copolymer; density, 0.916 g/cm³;
melting point, 121°C; MFR, 0.5 g/10 minutes

### - Linear low-density polyethylene (LLDPE)

Exceed 1327MD, manufactured by Exxon Mobil Corporation;
an ethylene-1-hexene copolymer; density, 0.927 g/cm³;
melting point, 123°C; MFR, 1.3 g/10 minutes

### - Medium-density polyethylene (MDPE)

Enable 4002MC, manufactured by Exxon Mobil Corporation;
density, 0.938 g/cm³;
melting point, 128°C; MFR, 0.25 g/10 minutes

### - Medium-density polyethylene (MDPE)

ELITE 5538G, manufactured by The Dow Chemical Company;
density, 0.941 g/cm³;
melting point, 129°C; MFR, 1.3 g/10 minutes

### - High-density polyethylene (HDPE)

ELITE 5960G, manufactured by The Dow Chemical Company;
density, 0.960 g/cm³;
melting point, 134°C; MFR, 0.85 g/10 minutes

### - Polyolefin plastomer 1 (POP1)

AFFINITY EG8100G, manufactured by The Dow Chemical Company;
an ethylene-octene copolymer; density, 0.870 g/cm³;
melting point, 55°C; MFR, 1.0 g/10 minutes

### - Polyolefin plastomer 2 (POP2)

AFFINITY PL1881G, manufactured by The Dow Chemical Company;
an ethylene-octene copolymer; density, 0.902 g/cm³;
melting point, 99°C; MFR, 1.0 g/10 minutes

### - Adhesive resin

ADMER AT1955E, manufactured by Mitsui Chemicals, Inc.;
maleic anhydride-grafted polyethylene;
density, 0.890 g/cm³; MFR, 2.6 g/10 minutes

### - Compatibilizer

RETAIN 3000, manufactured by The Dow Chemical Company;
maleic anhydride-grafted polyethylene;
density, 0.870 g/cm³

### [EXAMPLE 1A]

Blended polyethylene (A) was prepared by mixing 60 parts of LLDPE (Exceed XP8656ML) and 40 parts of MDPE (Enable 4002MC). Blended polyethylene (B) was prepared by mixing 70 parts of MDPE (Enable 4002MC) and 30 parts of LLDPE (Exceed 1327MD).

A stretched substrate was produced by coextruding:
an EVOH (EVAL E171B);
an adhesive resin (ADMER AT1955E);
LLDPE (Exceed XP8656ML);
blended polyethylene (A); and
blended polyethylene (B)
to form films by inflation molding, and then stretching the resulting films four times in the longitudinal direction (MD direction) using a stretching apparatus.

A stretched substrate obtained in such a manner includes a 2.5-µm thick barrier resin layer (an EVOH layer), a 2.5-µm thick adhesive resin layer, a 12-µm thick LLDPE layer (a third polyethylene layer), a 4-µm thick blended polyethylene (A) layer (a second polyethylene layer), and a 4-µm thick blended polyethylene (B) layer (a first polyethylene layer). The total thickness of the stretched substrate was 25 µm.

On the barrier resin layer of the stretched substrate, a 30-nm thick aluminum (AL) deposition film was formed by PVD. In such a manner, a barrier substrate was obtained.

### [EXAMPLE 2A]

A stretched substrate and a barrier substrate were produced in the same manner as in Example 1A, except that the thickness of the barrier resin layer (EVOH layer) was changed to 5 µm, the thickness of the adhesive resin layer was changed to 2.5 µm, the thickness of the LLDPE layer was changed to 10.5 µm, the thickness of the blended polyethylene (A) layer was changed to 3.5 µm, and the thickness of the blended polyethylene (B) layer was changed to 3.5 µm.

### [EXAMPLE 3A]

Blended polyethylene (C) was prepared by mixing 80 parts of LLDPE (Exceed XP8656ML) and 20 parts of a compatibilizer (RETAIN 3000).

A stretched substrate was produced by coextruding:
an EVOH (EVAL E171B);
an adhesive resin (ADMER AT1955E);
blended polyethylene (C);
blended polyethylene (A); and
blended polyethylene (B)
to form films by inflation molding, and then stretching the resulting films four times in the longitudinal direction (MD direction) using a stretching apparatus.

A stretched substrate obtained in such a manner includes a 2.5-µm thick barrier resin layer (an EVOH layer), a 2.5-µm thick adhesive resin layer, a 12-µm thick blended polyethylene (C) layer, a 4-µm thick blended polyethylene (A) layer, and a 4-µm thick blended polyethylene (B) layer. The total thickness of the stretched substrate was 25 µm.

On the barrier resin layer of the stretched substrate, a 30-nm thick aluminum (AL) deposition film was formed by PVD. In such a manner, a barrier substrate was obtained.

### [EXAMPLE 4A]

A stretched substrate and a barrier substrate were produced in the same manner as in Example 3A, except that the thickness of the barrier resin layer (EVOH layer) was changed to 5 µm, the thickness of the adhesive resin layer was changed to 2.5 µm, the thickness of the blended polyethylene (C) layer was changed to 10.5 µm, the thickness of the blended polyethylene (A) layer was changed to 3.5 µm, and the thickness of the blended polyethylene (B) layer was changed to 3.5 µm.

### [EXAMPLE 5A]

Blended polyethylene (D) was prepared by mixing 70 parts of MDPE (Enable 4002MC) and 30 parts of HDPE (ELITE 5960G).

A stretched substrate was produced by coextruding:
an EVOH (EVAL E171B);
an adhesive resin (ADMER AT1955E);
LLDPE (Exceed XP8656ML);
blended polyethylene (A); and
blended polyethylene (D)
to form films by inflation molding, and then stretching the resulting films four times in the longitudinal direction (MD direction) using a stretching apparatus.

A stretched substrate obtained in such a manner includes a 2.5-µm thick barrier resin layer (an EVOH layer), a 2.5-µm thick adhesive resin layer, a 12-µm thick LLDPE layer, a 4-µm thick blended polyethylene (A) layer, and a 4-µm thick blended polyethylene (D) layer. The total thickness of the stretched substrate was 25 µm.

On the barrier resin layer of the stretched substrate, a 30-nm thick aluminum (AL) deposition film was formed by PVD. In such a manner, a barrier substrate was obtained.

### [EXAMPLE 6A]

A stretched substrate and a barrier substrate were produced in the same manner as in Example 5A, except that the thickness of the barrier resin layer (EVOH layer) was changed to 5 µm, the thickness of the adhesive resin layer was changed to 2.5 µm, the thickness of the LLDPE layer was changed to 10.5 µm, the thickness of the blended polyethylene (A) layer was changed to 3.5 µm, and the thickness of the blended polyethylene (D) layer was changed to 3.5 µm.

### [EXAMPLE 7A]

A stretched substrate was produced by coextruding:
an EVOH (EVAL E171B);
an adhesive resin (ADMER AT1955E);
blended polyethylene (C);
blended polyethylene (A); and
blended polyethylene (D)
to form films by inflation molding, and then stretching the resulting films four times in the longitudinal direction (MD direction) using a stretching apparatus.

A stretched substrate obtained in such a manner includes a 2.5-µm thick barrier resin layer (an EVOH layer), a 2.5-µm thick adhesive resin layer, a 12-µm thick blended polyethylene (C) layer, a 4-µm thick blended polyethylene (A) layer, and a 4-µm thick blended polyethylene (D) layer. The total thickness of the stretched substrate was 25 µm.

On the barrier resin layer of the stretched substrate, a 30-nm thick aluminum (AL) deposition film was formed by PVD. In such a manner, a barrier substrate was obtained.

### [EXAMPLE 8A]

A stretched substrate and a barrier substrate were produced in the same manner as in Example 7A, except that the thickness of the barrier resin layer (EVOH layer) was changed to 5 µm, the thickness of the adhesive resin layer was changed to 2.5 µm, the thickness of the blended polyethylene (C) layer was changed to 10.5 µm, the thickness of the blended polyethylene (A) layer was changed to 3.5 µm, and the thickness of the blended polyethylene (D) layer was changed to 3.5 µm.

### [COMPARATIVE EXAMPLE 1A]

A 25-µm thick stretched polyethylene film was produced by extruding MDPE (ELITE 5538G) to form a single-layer film by inflation molding and then stretching the resulting film four times in the longitudinal direction (MD direction) using a stretching apparatus. On one surface of the stretched polyethylene film, a 30-nm thick aluminum (AL) deposition film was formed by PVD. In such a manner, a barrier substrate was obtained.

### [COMPARATIVE EXAMPLE 2A]

A 12-µm thick biaxially oriented polyester film (E5100, manufactured by Toyobo Co., Ltd.) was prepared. On one surface of the biaxially oriented polyester film, a 30-nm thick aluminum (AL) deposition film was formed by PVD. In such a manner, a barrier substrate was obtained.

### [EXAMPLE 1B]

Blended polyethylene (A) was prepared by mixing 60 parts of LLDPE (Exceed XP8656ML) and 40 parts of MDPE (Enable 4002MC).

Blended polyethylene (E) was prepared by mixing 80 parts of polyolefin plastomer 1 (AFFINITY EG8100G) and 20 parts of polyolefin plastomer 2 (AFFINITY PL1881G).

An EVOH (EVAL E171B);
an adhesive resin (ADMER AT1955E);
blended polyethylene (A);
LLDPE (Exceed XP8656ML); and
blended polyethylene (E)
were coextruded to form films by inflation molding, and surfaces of the blended polyethylene (E) layer were pressure-bonded at a nip point to yield a single film. Then the resulting film was stretched four times in the longitudinal direction (MD direction) using a stretching apparatus, through which a stretched substrate was produced.

A stretched substrate obtained in such a manner includes:
a 2-µm thick barrier resin layer (an EVOH layer);
a 2.5-µm thick adhesive resin layer;
a 5-µm thick blended polyethylene (A) layer;
a 1.5-µm thick LLDPE layer;
a 1.5-µm thick blended polyethylene (E) layer;
a 1.5-µm thick blended polyethylene (E) layer;
a 1.5-µm thick LLDPE layer;
a 5-µm thick blended polyethylene (A) layer;
a 2.5-µm thick adhesive resin layer; and
a 2-µm thick barrier resin layer (an EVOH layer). The total thickness of the stretched substrate was 25 µm.

On one barrier resin layer of the stretched substrate, a 30-nm thick aluminum (AL) deposition film was formed by PVD. In such a manner, a barrier substrate was obtained.

On each barrier resin layer of the stretched substrate, a 30-nm thick aluminum (AL) deposition film was formed by PVD. In such a manner, a barrier substrate was obtained.

On one barrier resin layer of the stretched substrate, a 30-nm thick aluminum (AL) deposition film was formed by PVD. On the other barrier resin layer of the stretched substrate, a 30-nm thick alumina deposition film was formed by PVD. A solution was obtained by mixing 47.69 g of water, 22.8 g of isopropyl alcohol, and 1.13 g of 0.5 N hydrochloric acid. Into this solution, 27.04 g of tetraethoxysilane as a metal alkoxide and 1.35 g of 3-glycidoxypropyltriethoxysilane as a silane coupling agent were mixed with cooling to reduce the temperature to 10°C, giving solution A. By mixing 4.14 g of polyvinyl alcohol with a degree of saponification of 99% or more and a degree of polymerization of 2,400 as a water-soluble polymer, 91.07 g of water, and 4.79 g of isopropyl alcohol, solution B was obtained. Solution A and solution B were mixed such that solution A/solution B would be 65.5/34.5 on a mass basis, yielding a barrier coating agent. The surface of the alumina deposition film was coated with this barrier coating agent by spin coating and subjected to heating treatment for 8 seconds at 100°C in an oven, resulting in the formation of a 0.3-µm thick barrier coating layer. In such a manner, a barrier substrate was obtained. In addition, a barrier substrate was obtained by forming a silica deposition film instead of an alumina deposition film.

On each barrier resin layer of the stretched substrate, a 30-nm thick alumina deposition film was formed by PVD. The surface of each alumina deposition film was coated with the barrier coating agent described above by spin coating and subjected to heating treatment for 8 seconds at 100°C in an oven, resulting in the formation of 0.3-µm thick barrier coating layers. In such a manner, a barrier substrate was obtained. In addition, a barrier substrate was obtained by forming silica deposition films instead of alumina deposition films.

### [EXAMPLE 2B]

Barrier substrates were obtained in the same manner as in Example 1B, except for the following.
An EVOH (EVAL E171B);
an adhesive resin (ADMER AT1955E);
LLDPE (Exceed XP8656ML);
LLDPE (Exceed XP8656ML); and
blended polyethylene (E)
were coextruded to form films by inflation molding, and surfaces of the blended polyethylene (B) layer were pressure-bonded at a nip point to yield a single film. Then a stretched substrate having the layer thickness values specified in Table 2 was produced by stretching the resulting film four times in the longitudinal direction (MD direction) using a stretching apparatus.

### [EXAMPLE 3B]

Blended polyethylene (C) was prepared by mixing 80 parts of LLDPE (Exceed XP8656ML) and 20 parts of a compatibilizer (RETAIN 3000).

Barrier substrates were obtained in the same manner as in Example 1B, except for the following.
An EVOH (EVAL E171B);
an adhesive resin (ADMER AT1955E);
blended polyethylene (A);
blended polyethylene (C); and
blended polyethylene (E)
were coextruded to form films by inflation molding, and surfaces of the blended polyethylene (B) layer were pressure-bonded at a nip point to yield a single film. Then a stretched substrate having the layer thickness values specified in Table 2 was produced by stretching the resulting film four times in the longitudinal direction (MD direction) using a stretching apparatus.

### [COMPARATIVE EXAMPLE 1B]

A 25-µm thick stretched polyethylene film was produced by extruding MDPE (ELITE 5538G) to form a single-layer film by inflation molding and then stretching the resulting film four times in the longitudinal direction (MD direction) using a stretching apparatus. On each surface of the stretched polyethylene film, a 30-nm thick aluminum (AL) deposition film was formed by PVD. In such a manner, a barrier substrate was obtained.

### [EXAMPLE 1C]

Linear low-density polyethylene A (Dowlex 2098P, manufactured by The Dow Chemical Company; density, 0.926 g/cm³), high-density polyethylene (HI-ZEX 3300F, manufactured by Prime Polymer Co., Ltd.; density, 0.949 g/cm³), and linear low-density polyethylene B (Dowlex 2098P, manufactured by The Dow Chemical Company; density, 0.926 g/cm³) were coextruded to form films by inflation to give a 70-µm thick first sealant film. In the first sealant film, the thickness of the layer composed of linear low-density polyethylene A was 17 µm, the thickness of the layer composed of high-density polyethylene was 36 µm, and the thickness of the layer composed of linear low-density polyethylene B was 17 µm.

Linear low-density polyethylene A (Dowlex 2098P, manufactured by The Dow Chemical Company; density, 0.926 g/cm³), high-density polyethylene (HI-ZEX 3300F, manufactured by Prime Polymer Co., Ltd.; density, 0.949 g/cm³), and linear low-density polyethylene B (Dowlex 2098P, manufactured by The Dow Chemical Company; density, 0.926 g/cm³) were coextruded to form films by inflation to give a 120-µm thick second sealant film. In the second sealant film, the thickness of the layer composed of linear low-density polyethylene A was 30 µm, the thickness of the layer composed of high-density polyethylene was 60 µm, and the thickness of the layer composed of linear low-density polyethylene B was 30 µm.

To the surface of an EVOH layer of a barrier substrate obtained in Example 1B, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the first sealant film was attached using this adhesive agent layer. To the surface of the AL deposition film of the barrier substrate, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the second sealant film was attached using this adhesive agent layer. In such a manner, a laminate was obtained.

To the surface of one AL deposition film of a barrier substrate obtained in Example 1B, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the first sealant film was attached using this adhesive agent layer. To the surface of the other AL deposition film of the barrier substrate, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the second sealant film was attached using this adhesive agent layer. In such a manner, a laminate was obtained.

To the surface of a barrier coating layer of barrier substrates obtained in Example 1B, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the first sealant film was attached using this adhesive agent layer. To the surface of an AL deposition film or barrier coating layer of the barrier substrates, a urethane adhesive (RU004/H1, manufactured by Rock Paint Co., Ltd.) was applied. The applied adhesive was dried to form a 3-µm thick adhesive agent layer, and the layer composed of linear low-density polyethylene A of the second sealant film was attached using this adhesive agent layer. In such a manner, laminates were obtained.

### [EXAMPLE 2C]

Laminates were obtained in the same manner as in Example 1C, except that the barrier substrates obtained in Example 2B were used.

### [EXAMPLE 3C]

Laminates were obtained in the same manner as in Example 1C, except that the barrier substrates obtained in Example 3B were used.

### [COMPARATIVE EXAMPLE 1C]

A laminate was obtained in the same manner as in Example 1C, except that the barrier substrate obtained in Comparative Example 1B was used.

### [EXAMPLE 1D]

Linear low-density polyethylene A (Dowlex 2098P, manufactured by The Dow Chemical Company; density, 0.926 g/cm³), high-density polyethylene (HI-ZEX 3300F, manufactured by Prime Polymer Co., Ltd.; density, 0.949 g/cm³), and linear low-density polyethylene B (Dowlex 2098P, manufactured by The Dow Chemical Company; density, 0.926 g/cm³) were coextruded to form films by inflation to give a 50-µm thick third sealant film. In the third sealant film, the thickness of the layer composed of linear low-density polyethylene A was 12.5 µm, the thickness of the layer composed of high-density polyethylene was 25 µm, and the thickness of the layer composed of linear low-density polyethylene B was 12.5 µm.

Linear low-density polyethylene A (Dowlex 2098P, manufactured by The Dow Chemical Company; density, 0.926 g/cm³), high-density polyethylene (HI-ZEX 3300F, manufactured by Prime Polymer Co., Ltd.; density, 0.949 g/cm³), and linear low-density polyethylene B (Dowlex 2098P, manufactured by The Dow Chemical Company; density, 0.926 g/cm³) were coextruded to form films by inflation to give a 108-µm thick fourth sealant film. In the fourth sealant film, the thickness of the layer composed of linear low-density polyethylene A was 27 µm, the thickness of the layer composed of high-density polyethylene was 54 µm, and the thickness of the layer composed of linear low-density polyethylene B was 27 µm.

Onto the surface of an EVOH layer of a barrier substrate obtained in Example 1B, a blend of 70% by mass of AFFINITY PT 1450 (manufactured by The Dow Chemical Company; a polyolefin plastomer; density, 0.902 g/cm³; MFR, 8.5 g/10 minutes) and 30% by mass of NUCREL AE (manufactured by The Dow Chemical Company; an ethylene-methacrylic acid-acrylate terpolymer; density, 0.920 g/cm³; MFR, 10 g/10 minutes; melting point, 105°C) (hereinafter also referred to as "blend A") was extruded at 270°C to form a 20-µm thick extruded resin layer. Using this extruded resin layer, the layer composed of linear low-density polyethylene A of the third sealant film was attached. Onto the surface of the AL deposition film of the barrier substrate, blend A was extruded at 270°C to form a 17-µm thick extruded resin layer. Using this extruded resin layer, the layer composed of linear low-density polyethylene A of the fourth sealant film was attached. In such a manner, a laminate was obtained.

Onto the surface of one AL deposition film of a barrier substrate obtained in Example 1B, blend A was extruded at 270°C to form a 20-µm thick extruded resin layer. Using this extruded resin layer, the layer composed of linear low-density polyethylene A of the third sealant film was attached. Onto the surface of the other AL deposition film of the barrier substrate, blend A was extruded at 270°C to form a 17-µm thick extruded resin layer. Using this extruded resin layer, the layer composed of linear low-density polyethylene A of the fourth sealant film was attached.

Onto the surface of a barrier coating layer of barrier substrates obtained in Example 1B, blend A was extruded at 270°C to form a 20-µm thick extruded resin layer. Using this extruded resin layer, the layer composed of linear low-density polyethylene A of the third sealant film was attached. Onto the surface of an AL deposition film or barrier coating layer of the barrier substrates, blend A was extruded at 270°C to form a 17-µm thick extruded resin layer. Using this extruded resin layer, the layer composed of linear low-density polyethylene A of the fourth sealant film was attached.

### [EXAMPLE 2D]

Laminates were obtained in the same manner as in Example 1D, except that the barrier substrates obtained in Example 2B were used.

### [EXAMPLE 3D]

Laminates were obtained in the same manner as in Example 1D, except that the barrier substrates obtained in Example 3B were used.

### [COMPARATIVE EXAMPLE 1D]

A laminate was obtained in the same manner as in Example 1D, except that the barrier substrate obtained in Comparative Example 1B was used.

### [Gas Barrier Properties Evaluations]

For the above stretched substrates, stretched polyethylene films, biaxially oriented polyester film, barrier substrates, or laminates (hereinafter also collectively referred to as "the test specimens"), the oxygen transmission rate (cc/(m²·day·atm)) and the water vapor transmission rate (g/(m²·day)) were measured by the following methods. The results are presented in the respective tables.

### <Oxygen Transmission Rate>

Using an oxygen permeation analyzer (OX-TRAN 2/20, manufactured by MOCON, Inc.), the oxygen transmission rate of the test specimen in an environment at a temperature of 23°C and a humidity of 50% RH or in an environment at a temperature of 23°C and a humidity of 90% RH was measured according to JIS K7126-2: 2006. When the test specimen was any of the stretched substrates in Examples 1A to 8A, the test specimen was positioned such that the surface of the first polyethylene layer of the stretched substrate would face the oxygen supply side. When the test specimen was any of the barrier substrates in Examples 1A to 8A and Comparative Examples 1A and 2A, the test specimen was positioned such that the surface of the stretched substrate of the barrier substrate would face the oxygen supply side.
A: The oxygen transmission rate is less than 0.1.
B: The oxygen transmission rate is 0.1 or more and less than 1.0.
C: The oxygen transmission rate is 1.0 or more and less than 2.0.
D: The oxygen transmission rate is 2.0 or more and less than 10.
E: The oxygen transmission rate is 10 or more and less than 30.
F: The oxygen transmission rate is 30 or more and less than 100.
G: The oxygen transmission rate is 100 or more.

### <Water Vapor Transmission Rate>

Using a water vapor permeation analyzer (PERMATRAN-w 3/33, manufactured by MOCON, Inc.), the water vapor transmission rate of the test specimen in an environment at a temperature of 40°C and a humidity of 90% RH was measured according to JIS K7129-2: 2019. When the test specimen was any of the stretched substrates in Examples 1A to 8A, the test specimen was positioned such that the surface of the first polyethylene layer of the stretched substrate would face the water vapor supply side. When the test specimen was any of the barrier substrates in Examples 1A to 8A and Comparative Examples 1A and 2A, the test specimen was positioned such that the surface of the stretched substrate of the barrier substrate would face the water vapor supply side.
A: The water vapor transmission rate is less than 0.3.
B: The water vapor transmission rate is 0.3 or more and less than 1.0.
C: The water vapor transmission rate is 1.0 or more and less than 3.0.
D: The water vapor transmission rate is 3.0 or more and less than 5.0.
E: The water vapor transmission rate is 5.0 or more and less than 10.
F: The water vapor transmission rate is 10 or more.

### [Table 1]

**Table 1**

| | Example 1A | Example 2A | Example 3A | Example 4A | Example 5A | Example 6A | Example 7A | Example 8A | Comparative example 1A | Comparative example 2A |
|---|---|---|---|---|---|---|---|---|---|---|
| Structure of the stretched substrate | | | | | | | | | | |
| Barrier resin layer | EVOH layer | EVOH layer | EVOH layer | EVOH layer | EVOH layer | EVOH layer | EVOH layer | EVOH layer | | |
| | 2.5 µm | 5 µm | 2.5 µm | 5 µm | 2.5 µm | 5 µm | 2.5 µm | 5 µm | | |
| Adhesive resin layer | AD layer | AD layer | AD layer | AD layer | AD layer | AD layer | AD layer | AD layer | | |
| | 2.5 µm | 2.5 µm | 2.5 µm | 2.5 µm | 2.5 µm | 2.5 µm | 2.5 µm | 2.5 µm | | |
| Third polyethylene layer | LLDPE layer | LLDPE layer | BPE(C) layer | BPE(C) layer | LLDPE layer | LLDPE layer | BPE(C) layer | BPE(C) layer | | |
| | | | LLDPE 80% | | | | LLDPE 80% | | | |
| | | | Compatibilizer 20% | | | | Compatibilizer 20% | | | |
| | 12 µm | 10.5 µm | 12 µm | 10.5 µm | 12 µm | 10.5 µm | 12 µm | 10.5 µm | Single layer of MDPE | Biaxially oriented polyester film |
| Second polyethylene layer | BPE(A) layer | BPE(A) layer | BPE(A) layer | BPE(A) layer | BPE(A) layer | BPE(A) layer | BPE(A) layer | BPE(A) layer | | |
| | LLDPE 60% | | | | | | | | | |
| | MDPE 40% | | | | | | | | | |
| | 4 µm | 3.5 µm | 4 µm | 3.5 µm | 4 µm | 3.5 µm | 4 µm | 3.5 µm | | |
| First polyethylene layer | BPE(B) layer | BPE(B) layer | BPE(B) layer | BPE(B) layer | BPE(D) layer | BPE(D) layer | BPE(D) layer | BPE(D) layer | | |
| | MDPE 70% | | | | MDPE 70% | | | | | |
| | LLDPE 30% | | | | LLDPE 30% | | | | | |
| | 4 µm | 3.5 µm | 4 µm | 3.5 µm | 4 µm | 3.5 µm | 4 µm | 3.5 µm | | |
| Total thickness of the stretched substrate | 25 µm | 25 µm | 25 µm | 25 µm | 25 µm | 25 µm | 25 µm | 25 µm | 25 µm | 25 µm |
| Physical characteristics of the strectched base material | | | | | | | | | | |
| Oxygen transmission rate cc/(m²·day·atm) (23°C. 50%) | 8.0 | 4.0 | 8.3 | 4.1 | 7.9 | 4.0 | 8.2 | 4.2 | > 250 | 78 |
| | D | D | D | D | D | D | D | D | G | F |
| Water vapor transmission rate g/(m²·day) (40°C. 90%) | 8.8 | 9.3 | 9.0 | 9.6 | 8.5 | 9.1 | 9.2 | 9.5 | 8.7 | > 30 |
| | E | E | E | E | E | E | E | E | E | F |

| Physical characteristics of the AL-deposited -deposited stretched substrate | | | | | | | | | | |
|---|---|---|---|---|---|---|---|---|---|---|
| Oxygen transmission rate cc/f m²·day·atm) (23°C. 50%) | 0.3 | 0.2 | 0.3 | 0.2 | 0.3 | 0.2 | 0.3 | 0.2 | 190 | 1.5 |
| | B | B | B | B | B | B | B | B | G | C |
| Water vapor transmission rate g/m²·day)(40°C, 90%) | 0.4 | 0.3 | 0.4 | 0.3 | 0.4 | 0.3 | 0.4 | 0.3 | 1.2 | 1.0 |
| | B | B | B | B | B | B | B | B | C | C |

| | | | | | | | | | | |
|---|---|---|---|---|---|---|---|---|---|---|
| AD layer: Adhesive resin layer BPE (A) to (D) layers: Blended polyethylene (A) to (D) layers | | | | | | | | | | |

### [Table 2]

**Table 2**

| | Example 1B | | | | | | Example 2B | | | | | | Example 3B | | | | | | Comparative example 1B |
|---|---|---|---|---|---|---|---|---|---|---|---|---|---|---|---|---|---|---|---|
| Structure of the barrier substrate | | | | | | | | | | | | | | | | | | | |
| Second barrier coating layer | | | | | Yes | Yes | | | | | Yes | Yes | | | | | Yes | Yes | |
| Second vapor deposition film | AL | AL | AL | AL | Alumina | Silica | AL | AL | AL | AL | Alumina | Silica | AL | AL | AL | AL | Alumina | Silica | AL |
| Second barrier resin layer | EVOH layer | | | | | | EVOH layer | | | | | | EVOH layer | | | | | | |
| | 2 µm µm | | | | | | 2 µm | | | | | | 2 µm | | | | | | |
| Second adhesive resin layer | 2.5 µm | | | | | | 2.5 µm | | | | | | 2.5 µm | | | | | | |
| Third-b polyethylene layer | BPE( A) layer | | | | | | LLDPE layer | | | | | | BPE(A) layer | | | | | | |
| | LLDPE 60% | | | | | | | | | | | | | | | | | | |
| | MDPE 40% | | | | | | | | | | | | | | | | | | |
| | 5 µm | | | | | | 5 µm | | | | | | 5 µm | | | | | | |
| Second-b polyethylene layer | LLDPE layer | | | | | | LLDPE layer | | | | | | BPE(C) layer | | | | | | |
| | | | | | | | | | | | | | LLDPE 80% | | | | | | |
| | | | | | | | | | | | | | Compatibilizer 20% | | | | | | |
| | 1.5 µm | | | | | | 1.5 µm | | | | | | 1.5 µm | | | | | | Single layer of MDPE |
| First-b polyethylene layer | BPE(E) layer | | | | | | BPE(E) layer | | | | | | BPE(E) layer | | | | | | |
| | POP1 80% | | | | | | | | | | | | | | | | | | |
| | POP2 20% | | | | | | | | | | | | | | | | | | |
| | 1.5 µm | | | | | | 1.5 µm | | | | | | 1.5 µm | | | | | | |
| First-a polyethylene layer | BPE(E) layer | | | | | | BPE(E) layer | | | | | | BPE(E) layer | | | | | | |
| | POP1 80% | | | | | | | | | | | | | | | | | | |
| | POP2 20% | | | | | | | | | | | | | | | | | | |
| | 1.5 µm | | | | | | 1.5 µm | | | | | | 1.5 µm | | | | | | |
| Second-a polyethylene layer | LLDPE layer | | | | | | LLDPE layer | | | | | | BPE(C) layer | | | | | | |
| | | | | | | | | | | | | | | | | | | | |
| | 1.5 µm | | | | | | 1.5 µm | | | | | | 1.5 µm | | | | | | |
| Third-a polyethylene layer | BPE(A) layer | | | | | | LLDPE layer | | | | | | BPE(A) layer | | | | | | |
| | LLDPE 60% | | | | | | | | | | | | | | | | | | |
| | MDPE 40% | | | | | | | | | | | | | | | | | | |
| | 5 µm | | | | | | 5 µm | | | | | | 5 µm | | | | | | |
| First adhesive resin layer | 2.5 µm | | | | | | 2.5 µm | | | | | | 2.5 µm | | | | | | |
| First barrier resin layer | EVOH layer | | | | | | EVOH layer | | | | | | EVOH layer | | | | | | |
| | 2 µm | | | | | | 2 µm | | | | | | 2 µm | | | | | | |
| First vapor deposition film | | AL | Alumina | Silica | Alumina | Silica | | AL | Alumina | Silica | Alumina | Silica | | AL | Alumina | Silica | Alumina | Silica | AL |
| First barrier coating layer | | | Yes | Yes | Yes | Yes | | | Yes | Yes | Yes | Yes | | | Yes | Yes | Yes | Yes | |
| Total thickness of the stretched substrate | 25 µm | | | | | | 25 µm | | | | | | 25 µm | | | | | | 25 µm |
| Physical characteristics of the AL-deposited stretched substrate | | | | | | | | | | | | | | | | | | | |
| Oxygen transmission rate cc/(m²·day·atm) (23°C. 50%) | 0.2 | 0.05 | 0.1 | 0.1 | 0.8 | 0.4 | 0.2 | 0.05 | 0.1 | 0.1 | 0.8 | 0.4 | 0.2 | 0.06 | 0.1 | 0.1 | 0.8 | 0.4 | 100 |
| | B | A | B | B | B | B | B | A | B | B | B | B | B | A | B | B | B | B | G |
| Water vapor transmission rate g/m²·day)(40°C90%) | 0.2 | 0.05 | 0.2 | 0.2 | 0.5 | 0.3 | 0.2 | 0.05 | 0.2 | 0.2 | 0.5 | 0.3 | 0.2 | 0.05 | 0.2 | 0.2 | 0.5 | 0.3 | 0.9 |
| | A | A | A | A | B | B | A | A | A | A | B | B | A | A | A | A | B | B | B |

BPE(A) to (E) layers: Blended polyethylene (A) to (E) layers

### [Table 3]

**Table 3**

| | | Example 1C | | | | | | Example 2C | | | | | | Example 3C | | | | | | Comparative example 1C |
|---|---|---|---|---|---|---|---|---|---|---|---|---|---|---|---|---|---|---|---|---|
| Second heat-sealing layer | | Second sealant film (120 µm) | | | | | | | | | | | | | | | | | | |
| Second adhesive agent layer | | Adhesive agent layer (3 µm) | | | | | | | | | | | | | | | | | | |
| | Second barrier coating layer | | | | | Yes | Yes | | | | | Yes | Yes | | | | | Yes | Yes | |
| | Second vapor deposition film | AL | AL | AL | AL | Alumina | Silica | AL | AL | AL | AL | Alumina | Silica | AL | AL | AL | AL | Alumina | Silica | AL |
| | Second barrier resin layer | EVOH layer | | | | | | EVOH layer | | | | | | EVOH layer | | | | | | |
| | | 2 µm | | | | | | 2 µm | | | | | | 2 µm | | | | | | |
| | Second adhesive resin layer | 2.5 µm | | | | | | 2.5 µm | | | | | | 2.5 µm | | | | | | |
| | Third-b polyethylene layer | BPE(A) layer | | | | | | LLDPE layer | | | | | | BPE(A) layer | | | | | | |
| | | LLDPE 60% | | | | | | | | | | | | | | | | | | |
| | | MDPE 40% | | | | | | | | | | | | | | | | | | |
| | | 5 µm | | | | | | 5 µm | | | | | | 5 µm | | | | | | |
| | Second-b polyethylene layer | LLDPE layer | | | | | | LLDPE layer | | | | | | BPE(C) layer | | | | | | |
| | | | | | | | | | | | | | | LLDPE 80% | | | | | | Single layer of MDPE |
| Barrier substrate | | | | | | | | | | | | | | Compatibilizer 20% | | | | | | |
| | | 1.5 µm | | | | | | 1.5 µm | | | | | | 1.5 µm | | | | | | |
| | First-b polyethylene layer | BPE(E) layer | | | | | | BPE(E) layer | | | | | | BPE(E) layer | | | | | | |
| | | POP1 80% | | | | | | | | | | | | | | | | | | |
| | | POP2 20% | | | | | | | | | | | | | | | | | | |
| | | 1.5 µm | | | | | | 1.5 µm | | | | | | 1.5 µm | | | | | | |
| | First-a polyethylene layer | BPE(E) layer | | | | | | BPE(E) layer | | | | | | BPE(E) layer | | | | | | |
| | | POP1 80% | | | | | | | | | | | | | | | | | | |
| | | POP2 20% | | | | | | | | | | | | | | | | | | |
| | | 1.5 µm | | | | | | 1.5 µm | | | | | | 1.5 µm | | | | | | |
| | Second-a polyethylene layer | LLDPE layer | | | | | | LLDPE layer | | | | | | BPE(C) layer | | | | | | |
| | | | | | | | | | | | | | | LLDPE 80% | | | | | | |
| | | | | | | | | | | | | | | Compatibilizer 20% | | | | | | |
| | | 1.5 µm | | | | | | 1.5 µm | | | | | | 1.5 µm | | | | | | |
| | Third-a polyethylene layer | BPE(A) layer | | | | | | LLDPE layer | | | | | | BPE(A) layer | | | | | | |
| | | LLDPE 60% | | | | | | | | | | | | | | | | | | |
| | | MDPE 40% | | | | | | | | | | | | | | | | | | |
| | | 5 µm | | | | | | 5 µm | | | | | | 5 µm | | | | | | |
| | First adhesive resin layer | 2.5 µm | | | | | | 2.5 µm | | | | | | 2.5 µm | | | | | | |
| | First barrier resin layer | EVOH layer | | | | | | EVOH layer | | | | | | EVOH layer | | | | | | |
| | | 2 µm | | | | | | 2 µm | | | | | | 2 µm | | | | | | |
| | First vapor deposition film | | AL | Alumina | Silica | Alumina | Silica | | AL | Alumina | Silica | Alumina | Silica | | AL | Alumina | Silica | Alumina | Silica | AL |
| | First barrier coating layer | | | Yes | Yes | Yes | Yes | | | Yes | Yes | Yes | Yes | | | Yes | Yes | Yes | Yes | |
| First adhesive agent layer | | Adhesive agent layer (3 µm) | | | | | | | | | | | | | | | | | | |
| First heat-sealing layer | | First sealant film (70 µm) | | | | | | | | | | | | | | | | | | |
| Physical characteristics of the laminate | | | | | | | | | | | | | | | | | | | | |
| Oxygen transmission rate cc/(m² day·atm) (23°C, 50%) | | 0.2 | 0.05 | 0.1 | 0.1 | 0.8 | 0.4 | 0.2 | 0.05 | 0.1 | 0.1 | 0.8 | 0.4 | 0.2 | 0.05 | 0.1 | 0.1 | 0.8 | 0.4 | 50 |
| Water vapor transmission rate g/(m² day) (40°C, 90%) | | 0.05 | 0.05 | 0.05 | 0.05 | 0.1 | 0.1 | 0.05 | 0.05 | 0.05 | 0.05 | 0.1 | 0.1 | 0.05 | 0.05 | 0.05 | 0.05 | 0.1 | 0.1 | 0.5 |

| | | | | | | | | | | | | | | | | | | | | |
|---|---|---|---|---|---|---|---|---|---|---|---|---|---|---|---|---|---|---|---|---|
| BPE(A) to (E) layers: Blended polyethylene (A) to (E) layers | | | | | | | | | | | | | | | | | | | | |

### [Table 4]

**Table 4**

| | | Example 1D | | | | | | Example 3D | | | | | | Example 3D | | | | | | Comparative example 1D |
|---|---|---|---|---|---|---|---|---|---|---|---|---|---|---|---|---|---|---|---|---|
| Second heat-sealing layer | | Fourth sealant film (108 µm) | | | | | | | | | | | | | | | | | | |
| Second extruded resin layer | | Extruded resin layer (17µm) | | | | | | | | | | | | | | | | | | |
| | Second barrier coating layer | | | | | Yes | Yes | | | | | Yes | Yes | | | | | Yes | Yes | |
| | Second vapor deposition film | AL | AL | AL | AL | Alumina | Silica | AL | AL | AL | AL | Alumina | Silica | AL | AL | AL | AL | Alumina | Silica | AL |
| | Second barrier resin layer | EVOH layer | | | | | | EVOH layer | | | | | | EVOH layer | | | | | | |
| | | 2 µm | | | | | | 2 µm | | | | | | 2 µm | | | | | | |
| | Second adhesive resin layer | 2.5 µm | | | | | | 2.5 µm | | | | | | 2.5 µm | | | | | | |
| | Third-b polyethylene layer | BPE(A) layer | | | | | | LLDPE layer | | | | | | BPE(A) layer | | | | | | |
| | | LLDPE 60% | | | | | | | | | | | | | | | | | | |
| | | MDPE 40% | | | | | | | | | | | | | | | | | | |
| | | 5 µm | | | | | | 5 µm | | | | | | 5 µm | | | | | | |
| | Second-b polyethylene layer | LLDPE layer | | | | | | LLDPE layer | | | | | | BPE(C) layer | | | | | | |
| | | | | | | | | | | | | | | LLDPE 80% | | | | | | |
| | | | | | | | | | | | | | | Compatibilizer 20% | | | | | | |
| | | 1.5 µm | | | | | | 1.5 µm | | | | | | 1.5 µm | | | | | | |
| | First-b polyethylene layer | BPE(E) layer | | | | | | BPE(E) layer | | | | | | BPE(E) layer | | | | | | |
| | | POP1 80% | | | | | | | | | | | | | | | | | | |
| | | POP2 20% | | | | | | | | | | | | | | | | | | |
| | | 1.5 µm | | | | | | 1.5 µm | | | | | | 1.5 µm | | | | | | Single layer of MDPE |
| | First-a polyethylene layer | BPE(E) layer | | | | | | BPE(E) layer | | | | | | BPE(E) layer | | | | | | |
| Barrier substrate | | POP1 80% | | | | | | | | | | | | | | | | | | |
| | | POP2 20 % | | | | | | | | | | | | | | | | | | |
| | | 1.5µm | | | | | | 1.5 µm | | | | | | 1.5 µm | | | | | | |
| | Second-a polyethylene layer | LLDPE layer | | | | | | LLDPE layer | | | | | | BPE(C) layer | | | | | | |
| | | | | | | | | | | | | | | LLDPE 80% | | | | | | |
| | | | | | | | | | | | | | | Compatibilizer 20% | | | | | | |
| | | 1.5 µm | | | | | | 1.5 µm | | | | | | 1.5 µm | | | | | | |
| | Third-a polyethylene layer | BPE(A) layer | | | | | | LLDPE layer | | | | | | BPE(A) layer | | | | | | |
| | | LLDPE 60% | | | | | | | | | | | | | | | | | | |
| | | MDPE 40% | | | | | | | | | | | | | | | | | | |
| | | 5 µm | | | | | | 5 µm | | | | | | 5 µm | | | | | | |
| | First adhesive resin layer | 2.5 µm | | | | | | 2.5 µm | | | | | | 2.5 µm | | | | | | |
| | First barrier resin layer | EVOH layer | | | | | | EVOH layer | | | | | | EVOH layer | | | | | | |
| | | 2 µm | | | | | | 2 µm | | | | | | 2 µm | | | | | | |
| | First vapor deposition film | | AL | Alumina | Silica | Alumina | Silica | | AL | Alumina | Silica | Alumina | Silica | | AL | Alumina | Silica | Alumina | Silica | AL |
| | First barrier coating layer | | | Yes | Yes | Yes | Yes | | | Yes | Yes | Yes | Yes | | | Yes | Yes | Yes | Yes | |
| First extruded resin layer | | Extruded resin layer (20 µm) | | | | | | | | | | | | | | | | | | |
| First heat-sealing layer | | Third sealant film (50 µm) | | | | | | | | | | | | | | | | | | |
| Physical characteristics of the laminate | | | | | | | | | | | | | | | | | | | | |
| Oxygen transmission rate cc/(m² day atm) (23°C, 50%) | | 0.2 | 0.05 | 0.1 | 0.1 | 0.8 | 0.4 | 0.2 | 0.05 | 0.1 | 0.1 | 0.8 | 0.4 | 0.2 | 0.05 | 0.1 | 0.1 | 0.8 | 0.4 | 50 |
| Water vapor transmission rate g/(m² day) (40°C, 90%) | | 0.05 | 0.05 | 0.05 | 0.05 | 0.1 | 0.1 | 0.05 | 0.05 | 0.05 | 0.05 | 0.1 | 0.1 | 0.05 | 0.05 | 0.05 | 0.05 | 0.1 | 0.1 | 0.5 |

| | | | | | | | | | | | | | | | | | | | | |
|---|---|---|---|---|---|---|---|---|---|---|---|---|---|---|---|---|---|---|---|---|
| BPE(A) to (E) layers Blended polyethylene (A) to (E) layers | | | | | | | | | | | | | | | | | | | | |

### [Resistance to Contents]

By extruding first linear low-density polyethylene (SP2520, manufactured by Prime Polymer Co., Ltd.; density, 0.925 g/cm³; melting point, 122°C) and second linear low-density polyethylene (SP1520, manufactured by Prime Polymer Co., Ltd.; density, 0.913 g/cm³; melting point, 116°C) to form a multilayer film by inflation molding, a cast polyethylene film including a 20-µm thick first linear low-density polyethylene layer and a 20-µm thick second linear low-density polyethylene layer was prepared. This cast polyethylene film was used as a heat-sealing layer in the manner described below.

The surface of the first linear low-density polyethylene layer of the cast polyethylene film was attached to the surface of an EVOH layer, an aluminum deposition film, or a barrier coating layer of the barrier substrates in Examples 1B to 3B and Comparative Example 1B by dry lamination using a two-component urethane adhesive (RU-77T/H-7, manufactured by Rock Paint Co., Ltd.). The resulting workpieces were cut to a size of 100 mm × 100 mm, through which laminates were obtained.

Two laminates were brought together such that their heat-sealing layers would face each other. The laminates were heat-sealed under the conditions of a temperature of 140°C, a pressure of 1 kgf/cm², a pressure bonding time of 1 second, and a seal width of 5 mm using a heat seal tester, through which 100 mm × 100 mm bags having an opening was produced. After 20 mL of a softener (product name "Molto," manufactured by Unilever) was introduced through the opening, the opening was sealed by heat sealing under the conditions specified above. The resulting sealed bags were placed in a temperature-controlled chamber at a temperature of 40°C and a humidity of 90% RH and stored for 6 weeks. Then the sealed bags were opened and examined for the lifting or detachment of layers and the degradation or corrosion of the vapor deposition film(s) in the portion of the laminates corresponding to the headspace.

As a result, in Comparative Example 1B and in the examples relating to barrier substrates that included an AL deposition film on both surfaces of the stretched substrate, lifting or detachment of layers or degradation or corrosion of the vapor deposition films was observed in part. In the examples other than the examples relating to barrier substrates that included an AL deposition film on both surfaces of the stretched substrate, by contrast, lifting or detachment of layers and degradation or corrosion of the vapor deposition film(s) was not observed; these examples were better in terms of resistance to contents compared to the examples relating to barrier substrates that included an AL deposition film on both surfaces of the stretched substrate.

The barrier substrates in the examples were superior in gas barrier properties. By using laminates that included the barrier substrates in the examples other than the examples relating to barrier substrates that included an AL deposition film on both surfaces of the stretched substrate, furthermore, packaging bags better in terms of resistance to contents were successfully produced.

### [Lamination Strength Test]

For samples obtained by cutting the laminates in Examples 1C to 3C and Comparative Example 1C into a 15-mm wide strip shape, the lamination strength between a vapor deposition film and a barrier resin layer (N/15 mm) was measured using the T-peel method at a peel speed of 50 mm/min according to JIS K6854-3: 1999 with the use of a tensile tester (TENSILON universal material testing instrument, manufactured by Orientec Corporation). As a result, the lamination strength on the second sealant film side was approximately 3.5 N/15 mm when the vapor deposition film was an AL deposition film and approximately 4.0 N/15 mm when the vapor deposition film was an alumina or silica deposition film, and the lamination strength on the first sealant film side was approximately 7.0 N/15 mm when the vapor deposition film was an AL deposition film and approximately 7.5 N/15 mm when the vapor deposition film was an alumina or silica deposition film.

### [Production of a Tube Container]

A laminate in an example or comparative example was slit to a width of 120 mm using a slitting machine. After both ends in the width direction were overlapped such that the overlap width would be approximately 1.5 mm, the overlapping ends were thermally fused together to give a bonded whole cylinder of the laminate. A cylindrical trunk intended to serve as the trunk of a tube container was prepared by cutting the resulting whole cylinder to 122 mm in the longitudinal direction. With the cylindrical trunk set over a mandrel for tube container molding, a head composed of a shoulder in the shape of a circular truncated cone and an outlet on a cylinder continuous with it was molded at one end of the cylindrical trunk by injection molding of high-density polyethylene (NOVATEC HJ360, manufactured by Japan Polyethylene Corporation; density, 0.951 g/cm³), through which a tube container as illustrated in Fig. 7 was produced. The injection outlet of the head of the resulting tube container body was shaped to an outer diameter of 13 mm and a height of 1.5 mm, and a thread was provided on the side of the injection outlet. The outer diameter of the shoulder, furthermore, was set to 38 mm. Then a cap was produced by injecting the high-density polyethylene specified above into a mold for cap molding and molding it. In this manner, a tube container was obtained.

### [EXAMPLE 1E]

Blended polyethylene (A) was prepared by mixing 60 parts of LLDPE (Exceed XP8656ML) and 40 parts of MDPE (Enable 4002MC).

Blended polyethylene (E) was prepared by mixing 80 parts of polyolefin plastomer 1 (AFFINITY EG8100G) and 20 parts of polyolefin plastomer 2 (AFFINITY PL1881G).

A tubular film was formed by extruding:
PA6/66 (ULTRAMID C33);
an adhesive resin (ADMER AT1955E);
blended polyethylene (A);
LLDPE (Exceed XP8656ML); and
blended polyethylene (E)
in a tubular shape through a multilayer annular die from an extruder using a five-layer coextrusion inflation apparatus and inflating the extruded tube with air pressure while taking it in the vertical direction. The tubular film includes a PA6/66 layer constituting the outer surface of the tube, an adhesive resin layer, a blended polyethylene (A) layer, an LLDPE layer, and a blended polyethylene (E) layer constituting the inner surface of the tube. After the tubular film was flattened by bringing together portions of its inner surface, and surfaces of the blended polyethylene (E) layer were pressure-bonded at a nip point, both ends of the film in the width direction were trimmed away with a predetermined width to yield a single film. The resulting film was stretched four times in the longitudinal direction (MD direction) using a stretching apparatus, through which a stretched substrate was produced.

A stretched substrate obtained in such a manner includes:
a 2-µm thick second surface resin layer (a PA6/66 layer);
a 2.5-µm thick adhesive resin layer;
a 5-µm thick blended polyethylene (A) layer;
a 1.5-µm thick LLDPE layer;
a 1.5-µm thick blended polyethylene (E) layer;
a 1.5-µm thick blended polyethylene (E) layer;
a 1.5-µm thick LLDPE layer;
a 5-µm thick blended polyethylene (A) layer;
a 2.5-µm thick adhesive resin layer; and
a 2-µm thick first surface resin layer (a PA6/66 layer). The total thickness of the stretched substrate was 25 µm.

Three types of barrier substrates were produced as follows.

On the surface of each of the first surface resin layer and the second surface resin layer of the stretched substrate, a 30-nm thick aluminum (AL) deposition film was formed by PVD. In such a manner, a barrier substrate was obtained.

On the surface of each of the first surface resin layer and the second surface resin layer of the stretched substrate, a 30-nm thick alumina deposition film was formed by PVD. The surface of the alumina deposition film was coated with the barrier coating agent obtained in Example 1B by spin coating and subjected to heating treatment for 8 seconds at 100°C in an oven, resulting in the formation of a 0.3-µm thick barrier coating layer. In such a manner, a barrier substrate was obtained.

On the surface of each of the first surface resin layer and the second surface resin layer of the stretched substrate, a 30-nm thick silica deposition film was formed instead of an alumina deposition film. On this silica deposition film, furthermore, a barrier coating layer as described above was formed. In such a manner, a barrier substrate was obtained.

### [EXAMPLES 2E to 4E]

Blended polyamide (A) was prepared by mixing 50 parts of PA6 (ULTRAMID B40) and 50 parts of MXD6 (MX Nylon S6007).

A stretched substrate and barrier substrates were obtained in the same manner as in Example 1E, except that the polyamide constituting the first and second surface resin layers was changed to PA6 (ULTRAMID B40), blended polyamide (A), or MXD6 (MX Nylon S6007) as specified in Table 5.

### [EXAMPLE 5E]

Blended polyethylene (F) was prepared by mixing 70 parts of MDPE (Enable 4002MC) and 30 parts of LLDPE (Exceed 1327MD).

A tubular film was formed by extruding:
PA6/66 (ULTRAMID C33);
an adhesive resin (ADMER AT1955E);
LLDPE (Exceed XP8656ML);
blended polyethylene (A); and
blended polyethylene (F)
in a tubular shape through a multilayer annular die from an extruder using a five-layer coextrusion inflation apparatus and inflating the extruded tube with air pressure while taking it in the vertical direction. The tubular film includes a PA6/66 layer constituting the outer surface of the tube, an adhesive resin layer, an LLDPE layer, a blended polyethylene (A) layer, and a blended polyethylene (F) layer constituting the inner surface of the tube. After the tubular film was flattened by bringing together portions of its inner surface, both ends of the tubular film in the width direction were trimmed away with a predetermined width to separate the film into two. Each resulting film was stretched four times in the longitudinal direction (MD direction) using a stretching apparatus, through which a stretched substrate was produced.

A stretched substrate obtained in such a manner includes:
a 2.5-µm thick second surface resin layer (a PA6/66 layer);
a 2.5-µm thick adhesive resin layer;
a 12-µm thick second polyethylene layer (an LLDPE layer);
a 4-µm thick first polyethylene layer (a blended polyethylene (A) layer); and
a 4-µm thick first surface resin layer (a blended polyethylene (F) layer). The total thickness of the stretched substrate was 25 µm.

Three types of barrier substrates were produced as follows.

On the surface of the second surface resin layer of the stretched substrate, a 30-nm thick aluminum (AL) deposition film was formed by PVD. In such a manner, a barrier substrate was obtained.

On the surface of the second surface resin layer of the stretched substrate, a 30-nm thick alumina deposition film was formed by PVD. The surface of the alumina deposition film was coated with the barrier coating agent obtained in Example 1B by spin coating and subjected to heating treatment for 8 seconds at 100°C in an oven, resulting in the formation of a 0.3-µm thick barrier coating layer. In such a manner, a barrier substrate was obtained.

On the surface of the second surface resin layer of the stretched substrate, a 30-nm thick silica deposition film was formed instead of an alumina deposition film. On this silica deposition film, furthermore, a barrier coating layer as described above was formed. In such a manner, a barrier substrate was obtained.

### [EXAMPLES 6E to 8E]

A stretched substrate and barrier substrates were obtained in the same manner as in Example 5E, except that the polyamide constituting the second surface resin layer was changed to PA6 (ULTRAMID B40), blended polyamide (A), or MXD6 (MX Nylon S6007) as specified in Table 6.

### [EXAMPLE 1F]

Blended polyethylene (A) was prepared by mixing 60 parts of LLDPE (Exceed XP8656ML) and 40 parts of MDPE (Enable 4002MC).

Blended polyethylene (G) was prepared by mixing 90 parts of LLDPE (Exceed XP8656ML) and 10 parts of acid-modified LLDPE (OREVAC 18302N).

A tubular film was formed by extruding:
blended polyethylene (G);
blended polyethylene (A);
LLDPE (Exceed XP8656ML);
blended polyethylene (A); and
blended polyethylene (G)
in a tubular shape through a multilayer annular die from an extruder using a five-layer coextrusion inflation apparatus and inflating the extruded tube with air pressure while taking it in the vertical direction. The tubular film includes a blended polyethylene (G) layer constituting the outer surface of the tube, a blended polyethylene (A) layer, an LLDPE layer, a blended polyethylene (A) layer, and a blended polyethylene (G) layer constituting the inner surface of the tube. After the tubular film was flattened by bringing together portions of its inner surface, both ends of the tubular film in the width direction were trimmed away with a predetermined width to separate the film into two. Each resulting film was stretched four times in the longitudinal direction (MD direction) using a stretching apparatus, through which a stretched substrate was produced.

A stretched substrate obtained in such a manner includes:
a 3-µm thick second surface resin layer (a blended polyethylene (G) layer);
a 4-µm thick third polyethylene layer (a blended polyethylene (A) layer);
an 11-µm thick second polyethylene layer (an LLDPE layer);
a 4-µm thick first polyethylene layer (a blended polyethylene (A) layer); and
a 3-µm thick first surface resin layer (a blended polyethylene (G) layer). The total thickness of the stretched substrate was 25 µm.

Three types of barrier substrates were produced as follows.

On the surface of each of the first surface resin layer and the second surface resin layer of the stretched substrate, a 30-nm thick aluminum (AL) deposition film was formed by PVD. In such a manner, a barrier substrate was obtained.

On the surface of each of the first surface resin layer and the second surface resin layer of the stretched substrate, a 30-nm thick alumina deposition film was formed by PVD. The surface of the alumina deposition film was coated with the barrier coating agent obtained in Example 1B by spin coating and subjected to heating treatment for 8 seconds at 100°C in an oven, resulting in the formation of a 0.3-µm thick barrier coating layer. In such a manner, a barrier substrate was obtained.

On the surface of each of the first surface resin layer and the second surface resin layer of the stretched substrate, a 30-nm thick silica deposition film was formed instead of an alumina deposition film. On this silica deposition film, furthermore, a barrier coating layer as described above was formed. In such a manner, a barrier substrate was obtained.

### [EXAMPLE 2F]

Blended polyethylene (E) was prepared by mixing 80 parts of polyolefin plastomer 1 (AFFINITY EG8100G) and 20 parts of polyolefin plastomer 2 (AFFINITY PL1881G).

A tubular film was formed by extruding:
blended polyethylene (G);
blended polyethylene (A);
blended polyethylene (A);
LLDPE (Exceed XP8656ML); and
blended polyethylene (E)
in a tubular shape through a multilayer annular die from an extruder using a five-layer coextrusion inflation apparatus and inflating the extruded tube with air pressure while taking it in the vertical direction. The tubular film includes a blended polyethylene (G) layer constituting the outer surface of the tube, a blended polyethylene (A) layer, a blended polyethylene (A) layer, an LLDPE layer, and a blended polyethylene (E) layer constituting the inner surface of the tube. After the tubular film was flattened by bringing together portions of its inner surface, and surfaces of the blended polyethylene (E) layer were pressure-bonded at a nip point, both ends of the film in the width direction were trimmed away with a predetermined width to yield a single film. The resulting film was stretched four times in the longitudinal direction (MD direction) using a stretching apparatus, through which a stretched substrate was produced.

A stretched substrate obtained in such a manner includes:
a 2-µm thick second surface resin layer (a blended polyethylene (G) layer);
a 2.5-µm thick blended polyethylene (A) layer;
a 5-µm thick blended polyethylene (A) layer;
a 1.5-µm thick LLDPE layer;
a 1.5-µm thick blended polyethylene (E) layer;
a 1.5-µm thick blended polyethylene (E) layer;
a 1.5-µm thick LLDPE layer;
a 5-µm thick blended polyethylene (A) layer;
a 2.5-µm thick blended polyethylene (A) layer; and
a 2-µm thick first surface resin layer (a blended polyethylene (G) layer). The total thickness of the stretched substrate was 25 µm.

Using this stretched substrate, three types of barrier substrates were produced in the same manner as in Example 1F.

### [EXAMPLE 3F]

Two films were prepared in the same manner as in Example 1F using:
an EVOH (EVAL E171B);
an adhesive resin (ADMER AT1955E);
LLDPE (Exceed XP8656ML);
blended polyethylene (A); and
blended polyethylene (G). Then each resulting film was stretched four times in the longitudinal direction (MD direction) using a stretching apparatus, through which a stretched substrate was produced.

A stretched substrate obtained in such a manner includes:
a 2.5-µm thick second surface resin layer (an EVOH layer);
a 2.5-µm thick adhesive resin layer;
a 12-µm thick second polyethylene layer (an LLDPE layer);
a 5-µm thick first polyethylene layer (a blended polyethylene (A) layer); and
a 3-µm thick first surface resin layer (a blended polyethylene (G) layer). The total thickness of the stretched substrate was 25 µm.

Using this stretched substrate, three types of barrier substrates were produced in the same manner as in Example 1F.

### [EXAMPLE 1G]

Blended polyethylene (A) was prepared by mixing 60 parts of LLDPE (Exceed XP8656ML) and 40 parts of MDPE (Enable 4002MC).

Blended polyethylene (B) was prepared by mixing 70 parts of MDPE (Enable 4002MC) and 30 parts of LLDPE (Exceed 1327MD).

Blended polyethylene (G) was prepared by mixing 90 parts of LLDPE (Exceed XP8656ML) and 10 parts of acid-modified LLDPE (OREVAC 18302N).

A tubular film was formed by extruding:
blended polyethylene (G);
blended polyethylene (A);
LLDPE (Exceed XP8656ML);
blended polyethylene (A); and
blended polyethylene (B)
in a tubular shape through a multilayer annular die from an extruder using a five-layer coextrusion inflation apparatus and inflating the extruded tube with air pressure while taking it in the vertical direction. The tubular film includes a blended polyethylene (G) layer constituting the outer surface of the tube, a blended polyethylene (A) layer, an LLDPE layer, a blended polyethylene (A) layer, and a blended polyethylene (B) layer constituting the inner surface of the tube. After the tubular film was flattened by bringing together portions of its inner surface, both ends of the tubular film in the width direction were trimmed away with a predetermined width to separate the film into two. Each resulting film was stretched four times in the longitudinal direction (MD direction) using a stretching apparatus, through which a stretched substrate was produced.

A stretched substrate obtained in such a manner includes:
a 3-µm thick second surface resin layer (a blended polyethylene (G) layer);
a 4-µm thick third polyethylene layer (a blended polyethylene (A) layer);
an 11-µm thick second polyethylene layer (an LLDPE layer);
a 4-µm thick first polyethylene layer (a blended polyethylene (A) layer); and
a 3-µm thick first surface resin layer (a blended polyethylene (B) layer). The total thickness of the stretched substrate was 25 µm.

Three types of barrier substrates were produced as follows.

On the surface of the second surface resin layer of the stretched substrate, a 30-nm thick aluminum (AL) deposition film was formed by PVD. In such a manner, a barrier substrate was obtained.

On the surface of the second surface resin layer of the stretched substrate, a 30-nm thick alumina deposition film was formed by PVD. The surface of the alumina deposition film was coated with the barrier coating agent obtained in Example 1B by spin coating and subjected to heating treatment for 8 seconds at 100°C in an oven, resulting in the formation of a 0.3-µm thick barrier coating layer. In such a manner, a barrier substrate was obtained.

On the surface of the second surface resin layer of the stretched substrate, a 30-nm thick silica deposition film was formed instead of an alumina deposition film. On this silica deposition film, furthermore, a barrier coating layer as described above was formed. In such a manner, a barrier substrate was obtained.

### [COMPARATIVE EXAMPLE 1]

A 25-µm thick stretched substrate was produced by extruding MDPE (ELITE 5538G) to form a single-layer film by inflation molding and then stretching the resulting film four times in the longitudinal direction (MD direction) using a stretching apparatus. Using this stretched substrate, three types of barrier substrates were produced in the same manner as in Examples 1E, 5E, 1F, 3F, and 1G.

### [Gas Barrier Properties Evaluations]

For each stretched substrate and each barrier substrate obtained in the examples and comparative example (hereinafter also referred to as "the test specimens"), the oxygen transmission rate (cc/(m²·day·atm)) and the water vapor transmission rate (g/(m²·day)) were measured by the following methods. The results are presented in the respective tables.

### <Oxygen Transmission Rate>

Using an oxygen permeation analyzer (OX-TRAN 2/20, manufactured by MOCON, Inc.), the oxygen transmission rate of the test specimen in an environment at a temperature of 23°C and a humidity of 90% RH was measured according to JIS K7126-2: 2006.

The evaluation criteria in Examples 1E to 8E, Examples 1F to 3F, and the portion of Comparative Example 1 presented in the same tables as these examples are as follows.
A: The oxygen transmission rate is less than 0.2.
B: The oxygen transmission rate is 0.2 or more and less than 0.8.
C: The oxygen transmission rate is 0.8 or more and less than 2.0.
D: The oxygen transmission rate is 2.0 or more and less than 10.
E: The oxygen transmission rate is 10 or more and less than 30.
F: The oxygen transmission rate is 30 or more and less than 100.
G: The oxygen transmission rate is 100 or more.

The evaluation criteria in Example 1G and the portion of Comparative Example 1 presented in the same table as this example are as follows.
A: The oxygen transmission rate is less than 2.0.
B: The oxygen transmission rate is 2.0 or more and less than 5.0.
C: The oxygen transmission rate is 5.0 or more and less than 10.
D: The oxygen transmission rate is 10 or more and less than 30.
E: The oxygen transmission rate is 30 or more and less than 100.
F: The oxygen transmission rate is 100 or more.

### <Water Vapor Transmission Rate>

Using a water vapor permeation analyzer (PERMATRAN-w 3/33, manufactured by MOCON, Inc.), the water vapor transmission rate of the test specimen in an environment at a temperature of 40°C and a humidity of 90% RH was measured according to JIS K7129-2: 2019.

The evaluation criteria in Examples 1E to 8E, Examples 1F to 3F, and the portion of Comparative Example 1 presented in the same tables as these examples are as follows.
A: The water vapor transmission rate is less than 0.2.
B: The water vapor transmission rate is 0.2 or more and less than 0.8.
C: The water vapor transmission rate is 0.8 or more and less than 3.0.
D: The water vapor transmission rate is 3.0 or more and less than 5.0.
E: The water vapor transmission rate is 5.0 or more and less than 10.
F: The water vapor transmission rate is 10 or more and less than 100.
G: The water vapor transmission rate is 100 or more.

The evaluation criteria in Example 1G and the portion of Comparative Example 1 presented in the same table as this example are as follows.
A: The water vapor transmission rate is less than 2.0.
B: The water vapor transmission rate is 2.0 or more and less than 3.0.
C: The water vapor transmission rate is 3.0 or more and less than 5.0.
D: The water vapor transmission rate is 5.0 or more and less than 8.0.
E: The water vapor transmission rate is 8.0 or more and less than 10.
F: The water vapor transmission rate is 10 or more.

### [T-Peel Test]

To the surface of a vapor deposition film or the surface of a barrier coating layer of each barrier substrate obtained in the examples and comparative example, a 20-µm thick general OPP film, with one surface corona-treated, was attached using a urethane adhesive (RU77T/H7, manufactured by Rock Paint Co., Ltd.) at an application amount of 3 g/m², through which a 15-mm wide test specimen was prepared. In accordance with JIS K6854-3: 1999 (Adhesives-Determination of peel strength of bonded assemblies-Part 3: Adhesives-180° peel test for flexible-to-flexible bonded assemblies (T-peel test)), the peel strength (N/15 mm) of the vapor deposition film for each layer was measured by performing a T-peel test using a tensile tester (TENSILON universal material testing instrument, manufactured by Orientec Corporation) under the following conditions: test speed, 50 mm/min; temperature, 23°C. The results are presented in the respective tables.

### [Table 5]

**Table 5**

| | Example 1E | | | | Example 2E | | | | Example 3E | | | | Example 4E | | | | Comparative example 1 | | | |
|---|---|---|---|---|---|---|---|---|---|---|---|---|---|---|---|---|---|---|---|---|
| Structure of the stretched substrate or barrier substrate | | | | | | | | | | | | | | | | | | | | |
| Second barrier coating layer | | | Yes | Yes | | | Yes | Yes | | | Yes | Yes | | | Yes | Yes | | | Yes | Yes |
| Second vapor deposition film | | AL | Alumina | Silica | | AL | Alumina | Silica | | AL | Alumina | Silica | | AL | Alumina | Silica | | AL | Alumina | Silica |
| Second surface resin layer | PA 6/66 | | | | P A6 | | | | PA6 50% MXD6 50% | | | | MXD6 | | | | | | | |
| | 2 µm | | | | <- | | | | <- | | | | <- | | | | | | | |
| Second adhesive resin layer | Adhesive resin | | | | <- <- | | | | <- | | | | <- | | | | | | | |
| | 2.5 | | | | <- <- | | | | | | | | <- | | | | | | | |
| Third-b polyethylene layer | LLDPE 60% | | | | <- <- | | | | <- | | | | <- | | | | | | | |
| | MDPE 40% | | | | | | | | | | | | | | | | | | | |
| | 5 µm | | | | <- <- | | | | <- | | | | <- | | | | | | | |
| Second-b polyethlene layer | LLD PE | | | | <- <- | | | | <- | | | | <- | | | | | | | |
| | 1.5 µm | | | | <- <- | | | | <- | | | | <- | | | | | | | |
| First-b polyethylene layer | POP1 80% | | | | <- <- | | | | <- | | | | <- | | | | | | | |
| | POP2 20% | | | | | | | | | | | | | | | | | | | |
| | 1.5 µm | | | | <- <- | | | | <- | | | | <- | | | | | | | |
| First-a polyethylene layer | POP1 180% | | | | <- <- | | | | <- | | | | <- | | | | | | | |
| | POP2 220% | | | | | | | | | | | | | | | | Polyethylene MDPE 25 µm | | | |
| | 1.5 µm | | | | <- <- | | | | <- | | | | <- | | | | | | | |
| Second-a polyethylene layer | LLD PE | | | | <- <- | | | | <- | | | | <- - | | | | | | | |
| | 1.5 µm | | | | <- <- | | | | <- | | | | <- | | | | | | | |
| Third-a polyethylene layer | LLDPE E60% | | | | <- <- | | | | < | | | | <- | | | | | | | |
| | MDPE E 40% | | | | | | | | | | | | | | | | | | | |
| | 5 µm | | | | < <- | | | | <- | | | | <- | | | | | | | |
| First adhesive resin layer | Adhesi ive resin | | | | <- <- | | | | <- | | | | <- | | | | | | | |
| | 2.5 µm | | | | <- <- | | | | <- | | | | <- | | | | | | | |
| First surface resin layer | PA6/66 | | | | PA6 | | | | PA6 50% | | | | MXD6 | | | | | | | |
| | | | | | | | | | MXD6 50% | | | | | | | | | | | |
| | 2 µm | | | | <- <- | | | | <- | | | | <- | | | | | | | |
| First vapor deposition film | | AL | Alumina | Silica | | AL | Alumina | Silica | | AL | Alumina | Silica | | AL | Alumina | Silica | | AL | Alumina | Silica |
| First barrier coating layer | | | Yes | Yes | | | Yes | Yes | | | Yes | Yes | | | Yes | Yes | | | Yes | Yes |
| Physical characteristics of the stretched substrate or barrier substrate | | | | | | | | | | | | | | | | | | | | |
| Oxygen transmission rate | E | A | B | B | E | A | B | B | D | A | B | B | D | A | B | B | G | F | C | C |
| Water vapor transmission rate | D | A | C | C | D | A | C | C | C | A | B | B | C | A | B | B | E | C | E | D |
| Vapor deposition film /surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more |
| Vapor deposition film /polyethylene layer peel strength (N/15 mm) | | | | | | | | | | | | | | | | | | 2.5 | 3.0 | 3.0 |

**Table 6**

| | Example 5E | | | | Example 6E | | | | Example 7E | | | | Example 8E | | | | Comparative example 1 | | | |
|---|---|---|---|---|---|---|---|---|---|---|---|---|---|---|---|---|---|---|---|---|
| Structure of the stretched substrate or barrier substrate | | | | | | | | | | | | | | | | | | | | |
| Barrier coating layer | | | Yes | Yes | | | Yes | Yes | | | Yes | Yes | | | Yes | Yes | | | Yes | Yes |
| Vapor deposition film | | AL | Alumina | Silica | | AL | Alumina | Silica | | AL | Alumina | Silica | | AL | Alumina | Silica | | AL | Alumina | Silica |
| Second surface resin layer | PA6/66 | | | | PA6 | | | | PA6 50% | | | | MXD6 | | | | | | | |
| | | | | | | | | | MXD6 50% | | | | | | | | | | | |
| | 2.5 µm | | | | <- | | | | <- | | | | <- | | | | | | | |
| Adhesive resin layer | Adhesive resin | | | | <- | | | | <- | | | | < - | | | | | | | |
| | 25 µm | | | | <- | | | | <- | | | | < - | | | | Polyethylene MDPE 25 µm | | | |
| Second polyethylene layer | LLD PE | | | | <- | | | | <- | | | | <- | | | | | | | |
| | 12 µm | | | | <- | | | | <- | | | | <- | | | | | | | |
| First polyethylene layer | LLDPE 60% | | | | <- | | | | <- | | | | <- | | | | | | | |
| | MDPE 40% | | | | | | | | | | | | | | | | | | | |
| | 4µm | | | | <- | | | | <- | | | | <- | | | | | | | |
| First surface resin layer | LLDPE 70% | | | | <- | | | | <- | | | | <- | | | | | | | |
| | MDPE 30% | | | | | | | | | | | | | | | | | | | |
| | 4µm | | | | <- | | | | <- | | | | <- | | | | | | | |
| Physical characteristics of the stretched substrate or barrier substrate | | | | | | | | | | | | | | | | | | | | |
| Oxygen transmission rate | E | B | C | C | E | B | C | C | E | B | C | C | D | A | B | B | G | G | D | D |
| Water vapor transmission rate | D | B | C | C | D | B | C | C | C | B | C | C | C | B | C | C | E | C | E | D |
| Vapor deposition film /surface resin layer peel strength (N/15 mm) | | 4.0 or more | 4.0 or more | 4.0 or more | | 4.0 or more | 4.0 or more | 4.0 or more | | 4.0 or more | 4.0 or more | 4.0 or more | | 4.0 or more | 4.0 or more | 4.0 or more | | | | |
| Vapor deposition film /polyethylene layer peel strength (N/15 mm) | | | | | | | | | | | | | | | | | | 2.5 | 3.0 | 3.0 |

### [Table 7]

**Table 7**

| | Example 1F | | | | Comparative example 1 | | | |
|---|---|---|---|---|---|---|---|---|
| Structure of the stretched substrate or barrier substrate | | | | | | | | |
| Second barrier coating layer | | | Yes | Yes | | | Yes | Yes |
| Second vapor deposition film | | AL | Alumina | Silica | | AL | Alumina | Silica |
| Second surface resin layer | LLDPE 90% | | | | | | | |
| | MAH-LLDPE 10% | | | | | | | |
| | 3 µm | | | | | | | |
| Third polyethylene layer | LLDPE 60% | | | | | | | |
| | MDPE 40% | | | | | | | |
| | 4µm | | | | Polyethylene MDPE 25 µm | | | |
| Second polyethylene layer | LLDPE | | | | | | | |
| | 11 µm | | | | | | | |
| First polyethylene layer | LLDPE 60% | | | | | | | |
| | MDPE 40% | | | | | | | |
| | 4µm | | | | | | | |
| First surface resin layer | LLDPE 90% | | | | | | | |
| | MAH-LLDPE 10% | | | | | | | |
| | 3 µm | | | | | | | |
| First vapor deposition film | | AL | Alumina | Silica | | AL | Alumina | Silica |
| First barrier coating layer | | | Yes | Yes | | | Yes | Yes |
| Physical characteristics of the stretched substrate or barrier substrate | | | | | | | | |
| Oxygen transmission rate | G | D | B | B | G | F | C | C |
| Water vapor transmission rate | E | B | D | C | E | C | E | D |
| Vapor deposition film /surface resin layer peel strength (N/15 mm) | | 4.0 or more | 4.0 or more | 4.0 or more | | | | |
| Vapor deposition film /polyethylene layer peel strength (N/15 mm) | | | | | | 2.5 | 3.0 | 3.0 |

### [Table 8]

**Table 8**

| | Example 2F | | | |
|---|---|---|---|---|
| Structure of the barrier substrate | | | | |
| Second barrier coating layer | | | Yes | Yes |
| Second vapor deposition film | | AL | Alumina | Silica |
| Second surface resin layer | LLDPE 90% | | | |
| | MAH-LLDPE 10% | | | |
| | 2 µm | | | |
| Forth-b polyethylene layer | LLDPE 60% | | | |
| | MDPE 40% | | | |
| | 2.5 µm | | | |
| Third-b polyethylene layer | LLDPE 60% | | | |
| | MDPE 40% | | | |
| | 5 µm | | | |
| Second-b polyethylene layer | LLD PE | | | |
| | 1.5 µm | | | |
| First-b polyethylene layer | POP1 80% | | | |
| | POP2 20% | | | |
| | 1.5 µm | | | |
| First-a polyethylene layer | POP1 80% | | | |
| | POP2 20% | | | |
| | 1.5 µm | | | |
| Second-a polyethylene layer | LL DPE | | | |
| | 1.5 µm | | | |
| Third-a polyethylene layer | LLDPE 60% | | | |
| | MDPE40% | | | |
| | 5 µm | | | |
| Forth-a polyethylene layer | LLDPE 60% | | | |
| | MDPE 40% | | | |
| | 2.5 µm | | | |
| First surface resin layer | LLDPE 90% | | | |
| | MAH-LLDPE 10% | | | |
| | 2 µm | | | |
| First vapor deposition film | | AL | Alumina | Silica |
| First barrier coating layer | | | Yes | Yes |
| Physical characteristics of the stretched substrate or barrier substrate | | | | |
| Oxygen transmission rate | G | D | B | B |
| Water vapor transmission rate | E | B | D | C |
| Vapor deposition film /surface resin layer peel strength (N/15 mm) | | 4.0 or more | 4.0 or more | 4.0 or more |

### [Table 9]

**Table 9**

| | Example 3F | | | | Comparative example 1 | | | |
|---|---|---|---|---|---|---|---|---|
| Structure of the stretched substrate or barrier substrate | | | | | | | | |
| Second barrier coating layer | | | Yes | Yes | | | Yes | Yes |
| Second vapor deposition film | | AL | Alumina | Silica | | AL | Alumina | Silica |
| Second surface resin layer | EVOH | | | | | | | |
| | 2.5 µm | | | | | | | |
| Adhesive resin layer | Adhesive resin | | | | | | | |
| | 2.5 µm | | | | | | | |
| Second polyethylene layer | LLDPE | | | | Polyethylene MDPE 25 µm | | | |
| | 12 µm | | | | | | | |
| First polyethylene layer | LLDPE 60% | | | | | | | |
| | MDPE 40% | | | | | | | |
| | 5 µm | | | | | | | |
| First surface resine layer | LLDPE 90% | | | | | | | |
| | MAH-LLDPE 10% | | | | | | | |
| | 3 µm | | | | | | | |
| First vapor deposition film | | AL | Alumina | Silica | | AL | Alumina | Silica |
| First barrier coating layer | | | Yes | Yes | | | Yes | Yes |

| Physical characteristics of the stretched substrate or barrier substrate | | | | | | | | |
|---|---|---|---|---|---|---|---|---|
| Oxygen transmission rate | D | A | B | B | G | F | C | C |
| Water vapor transmission rate | D | A | C | C | E | C | E | D |
| First vapor deposition film /First surface resin layer peel strength (N/15 mm) | | 4.0 or more | 4.0 or more | 4.0 or more | | | | |
| Second vapor deposition film /second surface resin layer peel strength (N/15 mm) | | 4.0 or more | 4.0 or more | 4.0 or more | | | | |
| Vapor deposition film /polyethylene layer peel strength (N/15 mm) | | | | | | 2.5 | 3.0 | 3.0 |

### [Table 10]

**Table 10**

| | Example 1G | | | | Comparative example 1 | | | |
|---|---|---|---|---|---|---|---|---|
| Structure of the stretched substrate or barrier substrate | | | | | | | | |
| Barrier coating layer | | | Yes | Yes | | | Yes | Yes |
| Vapor deposition film | | AL | Alumina | Silica | | AL | Alumina | Silica |
| Second surface resin layer | LLDPE 90% | | | | | | | |
| | MAH-LLDPE 10% | | | | | | | |
| | 3 µm | | | | | | | |
| Third polyethylene layer | LLDPE 60% | | | | | | | |
| | MDPE 40% | | | | | | | |
| | 4 µm | | | | | | | |
| Second polyethylene layer | LLDPE | | | | Polyethylene MDPE 25 µm | | | |
| | 11 µm | | | | | | | |
| First polyethylene layer | LLDPE 60% | | | | | | | |
| | MDPE 40% | | | | | | | |
| | 4 µm | | | | | | | |
| First surface resin layer | MDPE 70% | | | | | | | |
| | LLDPE 30% | | | | | | | |
| | 3 µm | | | | | | | |
| Physical characteristics of the stretched substrate or barrier substrate | | | | | | | | |
| Oxygen transmission rate | F | D | A | A | F | F | B | B |
| Water vapor transmission rate | D | A | D | C | D | A | D | C |
| Vapor deposition film /surface resin layer peel strength (N/15 mm) | | 4.0 or more | 4.0 or more | 4.0 or more | | | | |
| Vapor deposition film /polyethylene layer peel strength (N/15 mm) | | | | | | 2.5 | 3.0 | 3.0 |

### [Variations of Examples]

A stretched substrate and barrier substrates were produced in the same manner as in Examples 1E to 4E, except that approximately 20% by mass of a compatibilizer (RETAIN 3000) was blended in the second-a and second-b polyethylene layers. The results of the gas barrier properties test and the T-peel test in this example were similar to the results in the examples with the corresponding layer configuration (Examples 1E to 4E).

A stretched substrate and barrier substrates were produced in the same manner as in Examples 1E to 4E, except that the third-a and third-b polyethylene layers were changed to layers formed from LLDPE (Exceed XP8656ML). The results of the gas barrier properties test and the T-peel test in this example were similar to the results in the examples with the corresponding layer configuration (Examples 1E to 4E).

A stretched substrate and barrier substrates were produced in the same manner as in Examples 5E to 8E, except that the thickness of the second surface resin layer was changed to 5 µm, the thickness of the second polyethylene layer was changed to 10.5 µm, the thickness of the first polyethylene layer was changed to 3.5 µm, and the thickness of the first surface resin layer was changed to 3.5 µm. The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that approximately 20% by mass of a compatibilizer (RETAIN 3000) was blended in the second polyethylene layer. The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that approximately 20% by mass of a compatibilizer (RETAIN 3000) was blended in the second polyethylene layer, and that the thickness of the second surface resin layer was changed to 5 µm, the thickness of the second polyethylene layer was changed to 10.5 µm, the thickness of the first polyethylene layer was changed to 3.5 µm, and the thickness of the first surface resin layer was changed to 3.5 µm. The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that the first surface resin layer was changed to a layer formed from blended polyethylene (D), a blend of 70 parts of MDPE (Enable 4002MC) and 30 parts of HDPE (ELITE 5960G). The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that the first surface resin layer was changed to a layer formed from blended polyethylene (D), and that the thickness of the second surface resin layer was changed to 5 µm, the thickness of the second polyethylene layer was changed to 10.5 µm, the thickness of the first polyethylene layer was changed to 3.5 µm, and the thickness of the first surface resin layer was changed to 3.5 µm. The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that the first surface resin layer was changed to a layer formed from blended polyethylene (D), and that approximately 20% by mass of a compatibilizer (RETAIN 3000) was blended in the second polyethylene layer. The results of the gas barrier properties test and the T-peel test in this example were similar to the results in the examples with the corresponding layer configuration (Examples 5E to 8E).

A stretched substrate and barrier substrates were produced in the same manner as in Examples 5E to 8E, except that the first surface resin layer was changed to a layer formed from blended polyethylene (D), that approximately 20% by mass of a compatibilizer (RETAIN 3000) was blended in the second polyethylene layer, and that the thickness of the second surface resin layer was changed to 5 µm, the thickness of the second polyethylene layer was changed to 10.5 µm, the thickness of the first polyethylene layer was changed to 3.5 µm, and the thickness of the first surface resin layer was changed to 3.5 µm. The results of the gas barrier properties test and the T-peel test in this example were similar to the results in the examples with the corresponding layer configuration (Examples 5E to 8E).

A stretched substrate and barrier substrates were produced in the same manner as in Example 3F, except that approximately 20% by mass of a compatibilizer (RETAIN 3000) was blended in the second polyethylene layer. The results of the gas barrier properties test and the T-peel test in this example were similar to the results in the example with the corresponding layer configuration (Example 3F).

### Reference Signs List

1 barrier substrate or stretched substrate
2 laminate
10 polyethylene layer
11 first polyethylene layer
12 second polyethylene layer
13 third polyethylene layer
20 barrier resin layer or first surface resin layer
22 second surface resin layer
30 adhesive resin layer, first adhesive resin layer
32 second adhesive resin layer
40 vapor deposition film, first vapor deposition film
42 second vapor deposition film
60 bonding layer, such as an adhesive agent layer or extruded resin layer; a first bonding layer
62 second bonding layer
70 polyethylene stretched substrate
80 heat-sealing layer, first heat-sealing layer
82 second heat-sealing layer
120 tube container
121 tube container body
122 head
123 trunk
124 shoulder
125 outlet
126 cap
127 thread
128 fused portion
129 bottom seal portion

As those skilled in the art would understand, the stretched substrate and other subject matters according to the present disclosure are not limited by the descriptions in the above Examples. The above Examples and description are merely for illustrating the principles of the present disclosure; various modifications or improvements can be made without departing from the gist and scope of the present disclosure, and such modifications or improvements are all included within the scope of the present disclosure claimed for protection. The scope that the present disclosure claims for protection, furthermore, includes not only the descriptions in the claims but also equivalents thereof.

## Claims

1. A stretched substrate comprising at least:
at least one polyethylene layer; and
at least one barrier resin layer, wherein:
the polyethylene layer contains polyethylene as a main component thereof; and
the barrier resin layer contains at least one gas barrier resin as a main component thereof.

2. The stretched substrate according to claim 1, wherein the barrier resin layer contains, as the gas barrier resin, at least one selected from an ethylene-vinyl alcohol copolymer, polyvinyl alcohol, and a polyamide.

3. The stretched substrate according to claim 1 or 2, wherein:
the stretched substrate has a first surface and a second surface opposite the first surface;
the stretched substrate includes:
a first barrier resin layer as the barrier resin layer, the first barrier resin layer constituting the first surface;
the polyethylene layer; and
a second barrier resin layer as the barrier resin layer, the second barrier resin layer constituting the second surface
in this order.

4. The stretched substrate according to claim 3, wherein the stretched substrate includes a first adhesive resin layer, a third-a polyethylene layer, a second-a polyethylene layer, a first-a polyethylene layer, a first-b polyethylene layer, a second-b polyethylene layer, a third-b polyethylene layer, and a second adhesive resin layer in this order between the first barrier resin layer and the second barrier resin layer.

5. The stretched substrate according to claim 4, wherein the third-a polyethylene layer contains linear low-density polyethylene, the second-a polyethylene layer contains linear low-density polyethylene as a main component thereof, the first-a polyethylene layer contains a polyethylene plastomer as a main component thereof, the first-b polyethylene layer contains a polyethylene plastomer as a main component thereof, the second-b polyethylene layer contains linear low-density polyethylene as a main component thereof, and the third-b polyethylene layer contains linear low-density polyethylene.

6. The stretched substrate according to claim 5, wherein melting points of the polyethylene plastomers are 115°C or below.

7. The stretched substrate according to claim 1 or 2, wherein the stretched substrate includes two or more of the polyethylene layers and the barrier resin layer in this order, and a density of the polyethylene layer positioned farthest from the barrier resin layer is higher than a density of the polyethylene layer positioned closest to the barrier resin layer.

8. The stretched substrate according to any one of claims 1 to 7, wherein the stretched substrate has undergone uniaxial orientation treatment.

9. A stretched substrate comprising at least:
a first surface resin layer containing polyethylene and at least one adhesive resin;
at least one polyethylene layer containing polyethylene as a main component thereof; and
a second surface resin layer containing polyethylene and at least one adhesive resin in this order, wherein:
the stretched substrate has undergone uniaxial orientation treatment.

10. The stretched substrate according to claim 9, wherein, in the first surface resin layer and the second surface resin layer, each independently, a percentage of the polyethylene is 60% by mass or more and 95% by mass or less, and a percentage of the adhesive resin is 5% by mass or more and 40% by mass or less.

11. A stretched substrate comprising at least:
a first surface resin layer containing polyethylene and at least one adhesive resin;
at least one polyethylene layer containing polyethylene as a main component thereof; and
a second surface resin layer containing at least one gas barrier resin as a main component thereof in this order, wherein:
the stretched substrate has undergone uniaxial orientation treatment.

12. The stretched substrate according to claim 11, wherein a percentage of the polyethylene in the first surface resin layer is 60% by mass or more and 95% by mass or less, and a percentage of the adhesive resin in the first surface resin layer is 5% by mass or more and 40% by mass or less.

13. A stretched substrate comprising at least:
a first surface resin layer containing a polyamide as a main component thereof;
at least one polyethylene layer containing polyethylene as a main component thereof; and
a second surface resin layer containing a polyamide as a main component thereof in this order, wherein:
the stretched substrate has undergone uniaxial orientation treatment.

14. A stretched substrate comprising at least:
a first surface resin layer containing polyethylene as a main component thereof;
at least one polyethylene layer containing polyethylene as a main component thereof; and
a second surface resin layer containing a polyamide as a main component thereof or containing polyethylene and an adhesive resin
in this order, wherein:
the stretched substrate has undergone uniaxial orientation treatment.

15. The stretched substrate according to claim 14, wherein, in the second surface resin layer, a percentage of the polyethylene is 60% by mass or more and 95% by mass or less, and a percentage of the adhesive resin is 5% by mass or more and 40% by mass or less.

16. The stretched substrate according to any one of claims 1 to 3 and 7 to 15, wherein the stretched substrate is a stretched coextruded resin film.

17. A printed substrate comprising at least:
the stretched substrate according to any one of claims 1 to 16; and
at least one printed layer provided on one surface or both surfaces of the stretched substrate.

18. A barrier substrate comprising at least:
the stretched substrate according to any one of claims 1 to 16; and
at least one vapor deposition film provided on one surface or both surfaces of the stretched substrate.

19. The barrier substrate according to claim 18, wherein:
the stretched substrate is the stretched substrate according to claim 3; and
the vapor deposition film is provided on a surface of at least one selected from the first barrier resin layer and the second barrier resin layer in the stretched substrate.

20. The barrier substrate according to claim 19, wherein:
the barrier substrate includes a first vapor deposition film provided on the surface of the first barrier resin layer in the stretched substrate and a second vapor deposition film provided on the surface of the second barrier resin layer in the stretched substrate; or
the vapor deposition film is provided on the surface of the second barrier resin layer in the stretched substrate and is not provided on the surface of the first barrier resin layer in the stretched substrate.

21. The barrier substrate according to claim 18, wherein:
the stretched substrate is the stretched substrate according to any one of claims 9 to 13, and the barrier substrate includes at least one vapor deposition film provided on a surface of at least one selected from the first surface resin layer and the second surface resin layer in the stretched substrate; or
the stretched substrate is the stretched substrate according to claim 14 or 15, and the barrier substrate includes a vapor deposition film provided on a surface of the second surface resin layer in the stretched substrate.

22. The barrier substrate according to claim 21, wherein the barrier substrate includes a first vapor deposition film provided on the surface of the first surface resin layer in the stretched substrate and a second vapor deposition film provided on the surface of the second surface resin layer in the stretched substrate.

23. The barrier substrate according to any one of 18 to 22, wherein the vapor deposition film is at least one metal deposition film or inorganic oxide deposition film.

24. A laminate comprising at least:
the stretched substrate according to any one of claims 1 to 16, the printed substrate according to claim 17, or the barrier substrate according to any one of claims 18 to 23; and
at least one heat-sealing layer containing polyethylene as a main component thereof.

25. The laminate according to claim 24, wherein:
the laminate includes at least:
a first heat-sealing layer;
the stretched substrate, the printed substrate, or the barrier substrate; and
a second heat-sealing layer
in this order; and
the first heat-sealing layer contains polyethylene as a main component thereof, and the second heat-sealing layer contains polyethylene as a main component thereof.

26. The laminate according to claim 24, wherein:
the laminate includes at least:
a first heat-sealing layer;
a first adhesive agent layer or first extruded resin layer;
the stretched substrate, the printed substrate, or the barrier substrate;
a second adhesive agent layer or second extruded resin layer; and
a second heat-sealing layer
in this order; and
the first heat-sealing layer contains polyethylene as a main component thereof, and the second heat-sealing layer contains polyethylene as a main component thereof.

27. The laminate according to claim 24, wherein:
the laminate includes at least:
a polyethylene stretched substrate containing polyethylene as a main component thereof;
the stretched substrate, the printed substrate, or the barrier substrate; and
the heat-sealing layer.

28. The laminate according to any one of claims 24 to 27, wherein a percentage of polyethylene across the entire laminate is 80% by mass or more.

29. A packaging container comprising the laminate according to any one of claims 24 to 28.

30. The packaging container according to claim 29, wherein the packaging container is a packaging bag.

31. A tube container body comprising a head and a trunk, wherein:
the head includes a shoulder connected to one end of the trunk and an outlet connected to the shoulder, and the trunk is composed of the laminate according to claim 25 or 26.

32. A tube container comprising:
the tube container body according to claim 31; and
a cap.
